# EUROPEAN PATENT APPLICATION

(11) **EP 4 823 176 A1**
(43) Date of publication of application: **14.10.2026**
(21) Application number: 24916664.6
(22) Date of filing: 13.12.2024
(51) Int. Cl.: H04W 36/00

(54) **SERVICE DATA PROCESSING METHOD AND COMMUNICATION APPARATUS**

(30) Priority: 11.01.2024 CN 202410045861
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Körber, Martin Hans
(86) International application number: PCT/CN2024/139261
(87) International publication number: WO 2025/148617

(57) **Abstract**

This application provides a method for processing service data and a communications apparatus, where the method is applied to a mobile communications device including a first UE and a second UE, and the method comprises: establishing, by the mobile communications device, a first session of the first UE; transmitting, by the mobile communications device, service data corresponding to a first IP address through the first session of the first UE; sending, by the mobile communications device, a first message, where the second session establishment request is used to request to establish a second session of the second UE, and the first message is used to request to hand over the service data of the first session of the first UE to the second session of the second UE for transmission; and transmitting, by the mobile communications device, the service data corresponding to the first IP address through the second session of the second UE. Based on the method, the first session of the first UE and the second session of the second UE share the same IP address, and an IP address used for service data before and after the handover between UEs remains unchanged, thereby ensuring service continuity.

## Description

This application claims priority to Chinese Patent Application No. 202410045861.5, filed with the China National Intellectual Property Administration on January 11, 2024, and entitled "Method for Processing Service Data and Communication Apparatus," which is hereby incorporated by reference in its entirety.

### Technical Field

This application relates to the field of communication technologies, and in particular, to a method for processing service data and a communication device.

### Background

User equipment (user equipment, UE), a radio access network (radio access network, RAN), a user plane function (user plane function, UPF), and a data network (data network, DN) are generally referred to as data plane network functions and entities. A user's data traffic may be transmitted through a protocol data unit (protocol data unit, PDU) session established between the UE and the DN, and the transmission passes through the RAN and the UPF, which are two network function entities.

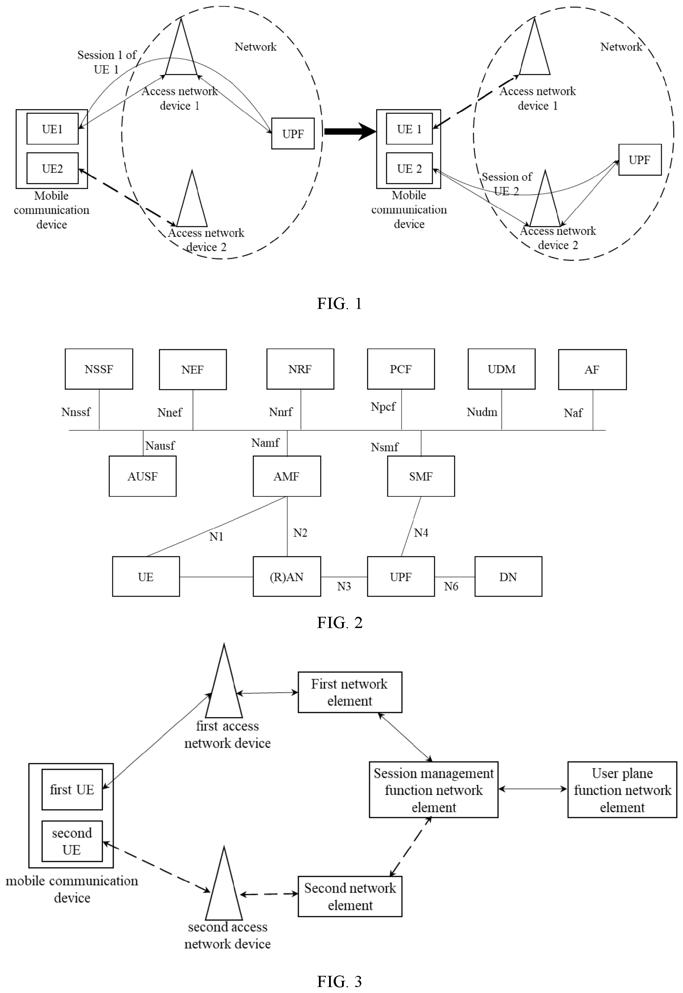

In a communications system, there may be a case where a mobile communications device may include multiple UEs. For example, a mobile communications device may include UE1 and UE2. UE1 and UE2 may access the same or different networks through different RANs. For example, as shown in FIG. 1, UE1 accesses a network through an access network device 1, and UE2 accesses a network through an access network device 2. UE1 may establish session 1 passing through the UPF through the access network device 1, and UE1 transmits service data between the UE1 and the DN through the session 1. If the signal between UE1 and the access network device 1 deteriorates, the mobile communications device may hand over the service data of session 1 from UE1 to UE2 for transmission. How to implement a transmission handover of service data between different UEs in the mobile communications device while ensuring continuity of the service data is a technical problem that urgently needs to be resolved at present.

### SUMMARY

This application provides a method for processing service data and a communications apparatus, so that service data can be transmitted between different UEs in a mobile communications device, and continuity of the service data can be ensured.

According to a first aspect, this application provides a method for processing service data, applied to a mobile communications device, where the mobile communications device includes first user equipment UE and second UE, and the method comprises:
establishing, by the mobile communications device, a first session of the first UE, where the first session is associated with a first internet protocol IP address; transmitting, by the mobile communications device, service data corresponding to the first IP address through the first session of the first UE; sending, by the mobile communications device, a first message, where the first message carries information about the first session of the first UE, an identifier of a second session of the second UE, and a second session establishment request, where the second session establishment request is used to request to establish the second session of the second UE, the first message is used to request to switch service data of the first session of the first UE to the second session of the second UE for transmission; and transmitting, by the mobile communications device, the service data corresponding to the first IP address through the second session of the second UE.

It can be seen that, based on the method described in the first aspect, when establishing the second session of the second UE, the information about the first session of the first UE, the identifier of the second session of the second UE, and the second session establishment request used to establish the second session of the second UE may be sent to the network side. In this way, the network side can share the first IP address associated with the first session of the first UE for use by the second session of the second UE, that is, the first session of the first UE and the second session of the second UE may share the same IP address. By enabling the first session of the first UE and the second session of the second UE to share the same IP address, the IP address used by the service data before and after the handover between UEs in the mobile communication device remains unchanged, thereby maintaining service continuity.

In a possible embodiment, a specific implementation manner in which the mobile communication device establishes the first session of the first UE is: the mobile communication device selects the first UE according to the direction policy information, and establishes the first session of the first UE;

The direction policy information comprises: the first UE is a preferentially selected UE, or a UE priority list (a priority of the first UE is higher than that of the second UE); or

The direction policy information comprises: the first network is a preferentially selected network, or a network priority list (a priority of the first network is higher than that of the second network), where the first network is a network on which the first UE camps, and the second network is a network on which the second UE camps; or

The direction policy information comprises: the first RAT is a preferentially selected RAT, or a RAT priority list (a priority of the first RAT is higher than that of the second RAT), where the first RAT is a RAT supported by the first access network device, the second RAT is a RAT supported by the second access network device, the first access network device corresponds to the first UE, and the second access network device corresponds to the second UE; or

The direction policy information comprises: the second UE is a preferentially selected UE, or a UE priority list (a priority of the second UE is higher than that of the first UE). Correspondingly, the direction policy information indicates that the second UE is preferentially selected to transmit the service data of the mobile communications device; or,

The steering policy information comprises: the second network is a network preferentially selected, or a network priority list (the second network has a higher priority than the first network), where the first network is a network on which the first UE camps, and the second network is a network on which the second UE camps; or

The steering policy information comprises: the second RAT is a preferentially selected RAT, or an RAT priority list (the second RAT has a higher priority than the first RAT), where the first RAT is an RAT supported by the first access network device, the second RAT is an RAT supported by the second access network device, the first access network device corresponds to the first UE, and the second access network device corresponds to the second UE.

For example, it is assumed that the steering policy information comprises that the second UE is a preferentially selected UE, or a UE priority list (the second UE has a higher priority than the first UE), or the second network is a preferentially selected network, or a network priority list (the second network has a higher priority than the first network), or the second network is a preferentially selected network, or a network priority list (the second network has a higher priority than the first network). If the signal quality between the mobile communication device and the second access network device is poor, for example, the signal quality is lower than a specified signal threshold, the mobile communication device does not select the second UE. The mobile communication device selects the first UE based on the steering policy information and the signal quality between the mobile communication device and the first access network device, where the signal quality between the mobile communication device and the first access network device is good or higher than a specified signal threshold.

Based on this possible embodiment, it is possible to reasonably select a UE from multiple UEs in a mobile communication device to transmit service data. For example, the mobile communication device may have limited capabilities and cannot support multiple UEs simultaneously transmitting service data.

In a possible embodiment, a specific implementation manner in which the mobile communication device establishes the first session of the first UE is as follows: the mobile communication device sends an identifier of the first session of the first UE, a data network name (data network name, DNN), single network slice selection assistance information (single network slice selection assistance information, S-NSSAI), a first session establishment request, and first indication information, where the first session establishment request is used to request the establishment of the first session of the first UE, and the first indication information indicates that the service data of the first session of the first UE may be transmitted between different UEs.

Based on this possible embodiment, by sending the first indication information, it can facilitate the network side to select a session management network element that supports the transmission of service data between different UEs for session management, thereby facilitating subsequent processing.

In a possible embodiment, the mobile communication device may further receive second indication information, where the second indication information indicates that service data of the first session is allowed to be transmitted between different UEs, or indicates that service data of the mobile communication device is allowed to be transmitted between different UEs;

A specific implementation manner in which the mobile communication device sends the first message is that the mobile communication device sends the first message based on the second indication information.

Based on this possible embodiment, the mobile communication device can accurately determine whether service data of the first session can be transmitted between different UEs.

In a possible embodiment, a specific implementation manner in which the mobile communication device sends the first message is: when signal quality between the mobile communication device and the first access network device deteriorates, or when signal quality between the mobile communication device and the first access network device is lower than a first threshold, or when a quality of service (quality of service, QoS) requirement of the first session of the first UE is not met, the mobile communication device sends the first message, where the first access network device corresponds to the first UE. Optionally, the signal quality between the mobile communication device and the first access network device deteriorating may be that the signal quality between the mobile communication device and the first access network device decreases by a value greater than or equal to a first value.

Based on this possible embodiment, when the signal quality between the first UE and the first access network device deteriorates or is not good, or when a QoS requirement of a first session of the first UE is not met, the first UE can be promptly switched to the second UE for service data transmission, thereby ensuring the transmission quality of the service data.

In another possible embodiment, a specific implementation of sending the first message by the mobile communication device is as follows: when the signal quality between the mobile communication device and the first access network device deteriorates, or when the signal quality between the mobile communication device and the first access network device is lower than a first threshold, or when a quality of service QoS requirement of a first session of the first UE is not met, or when the signal quality between the mobile communication device and the second access network device is higher than a second threshold, the mobile communication device sends the first message, where the first access network device is corresponding to the first UE.

Based on this possible embodiment, when the signal quality between the first UE and the first access network device deteriorates or is not good, or when the QoS requirement of the first session of the first UE is not met, and when the signal quality between the second UE and the second access network device is good, the first UE can be promptly switched to the second UE for service data transmission, thereby ensuring the transmission quality of the service data.

In a possible embodiment, the information about the first session of the first UE includes one or more of the following: an identifier of the first session of the first UE, a DNN corresponding to the first session of the first UE, and an S-NSSAI corresponding to the first session of the first UE.

Based on this possible embodiment, the network side can accurately determine the first session of the first UE.

In a possible embodiment, the first message further includes a subscriber concealed identifier SUCI of the first UE or a subscription permanent identifier (subscription permanent identifier, SUPI) of the first UE.

Based on this possible embodiment, the network side can determine the SUPI of the first UE.

In a possible embodiment, the first message further includes a first handover indication, where the first handover indication is used to indicate to switch service data of the first session of the first UE to the second session of the second UE for transmission, or the first handover indication is used to indicate to switch service data of the first session of the UE associated with the second UE to the second session of the second UE for transmission.

According to a second aspect, this application provides a method for processing service data, where the method includes:
The second network element receives a first message, where the first message carries information about a first session of first user equipment UE, an identifier of a second session of second UE, and a second session establishment request, where the second session establishment request is used to request to establish the second session of the second UE, and the first message is used to request to hand over service data of the first session of the first UE to the second session of the second UE for transmission; and the second network element sends a second message to a session management network element based on the first message, where the second message carries a subscription permanent identifier SUPI of the first UE, an identifier of the first session, a SUPI of the second UE, an identifier of the second session, and the second session establishment request, where the second message is used to request to hand over service data of the first session of the first UE to the second session of the second UE for transmission, and the session management network element is a network element that manages the first session of the first UE.

It can be seen that, based on the method described in the second aspect, when establishing the second session of the second UE, the second network element may receive information about the first session of the first UE, an identifier of the second session of the second UE, and a second session establishment request for establishing the second session of the second UE, and send an identifier of the first session of the first UE, an identifier of the second session of the second UE, and the second session establishment request to the session management network element. In this way, the session management network element can share the first IP address associated with the first session of the first UE for use by the second session of the second UE, that is, the first session of the first UE and the second session of the second UE can share the same IP address. By enabling the first session of the first UE and the second session of the second UE to share the same IP address, the IP address used by the service data before and after the handover between UEs in the mobile communication device remains unchanged, thereby maintaining service continuity.

In a possible embodiment, the information of the first session of the first UE includes one or more of the following: an identifier of the first session of the first UE, a data network name DNN corresponding to the first session of the first UE, and single network slice selection assistance information S-NSSAI corresponding to the first session of the first UE.

Based on this possible embodiment, it is beneficial for the network side to accurately determine the first session of the first UE.

In a possible embodiment, the first message further includes the subscriber concealed identity (subscriber concealed identity, SUCI) of the first UE or the SUPI of the first UE.

Based on this possible embodiment, it is beneficial for the network side to determine the SUPI of the first UE.

In a possible embodiment, the information of the first session of the first UE is an identifier of the first session of the first UE; a specific implementation manner in which the second network element sends the second message to the session management network element based on the first message is: the second network element obtains the SUPI of the first UE and an identifier of the session management network element based on the device identification information and the identifier of the first session; where the device identification information is the SUPI of the second UE, or the first message further includes the SUCI of the first UE, and the device identification information is the SUCI of the first UE; and the second network element sends the second message to the session management network element.

Based on this possible embodiment, the second network element can accurately obtain the SUPI of the first UE and the identifier of the session management network element used to manage the first session of the first UE, so as to send the second message to the session management network element.

In a possible embodiment, a specific implementation manner in which the second network element obtains the SUPI of the first UE and the identifier of the session management network element based on the device identification information and the identifier of the first session is as follows: the second network element sends the device identification information and the identifier of the first session to a unified data management network element; and the second network element receives the SUPI of the first UE and the identifier of the session management network element sent by the unified data management network element.

Based on this possible embodiment, the second network element can accurately obtain the SUPI of the first UE and the identifier of the session management network element used to manage the first session of the first UE.

In a possible embodiment, a specific implementation manner in which the second network element obtains the SUPI of the first UE and the identifier of the session management network element based on the device identification information and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the identifier of the first session to the unified data management network element; and the second network element receives the identifier of the session management network element sent by the unified data management network element.

Based on this possible embodiment, the second network element can accurately obtain the SUPI of the first UE and the identifier of the session management network element used to manage the first session of the first UE.

In a possible embodiment, the information of the first session of the first UE includes the DNN corresponding to the first session of the first UE and/or the S-NSSAI corresponding to the first session of the first UE; a specific implementation manner in which the second network element sends the second message to the session management network element based on the first message is: the second network element obtains the SUPI of the first UE, the identifier of the session management network element, and the identifier of the first session based on the device identification information and the information of the first session of the first UE; where the device identification information is the SUPI of the second UE, or the first message further includes the SUCI of the first UE, and the device identification information is the SUCI of the first UE; and the second network element sends the second message to the session management network element.

Based on this possible embodiment, the second network element can accurately obtain the SUPI of the first UE, the identifier of the session management network element used to manage the first session of the first UE, and the identifier of the first session, so as to send a second message to the session management network element.

In a possible embodiment, a specific implementation manner in which the second network element obtains the SUPI of the first UE, the identifier of the session management network element, and the identifier of the first session based on the device identification information and the information about the first session of the first UE is as follows: the second network element sends the device identification information and the information about the first session of the first UE to a unified data management network element; and the second network element receives the SUPI of the first UE, the identifier of the session management network element, and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, a specific implementation manner in which the second network element obtains the SUPI of the first UE, the identifier of the session management network element, and the identifier of the first session based on the device identification information and the information about the first session of the first UE is as follows: the second network element sends the device identification information to an authentication server function network element or a unified data management network element; the second network element receives the SUPI of the first UE sent by the authentication server function network element or the unified data management network element; the second network element sends the SUPI of the first UE and the information about the first session of the first UE to the unified data management network element; and the second network element receives the identifier of the session management network element and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, the first message and the second message further include a first handover indication, where the first handover indication is used to indicate that the service data of the first session of the first UE is to be handed over to the second session of the second UE for transmission, or the first handover indication is used to indicate that the service data of the first session of the UE associated with the second UE is to be handed over to the second session of the second UE for transmission.

According to a third aspect, this application provides a method for processing service data, where the method includes:
The first network element receives an identifier of a first session of first user equipment UE, a data network name DNN, single network slice selection assistance information S-NSSAI, a first session establishment request, and first indication information, where the first session establishment request is used to request to establish the first session of the first UE, and the first indication information indicates that service data of the first session of the first UE may be transmitted between different UEs; the first network element selects a session management network element based on the first indication information, where the session management network element supports transmission of the service data between different UEs; and the first network element sends the first user permanent identifier SUPI of the first UE, the identifier of the first session, the DNN, the S-NSSAI, and the first session establishment request to the session management network element.

Based on the method described in the third aspect, by receiving the first indication information, the first network element can be facilitated to select a session management network element that supports service data transmission between different UEs for session management, thereby facilitating subsequent processing.

In a possible embodiment, a specific implementation manner in which the first network element sends the SUPI of the first UE, the identifier of the first session, the DNN, the S-NSSAI, and the first session establishment request to the session management network element is as follows: the first network element sends the SUPI of the first UE, the identifier of the first session, the DNN, the S-NSSAI, the first session establishment request, and the first indication information to the session management network element.

The first network element may further receive second indication information sent by the session management network element, where the second indication information indicates that the service data corresponding to the first session of the first UE supports transmission between different UEs; and may further send the second indication information from the first network element.

Based on this possible embodiment, it is beneficial for the session management network element to provide feedback to the mobile communication device on whether the service data of the first session of the first UE supports transmission between different UEs.

According to a fourth aspect, this application provides a method for processing service data, where the method includes:
The session management network element receives a second message, where the second message carries a user permanent identity SUPI of first user equipment UE, an identifier of a first session of the first UE, a SUPI of second UE, an identifier of a second session of the second UE, and a second session establishment request, where the second session establishment request is used to request to establish the second session of the second UE, the second message is used to request to hand over service data of the first session of the first UE to the second session of the second UE for transmission, and the session management network element is a network element that manages the first session of the first UE; in response to the second message, the session management network element sends a first N4 session identifier and address information of the second access network device to a user plane function network element, where the first N4 session identifier is an N4 session identifier associated with the identifier of the first session of the first UE, and the first N4 session identifier and the address information of the second access network device are used to indicate that service data carried on the first IP address corresponding to the first N4 session identifier is sent to the second access network device, where the second access network device is configured to carry the second session of the second UE, and the first IP address is an IP address associated with the identifier of the first session of the first UE.

It is evident that, based on the method described in the fourth aspect, when establishing the second session of the second UE, the session management network element may receive the identifier of the first session of the first UE, the identifier of the second session of the second UE, and the second session establishment request used to establish the second session of the second UE. In this way, the session management network element can share the first IP address associated with the first session of the first UE for use by the second session of the second UE, thereby enabling the first session of the first UE and the second session of the second UE to share the same IP address. By allowing the first session of the first UE and the second session of the second UE to share the same IP address, the IP address used by the service data remains unchanged before and after the UE handover within the mobile communication device, thereby maintaining service continuity.

In a possible embodiment, the session management network element may further store an association relationship between the identifier of the first session of the first UE and the first IP address; and in response to the second message, store an association relationship between the identifier of the second session of the second UE and the first IP address, and/or remove the association relationship between the identifier of the first session of the first UE and the first IP address. Storing the association relationship between the identifier of the second session of the second UE and the first IP address can facilitate subsequent management of the second session. Removing the association relationship between the identifier of the first session of the first UE and the first IP address helps save storage space.

In a possible embodiment, the session management network element may further store an association relationship between the identifier of the first session of the first UE and the identifier of the first N4 session; and in response to the second message, store an association relationship between the identifier of the second session of the second UE and the identifier of the first N4 session, and/or remove the association relationship between the identifier of the first session of the first UE and the identifier of the first N4 session. Storing the association relationship between the identifier of the second session of the second UE and the identifier of the first N4 session facilitates subsequent management of the second session. Removing the association relationship between the identifier of the first session of the first UE and the identifier of the first N4 session helps save storage space.

In a possible embodiment, the session management network element may further send the address information of the user plane function network element to the second access network device, and/or trigger the release of the first session by the session management network element. In this way, the second access network device can send the service data of the second session of the second UE to the user plane function network element.

In a possible embodiment, the second message further includes a first handover indication, where the first handover indication is used to indicate that the service data of the first session of the first UE is to be handed over to the second session of the second UE for transmission, or the first handover indication is used to indicate that the service data of the first session of the UE associated with the second UE is to be handed over to the second session of the second UE for transmission.

In a possible embodiment, before receiving the second message, the session management network element may further receive the SUPI of the first UE, an identifier of the first session, a data network name DNN, single network slice selection assistance information S-NSSAI, a first session establishment request, and first indication information from the first UE, where the first session establishment request is used to request to establish the first session of the first UE, and the first indication information indicates that the service data of the first session of the first UE may be transmitted between different UEs; the session management network element determines that the service data corresponding to the first session of the first UE supports transmission between different UEs; the session management network element sends second indication information, where the second indication information indicates that the service data corresponding to the first session of the first UE supports transmission between different UEs.

Based on this possible embodiment, the session management network element may feed back to the mobile communication device whether the service data of the first session of the first UE supports transmission between different UEs, which helps the mobile communication device accurately determine whether the service data of the first session can be transmitted between different UEs.

In a possible embodiment, a specific implementation manner in which the session management network element determines that the service data corresponding to the first session of the first UE supports transmission between different UEs is as follows: the session management network element determines, based on the local configuration of the DNN, that the service data corresponding to the first session of the first UE supports transmission between different UEs; or the session management network element determines, based on the subscription data or policy information corresponding to the first session, that the service data corresponding to the first session of the first UE supports transmission between different UEs.

Based on this possible embodiment, the session management network element can accurately determine whether the service data corresponding to the first session of the first UE supports transmission between different UEs.

According to a fifth aspect, this application provides a method for processing service data, applied to a mobile communication device, wherein the mobile communication device comprises first user equipment UE and second UE, and the method comprises:
The mobile communications device establishes a first session of the first UE, where the first session is associated with a first internet protocol IP address; the mobile communications device transmits service data corresponding to the first IP address through the first session of the first UE; the mobile communications device sends a third message, where the third message carries information about the first session of the first UE and a second session establishment request, the second session establishment request is used to request to establish a first session of the second UE, and the third message is used to request to hand over the service data corresponding to the first session of the first UE to the first session of the second UE for transmission; and the mobile communications device transmits the service data corresponding to the first IP address through the first session of the second UE.

It can be learned that, according to the method described in the fifth aspect, when establishing the first session of the second UE, the information about the first session of the first UE and the second session establishment request used to establish the first session of the second UE may be sent to the network side, so that the network side may share the first IP address associated with the first session of the first UE with the first session of the second UE, that is, the first session of the first UE and the first session of the second UE may share a same IP address. By enabling the first session of the first UE and the first session of the second UE to share a same IP address, an IP address used by the service data before and after the handover between UEs in the mobile communications device remains unchanged, thereby ensuring service continuity.

In a possible embodiment, a specific implementation manner in which the mobile communications device establishes the first session of the first UE is: the mobile communications device selects the first UE according to the direction policy information, and establishes the first session of the first UE;
The direction policy information comprises: the first UE is a preferentially selected UE, or a UE priority list (a priority of the first UE is higher than that of the second UE); or
the direction policy information comprises: the first network is a preferentially selected network, or a network priority list (a priority of the first network is higher than that of the second network), where the first network is a network on which the first UE camps, and the second network is a network on which the second UE camps; or
the direction policy information comprises: the first RAT is a preferentially selected RAT, or a RAT priority list (a priority of the first RAT is higher than that of the second RAT), where the first RAT is a RAT supported by the first access network device, the second RAT is a RAT supported by the second access network device, the first access network device corresponds to the first UE, and the second access network device corresponds to the second UE; or
the direction policy information comprises: the second UE is a preferentially selected UE, or a UE priority list (the second UE has a higher priority than the first UE). Correspondingly, the direction policy information indicates that the second UE is preferentially selected to transmit the service data of the mobile communication device; or,
the direction policy information comprises: the second network is a preferentially selected network, or a network priority list (the second network has a higher priority than the first network), where the first network is a network on which the first UE camps, and the second network is a network on which the second UE camps; or,
the direction policy information comprises: the second RAT is a preferentially selected RAT, or a RAT priority list (the second RAT has a higher priority than the first RAT), where the first RAT is a RAT supported by the first access network device, the second RAT is a RAT supported by the second access network device, the first access network device corresponds to the first UE, and the second access network device corresponds to the second UE.

For example, it is assumed that the direction policy information includes that the second UE is a preferentially selected UE, or a UE priority list (the second UE has a higher priority than the first UE), or the second network is a preferentially selected network, or a network priority list (the second network has a higher priority than the first network), or the second network is a preferentially selected network, or a network priority list (the second network has a higher priority than the first network). If the signal quality between the mobile communication device and the second access network device is poor, for example, the signal quality is lower than a specified signal threshold, the mobile communication device does not select the second UE. The mobile communication device selects the first UE based on the direction policy information and the signal quality between the mobile communication device and the first access network device, where the signal quality between the mobile communication device and the first access network device is good or higher than a specified signal threshold.

Based on this possible embodiment, it is possible to reasonably select one UE from multiple UEs in a mobile communication device to transmit service data. For example, the mobile communication device may have limited capabilities and cannot support multiple UEs simultaneously transmitting service data.

In a possible embodiment, a specific implementation manner in which the mobile communication device establishes the first session of the first UE is as follows:
The mobile communication device sends an identifier of the first session of the first UE, a data network name DNN, single network slice selection assistance information S-NSSAI, a first session establishment request, and first indication information, where the first session establishment request is used to request to establish the first session of the first UE, and the first indication information indicates that the service data of the first session of the first UE may be transmitted between different UEs.

Based on this possible embodiment, by sending the first indication information, the network side can be facilitated to select a session management network element that supports the transmission of service data between different UEs for session management, thereby facilitating subsequent processing.

In a possible embodiment, the mobile communication device may further receive second indication information, where the second indication information indicates that service data of the first session is allowed to be transmitted between different UEs, or indicates that service data of the mobile communication device is allowed to be transmitted between different UEs;

A specific implementation of sending the third message by the mobile communication device is that the mobile communication device sends the third message based on the second indication information.

Based on this possible embodiment, the mobile communication device can accurately determine whether service data of the first session can be transmitted between different UEs.

In a possible embodiment, a specific implementation of sending the third message by the mobile communication device is as follows:
The mobile communication device sends the third message when signal quality between the mobile communication device and the first access network device deteriorates, or when signal quality between the mobile communication device and the first access network device is lower than a first threshold, or when a quality of service QoS requirement of the first session of the first UE is not met. Optionally, when the signal quality between the mobile communication device and the first access network device deteriorates, the signal quality between the mobile communication device and the first access network device may decrease by a value greater than or equal to a first value.

Based on this possible embodiment, when the signal quality between the first UE and the first access network device deteriorates or is not good, or when a QoS requirement of a first session of the first UE is not met, the first UE can be promptly switched to the second UE for service data transmission, thereby ensuring the transmission quality of the service data.

In another possible embodiment, a specific implementation of sending the third message by the mobile communication device is as follows: when the signal quality between the mobile communication device and the first access network device deteriorates, or when the signal quality between the mobile communication device and the first access network device is lower than a first threshold, or when a quality of service QoS requirement of a first session of the first UE is not met, or when the signal quality between the mobile communication device and the second access network device is higher than a second threshold, the mobile communication device sends the third message, where the first access network device is corresponding to the first UE.

Based on this possible embodiment, when the signal quality between the first UE and the first access network device deteriorates or is not good, or when the QoS requirement of the first session of the first UE is not met, and when the signal quality between the second UE and the second access network device is good, the first UE can be promptly switched to the second UE for service data transmission, thereby ensuring the transmission quality of the service data.

In a possible embodiment, the information about the first session of the first UE includes one or more of the following: an identifier of the first session of the first UE, a DNN corresponding to the first session of the first UE, and an S-NSSAI corresponding to the first session of the first UE.

Based on this possible embodiment, the network side can accurately determine the first session of the first UE.

In a possible embodiment, the third message further includes a subscriber concealed identifier SUCI of the first UE or a subscriber permanent identifier SUPI of the first UE.

Based on this possible embodiment, the network side can determine the SUPI of the first UE.

In a possible embodiment, the third message further includes a second handover indication, where the second handover indication is used to indicate to switch service data of the first session of the first UE to the first session of the second UE for transmission, or the second handover indication is used to indicate to switch service data of a first session of a UE associated with the second UE to the first session of the second UE for transmission.

According to a sixth aspect, this application provides a method for processing service data, where the method includes:
The second network element receives a third message, where the third message carries information about a first session of first user equipment UE and a second session establishment request, the second session establishment request is used to request to establish a first session of second UE, and the third message is used to request to switch service data of the first session of the first UE to the first session of the second UE for transmission; and the second network element sends a fourth message to a session management network element based on the third message, where the fourth message carries a subscription permanent identifier SUPI of the first UE, an identifier of the first session, a SUPI of the second UE, and the second session establishment request, and the fourth message is used to request to switch service data of the first session of the first UE to the second UE for transmission, where the session management network element is a network element that manages the first session of the first UE.

It can be seen that, based on the method described in the sixth aspect, when establishing the first session of the second UE, the second network element may receive information about the first session of the first UE and a second session establishment request used to establish the first session of the second UE, and send an identifier of the first session of the first UE, the SUPI of the second UE, and the second session establishment request to the session management network element. In this way, the session management network element can share the first IP address associated with the first session of the first UE for use by the first session of the second UE, that is, the first session of the first UE and the first session of the second UE can share the same IP address. By enabling the first session of the first UE and the first session of the second UE to share the same IP address, the IP address used for service data before and after the handover between UEs in the mobile communication device remains unchanged, thereby maintaining service continuity.

In a possible embodiment, the information of the first session of the first UE includes one or more of the following: an identifier of the first session of the first UE, a data network name DNN corresponding to the first session of the first UE, and a single network slice selection assistance information NSSAI corresponding to the first session of the first UE.

Based on this possible embodiment, it is beneficial for the network side to accurately determine the first session of the first UE.

In a possible embodiment, the third message further includes the subscriber concealed identity SUCI of the first UE or the SUPI of the first UE.

Based on this possible embodiment, it is beneficial for the network side to determine the SUPI of the first UE.

In a possible embodiment, the information of the first session of the first UE is an identifier of the first session of the first UE; a specific implementation manner in which the second network element sends a fourth message to the session management network element based on the third message is: the second network element obtains the SUPI of the first UE and an identifier of the session management network element based on the device identification information and the identifier of the first session; where the device identification information is the SUPI of the second UE, or the third message further includes the SUCI of the first UE, and the device identification information is the SUCI of the first UE; and the second network element sends the fourth message to the session management network element.

Based on this possible embodiment, the second network element can accurately obtain the SUPI of the first UE and the identifier of the session management network element used to manage the first session of the first UE, so as to send the fourth message to the session management network element.

In a possible embodiment, a specific implementation manner in which the second network element obtains the SUPI of the first UE and the identifier of the session management network element based on the device identification information and the identifier of the first session is as follows: the second network element sends the device identification information and the identifier of the first session to a unified data management network element; and the second network element receives the SUPI of the first UE and the identifier of the session management network element sent by the unified data management network element.

Based on this possible embodiment, the second network element can accurately obtain the SUPI of the first UE and the identifier of the session management network element used to manage the first session of the first UE.

In a possible embodiment, a specific implementation manner in which the second network element obtains the SUPI of the first UE and the identifier of the session management network element based on the device identification information and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the identifier of the first session to the unified data management network element; and the second network element receives the identifier of the session management network element sent by the unified data management network element.

Based on this possible embodiment, the second network element can accurately obtain the SUPI of the first UE and the identifier of the session management network element used to manage the first session of the first UE.

In a possible embodiment, the information of the first session of the first UE includes the DNN corresponding to the first session of the first UE and/or the NSSAI corresponding to the first session of the first UE; a specific implementation manner in which the second network element sends the fourth message to the session management network element based on the third message is: the second network element obtains the SUPI of the first UE, the identifier of the session management network element, and the identifier of the first session based on the device identification information and the information of the first session of the first UE; where the device identification information is the SUPI of the second UE, or the third message further includes the SUCI of the first UE, and the device identification information is the SUCI of the first UE; the second network element sends the fourth message to the session management network element.

Based on this possible embodiment, the second network element can accurately obtain the SUPI of the first UE, the identifier of the session management network element used to manage the first session of the first UE, and the identifier of the first session, so as to send a fourth message to the session management network element.

In a possible embodiment, a specific implementation manner in which the second network element obtains the SUPI of the first UE, the identifier of the session management network element, and the identifier of the first session based on the device identification information and the information about the first session of the first UE is as follows: the second network element sends the device identification information and the information about the first session of the first UE to a unified data management network element; and the second network element receives the SUPI of the first UE, the identifier of the session management network element, and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, a specific implementation manner in which the second network element obtains the SUPI of the first UE, the identifier of the session management network element, and the identifier of the first session based on the device identification information and the information about the first session of the first UE is as follows: the second network element sends the device identification information to an authentication server function network element or a unified data management network element; the second network element receives the SUPI of the first UE sent by the authentication server function network element or the unified data management network element; the second network element sends the SUPI of the first UE and the information about the first session of the first UE to the unified data management network element; and the second network element receives the identifier of the session management network element and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, the third message and the fourth message further include a second handover indication, where the second handover indication is used to indicate that the service data of the first session of the first UE is to be handed over to the first session of the second UE for transmission, or the second handover indication is used to indicate that the service data of the first session of the UE associated with the second UE is to be handed over to the first session of the second UE for transmission.

According to a seventh aspect, this application provides a method for processing service data, where the method includes:
The session management network element receives a fourth message, where the fourth message carries a user permanent identifier SUPI of the first user equipment UE, an identifier of a first session of the first UE, a SUPI of the second UE, and a second session establishment request, where the second session establishment request is used to request to establish a first session of the second UE, and the fourth message is used to request to hand over service data of the first session of the first UE to the first session of the second UE for transmission, where the session management network element is a network element that manages the first session of the first UE; in response to the fourth message, the session management network element sends a first N4 session identifier and address information of the second access network device to a user plane function network element, where the first N4 session identifier is an N4 session identifier associated with the identifier of the first session of the first UE, and the first N4 session identifier and the address information of the second access network device are used to indicate that service data carried on the first IP address corresponding to the first N4 session identifier is to be sent to the second access network device, where the second access network device is configured to carry the first session of the second UE, and the first IP address is an IP address associated with the identifier of the first session of the first UE.

Based on the method described in the seventh aspect, when establishing the first session of the second UE, the session management network element may receive an identifier of the first session of the first UE, the SUPI of the second UE, and a second session establishment request used to establish the first session of the second UE. In this way, the session management network element can share the first IP address associated with the first session of the first UE for use by the first session of the second UE, that is, the first session of the first UE and the first session of the second UE can share the same IP address. By enabling the first session of the first UE and the first session of the second UE to share the same IP address, the IP address used by the service data remains unchanged before and after the handover between UEs in the mobile communication device, thereby maintaining service continuity.

In a possible embodiment, in response to the fourth message, the session management network element may further store an association relationship between the identifier of the first session and the SUPI of the second UE. Storing the association relationship between the identifier of the first session and the SUPI of the second UE can facilitate subsequent management of the first session.

In a possible embodiment, the session management network element may further send the address information of the user plane function network element to the second access network device; and/or the session management network element triggers the release of the first session of the first UE. In this way, the second access network device can send the service data of the first session of the second UE to the user plane function network element.

In a possible embodiment, the fourth message further includes a second handover indication, where the second handover indication is used to indicate that the service data of the first session of the first UE is handed over to the first session of the second UE for transmission, or the second handover indication is used to indicate that the service data of the first session of the UE associated with the second UE is handed over to the first session of the second UE for transmission.

In a possible embodiment, before receiving the fourth message sent by the second network element, the session management network element may further receive the SUPI of the first UE, an identifier of the first session, a data network name DNN, single network slice selection assistance information S-NSSAI, a first session establishment request, and first indication information, where the first session establishment request is used to request to establish the first session of the first UE, and the first indication information indicates that the service data of the first session of the first UE may be transmitted between different UEs; the session management network element determines that the service data corresponding to the first session of the first UE supports transmission between different UEs; and the session management network element sends second indication information to the first network element, where the second indication information indicates that the service data corresponding to the first session of the first UE supports transmission between different UEs.

Based on this possible embodiment, the session management network element may feed back to the mobile communication device whether the service data of the first session of the first UE supports transmission between different UEs, which helps the mobile communication device accurately determine whether the service data of the first session can be transmitted between different UEs.

In a possible embodiment, a specific implementation manner in which the session management network element determines that the service data corresponding to the first session of the first UE supports transmission between different UEs is as follows: the session management network element determines, based on the local configuration of the DNN, that the service data corresponding to the first session of the first UE supports transmission between different UEs; or the session management network element determines, based on the subscription data or policy information corresponding to the first session, that the service data corresponding to the first session of the first UE supports transmission between different UEs.

Based on this possible embodiment, the session management network element can accurately determine whether the service data corresponding to the first session of the first UE supports transmission between different UEs.

According to an eighth aspect, this application provides a method for processing service data, applied to a mobile communication device, wherein the mobile communication device comprises first user equipment UE and second UE, and the method comprises:
The mobile communication device establishes a first session for the first UE, where the first session is associated with a first Internet Protocol IP address; the mobile communication device transmits service data corresponding to the first IP address through the first session of the first UE; the mobile communication device establishes a second session for the second UE; the first session of the first UE is associated with the second session of the second UE; the mobile communication device sends a seventh message, where the seventh message carries an identifier of the second session, and the seventh message is used to request to hand over the service data of the first session of the first UE to the second session of the second UE for transmission; the mobile communication device transmits the service data corresponding to the first IP address through the second session of the second UE.

It can be learned that, based on the method described in the eighth aspect, an association relationship between the first session of the first UE and the second session of the second UE may be established in advance, and subsequently, a service data handover between UEs in the mobile communication device is triggered according to a requirement. By establishing the association relationship between the first session of the first UE and the second session of the second UE, the first session of the first UE and the second session of the second UE can share the same IP address, and an IP address used before and after the service data is handed over between UEs in the mobile communication device remains unchanged, thereby maintaining service continuity. In addition, the association relationship between the first session of the first UE and the second session of the second UE is established in advance, which facilitates timely handover of the service data to the second UE for transmission subsequently.

In a possible embodiment, a specific implementation manner in which the mobile communications device establishes the first session of the first UE is: the mobile communications device selects the first UE according to the direction policy information, and establishes the first session of the first UE;
The direction policy information includes: the first UE is a preferentially selected UE, or a UE priority list (a priority of the first UE is higher than that of the second UE); or
The direction policy information includes: the first network is a preferentially selected network, or a network priority list (a priority of the first network is higher than that of the second network), where the first network is a network on which the first UE camps, and the second network is a network on which the second UE camps; or
The direction policy information includes: the first RAT is a preferentially selected RAT, or a RAT priority list (a priority of the first RAT is higher than that of the second RAT), where the first RAT is a RAT supported by the first access network device, the second RAT is a RAT supported by the second access network device, the first access network device corresponds to the first UE, and the second access network device corresponds to the second UE; or
The direction policy information includes: the second UE is a preferentially selected UE, or a UE priority list (the second UE has a higher priority than the first UE). Correspondingly, the direction policy information indicates that the second UE is preferentially selected to transmit the service data of the mobile communication device; or,
the direction policy information includes: the second network is a preferentially selected network, or a network priority list (the second network has a higher priority than the first network), where the first network is a network on which the first UE camps, and the second network is a network on which the second UE camps; or,
the direction policy information includes: the second RAT is a preferentially selected RAT, or a RAT priority list (the second RAT has a higher priority than the first RAT), where the first RAT is a RAT supported by the first access network device, the second RAT is a RAT supported by the second access network device, the first access network device corresponds to the first UE, and the second access network device corresponds to the second UE.

For example, it is assumed that the direction policy information includes that the second UE is a preferentially selected UE, or a UE priority list (the second UE has a higher priority than the first UE), or the second network is a preferentially selected network, or a network priority list (the second network has a higher priority than the first network), or the second network is a preferentially selected network, or a network priority list (the second network has a higher priority than the first network). If the signal quality between the mobile communication device and the second access network device is poor, for example, the signal quality is lower than a specified signal threshold, the mobile communication device does not select the second UE. The mobile communication device selects the first UE based on the direction policy information and the signal quality between the mobile communication device and the first access network device, where the signal quality between the mobile communication device and the first access network device is good or higher than a specified signal threshold.

Based on this possible embodiment, it is possible to reasonably select one UE from multiple UEs in a mobile communication device to transmit service data. For example, the mobile communication device may have limited capabilities and cannot support multiple UEs simultaneously transmitting service data.

In a possible embodiment, a specific implementation manner in which the mobile communication device establishes the first session of the first UE is as follows:
The mobile communication device sends an identifier of the first session of the first UE, a data network name (DNN), single network slice selection assistance information S-NSSAI, a first session establishment request, and first indication information to the first UE, where the first session establishment request is used to request the establishment of the first session of the first UE, and the first indication information indicates that the service data of the first session of the first UE may be transmitted between different UEs.

Based on this possible embodiment, by sending the first indication information, the network side can be facilitated to select a session management network element that supports the transmission of service data between different UEs for session management, thereby facilitating subsequent processing.

In a possible embodiment, a specific implementation of establishing the second session of the second UE by the mobile communication device is as follows:
The mobile communication device sends a fifth message, where the fifth message carries the information about the first session of the first UE, the identifier of the second session of the second UE, and a second session establishment request, where the second session establishment request is used to request to establish the second session of the second UE.

Based on this possible embodiment, the second session of the second UE can be successfully established, and an association relationship between the first session of the first UE and the second session of the second UE can be stored.

In a possible embodiment, the fifth message is used to request to associate the second session of the second UE with the first session of the first UE.

In a possible embodiment, the information about the first session of the first UE includes one or more of the following: an identifier of the first session of the first UE, a DNN corresponding to the first session of the first UE, and an S-NSSAI corresponding to the first session of the first UE.

Based on this possible embodiment, it is beneficial for the network side to accurately determine the first session of the first UE.

In a possible embodiment, the fifth message further includes a subscriber concealed identifier SUCI of the first UE or a subscriber permanent identifier SUPI of the first UE.

Based on this possible embodiment, it is beneficial for the network side to determine the SUPI of the first UE.

In a possible embodiment, the mobile communication device may further receive second indication information, where the second indication information indicates that service data of the first session is allowed to be transmitted between different UEs, or indicates that service data of the mobile communication device is allowed to be transmitted between different UEs.

A specific implementation manner in which the mobile communication device sends the fifth message is: the mobile communication device sends the fifth message based on the second indication information.

Based on this possible embodiment, the mobile communication device can accurately determine whether service data of the first session can be transmitted between different UEs.

In a possible embodiment, a specific implementation of sending the seventh message by the mobile communication device is as follows:
The mobile communication device sends the seventh message when signal quality between the mobile communication device and the first access network device deteriorates, or when signal quality between the mobile communication device and the first access network device is lower than a first threshold, or when a quality of service QoS requirement of the first session of the first UE is not met.

Optionally, the signal quality between the mobile communication device and the first access network device deteriorating may be that the signal quality between the mobile communication device and the first access network device decreases by a value greater than or equal to the first value.

In another possible embodiment, a specific implementation of sending the seventh message by the mobile communication device is as follows: when the signal quality between the mobile communication device and the first access network device deteriorates, or when the signal quality between the mobile communication device and the first access network device is lower than a first threshold, or when a quality of service QoS requirement of the first session of the first UE is not met, or when the signal quality between the mobile communication device and the second access network device is higher than a second threshold, the mobile communication device sends the seventh message, where the first access network device is corresponding to the first UE.

Based on this possible embodiment, when the signal quality between the first UE and the first access network device deteriorates or becomes poor, or when the QoS requirements of the first session of the first UE are not met, and the signal quality between the second UE and the second access network device is good, a timely handover to the second UE can be performed for the transmission of service data, thereby ensuring the transmission quality of the service data.

In a possible embodiment, the seventh message further includes a first handover indication, where the first handover indication is used to indicate that the service data of the first session of the first UE is handed over to the second session of the second UE for transmission, or the first handover indication is used to indicate that the service data of the first session of the UE associated with the second UE is handed over to the second session of the second UE for transmission.

According to a ninth aspect, this application provides a method for processing service data, where the method includes:
The second network element receives a seventh message, where the seventh message carries an identifier of a second session, and the seventh message is used to request to hand over service data of a first session of the first UE to a second session of the second UE for transmission; the first session of the first UE is associated with the second session of the second UE; the second network element sends an eighth message to a session management network element, where the eighth message carries first information, the first information is used to indicate the second session of the second UE, and the eighth message is used to request to hand over service data of the first session of the first UE to the second session of the second UE for transmission.

It can be seen that, based on the method described in the ninth aspect, an association relationship between the first session of the first UE and the second session of the second UE can be established in advance, and subsequently, the switching of service data between UEs in the mobile communication device can be triggered according to the need. By establishing the association relationship between the first session of the first UE and the second session of the second UE, the first session of the first UE and the second session of the second UE can share the same IP address, and the IP address used by the service data before and after the UE switching within the mobile communication device remains unchanged, thereby maintaining service continuity. Moreover, establishing the association relationship between the first session of the first UE and the second session of the second UE in advance facilitates the timely switching of service data to the second UE for transmission in the subsequent process.

In a possible embodiment, the first information includes the SUPI of the second UE and an identifier of the second session, or the first information is information allocated by a session management network element for identifying the second session of the second UE.

In a possible embodiment, the second network element may further receive a fifth message, where the fifth message carries information about a first session of the first UE, an identifier of a second session of the second UE, and a second session establishment request, where the second session establishment request is used to request to establish the second session of the second UE; and the second network element sends a sixth message to the session management network element based on the fifth message, where the sixth message carries a user permanent identifier of the first UE, an identifier of the first session, a SUPI of the second UE, an identifier of the second session, and the second session establishment request.

Based on this possible embodiment, it is beneficial for successfully establishing the second session of the second UE and for storing the association relationship between the first session of the first UE and the second session of the second UE.

In a possible embodiment, the fifth message is used to request to associate the second session of the second UE with the first session of the first UE, and the sixth message is used to request to associate the second session of the second UE with the first session of the first UE.

In a possible embodiment, after the second network element receives the fifth message and before the second network element receives the seventh message, the second network element may further record that the session management network element is responsible for managing the second session of the second UE.

Based on this possible embodiment, it is beneficial for the second network element to promptly determine the session management network element when receiving the seventh message, so that an eighth message can be sent to the session management network element.

In a possible embodiment, the information of the first session of the first UE includes one or more of the following items: an identifier of the first session of the first UE, a data network name DNN corresponding to the first session of the first UE, and single network slice selection assistance information S-NSSAI corresponding to the first session of the first UE.

Based on this possible embodiment, it is beneficial for the network side to accurately determine the first session of the first UE.

In a possible embodiment, the fifth message further includes the subscriber concealed identifier SUCI of the first UE or the SUPI of the first UE.

Based on this possible embodiment, it is beneficial for the network side to determine the SUPI of the first UE.

In a possible embodiment, the information of the first session of the first UE is an identifier of the first session of the first UE; a specific implementation manner in which the second network element sends a sixth message to the session management network element based on the fifth message is: the second network element obtains the SUPI of the first UE and the identifier of the session management network element based on the device identification information and the identifier of the first session; where the device identification information is the SUPI of the second UE, or the fifth message further includes the SUCI of the first UE, and the device identification information is the SUCI of the first UE; and the second network element sends the sixth message to the session management network element.

Based on this possible embodiment, the second network element can accurately obtain the SUPI of the first UE and the identifier of the session management network element that manages the first session of the first UE, so as to send a sixth message to the session management network element.

In a possible embodiment, a specific implementation manner in which the second network element obtains the SUPI of the first UE and the identifier of the session management network element based on the device identification information and the identifier of the first session is as follows: the second network element sends the device identification information and the identifier of the first session to a unified data management network element; and the second network element receives the SUPI of the first UE and the identifier of the session management network element sent by the unified data management network element.

Based on this possible embodiment, the second network element can accurately obtain the SUPI of the first UE and the identifier of the session management network element used to manage the first session of the first UE.

In a possible embodiment, a specific implementation manner in which the second network element obtains the SUPI of the first UE and the identifier of the session management network element based on the device identification information and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the identifier of the first session to the unified data management network element; and the second network element receives the identifier of the session management network element sent by the unified data management network element.

Based on this possible embodiment, the second network element can accurately obtain the SUPI of the first UE and the identifier of the session management network element used to manage the first session of the first UE.

In a possible embodiment, the information of the first session of the first UE includes the DNN corresponding to the first session of the first UE and/or the NSSAI corresponding to the first session of the first UE; a specific implementation manner in which the second network element sends a sixth message to the session management network element based on the fifth message is as follows: the second network element obtains the SUPI of the first UE, the identifier of the session management network element, and the identifier of the first session based on the device identification information and the information of the first session of the first UE; where the device identification information is the SUPI of the second UE, or the fifth message further includes the SUCI of the first UE, and the device identification information is the SUCI of the first UE; and the second network element sends the sixth message to the session management network element.

Based on this possible embodiment, the second network element can accurately obtain the SUPI of the first UE, the identifier of the session management network element used to manage the first session of the first UE, and the identifier of the first session, so as to send a sixth message to the session management network element.

In a possible embodiment, a specific implementation manner in which the second network element obtains the SUPI of the first UE, the identifier of the session management network element, and the identifier of the first session based on the device identification information and the information of the first session of the first UE is as follows: the second network element sends the device identification information and the information of the first session of the first UE to a unified data management network element; and the second network element receives the SUPI of the first UE, the identifier of the session management network element, and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, a specific implementation manner in which the second network element obtains the SUPI of the first UE, the identifier of the session management network element, and the identifier of the first session based on the device identification information and the information of the first session of the first UE is as follows: the second network element sends the device identification information to an authentication server function network element or a unified data management network element; the second network element receives the SUPI of the first UE sent by the authentication server function network element or the unified data management network element; the second network element sends the SUPI of the first UE and the information of the first session of the first UE to the unified data management network element; and the second network element receives the identifier of the session management network element and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, the seventh message and the eighth message further include a first handover indication, where the first handover indication is used to indicate that the service data of the first session of the first UE is to be handed over to the second session of the second UE for transmission, or the first handover indication is used to indicate that the service data of the first session of the UE associated with the second UE is to be handed over to the second session of the second UE for transmission.

According to a tenth aspect, this application provides a method for processing service data, where the method includes:
The session management network element stores an association relationship between an identifier of a second session of the second UE and an identifier of a first session of the first UE; the session management network element receives an eighth message, where the eighth message carries first information used to indicate the second session of the second UE, and the eighth message is used to request to hand over service data of the first session of the first UE to the second session of the second UE for transmission; in response to the eighth message, the session management network element sends a first N4 session identifier and address information of the second access network device to a user plane function network element, where the first N4 session identifier is an N4 session identifier associated with the identifier of the first session of the first UE and the identifier of the second session of the second UE, and the first N4 session identifier and the address information of the second access network device are used to indicate that service data carried on an IP address corresponding to the first N4 session identifier is to be sent to the second access network device, where the second access network device is configured to carry the second session of the second UE, and the first IP address is an IP address associated with the identifier of the first session of the first UE and the identifier of the second session of the second UE.

It is evident that, based on the method described in the tenth aspect, an association relationship between the identifier of the first session of the first UE and the identifier of the second session of the second UE can be established in advance, thereby enabling the subsequent triggering of inter-UE handover transmission of service data in the mobile communication device according to the need. By establishing this association relationship between the identifier of the first session of the first UE and the identifier of the second session of the second UE, the first session of the first UE and the second session of the second UE can share the same IP address, ensuring that the IP address used before and after the handover of service data between UEs in the mobile communication device remains unchanged, thereby maintaining service continuity. Moreover, establishing this association relationship in advance between the identifier of the first session of the first UE and the identifier of the second session of the second UE facilitates the timely handover of service data to the second UE for transmission in the future.

In a possible embodiment, the session management network element may further store an association relationship between the identifier of the first session of the first UE and the first IP address; in response to the eighth message, the session management network element may further store an association relationship between the identifier of the second session of the second UE and the first IP address, and/or remove the association relationship between the identifier of the first session of the first UE and the first IP address. Storing the association relationship between the identifier of the second session of the second UE and the first IP address can facilitate subsequent management of the second session. Removing the association relationship between the identifier of the first session of the first UE and the first IP address helps save storage space.

In a possible embodiment, the session management network element may further store an association relationship between the identifier of the first session of the first UE and the identifier of the first N4 session; in response to the eighth message, the session management network element may further store an association relationship between the identifier of the second session of the second UE and the identifier of the first N4 session, and/or remove the association relationship between the identifier of the first session of the first UE and the identifier of the first N4 session. Storing the association relationship between the identifier of the second session of the second UE and the identifier of the first N4 session facilitates subsequent management of the second session. Removing the association relationship between the identifier of the first session of the first UE and the identifier of the first N4 session helps save storage space.

In a possible embodiment, the session management network element may further send the address information of the user plane function network element to the second access network device, and/or trigger the release of the first session by the session management network element. In this way, the second access network device can send the service data of the second session of the second UE to the user plane function network element.

In a possible embodiment, the session management network element may further receive a sixth message, where the sixth message carries a subscription permanent identity SUPI of the first user equipment UE, an identifier of the first session of the first UE, a SUPI of the second UE, an identifier of the second session of the second UE, and a second session establishment request, where the second session establishment request is used to request to establish the second session of the second UE.

A specific implementation manner in which the session management network element stores the association relationship between the identifier of the second session of the second UE and the identifier of the first session of the first UE is as follows: in response to the sixth message, the session management network element stores the association relationship between the identifier of the second session of the second UE and the identifier of the first session of the first UE.

Based on this possible embodiment, the second session of the second UE can be successfully established, and an association relationship between the first session of the first UE and the second session of the second UE can be successfully established.

In a possible embodiment, the sixth message is used to request to associate the second session of the second UE with the first session of the first UE.

In a possible embodiment, after receiving the sixth message and before receiving the eighth message, the session management network element may further record that the user plane transmission channel of the first session of the first UE is in an activated state, and the user plane transmission channel of the second session of the second UE is in an inactive state.

In a possible embodiment, the first information includes the SUPI of the second UE and an identifier of the second session, or the first information is information allocated by the session management network element for identifying the second session of the second UE.

In a possible embodiment, the eighth message further includes a first handover indication, where the first handover indication is used to indicate that the service data of the first session of the first UE is to be handed over to the second session of the second UE for transmission, or the first handover indication is used to indicate that the service data of the first session of the UE associated with the second UE is to be handed over to the second session of the second UE for transmission.

In a possible embodiment, the session management network element may further receive the SUPI of the first UE, an identifier of the first session, a data network name DNN, single network slice selection assistance information S-NSSAI, a first session establishment request, and first indication information, where the first session establishment request is used to request to establish the first session of the first UE, the first indication information indicates that the service data of the first session of the first UE may be transmitted between different UEs; the session management network element determines that the service data corresponding to the first session of the first UE supports transmission between different UEs; and the session management network element sends second indication information, where the second indication information indicates that the service data corresponding to the first session of the first UE supports transmission between different UEs.

Based on this possible embodiment, the session management network element may feed back to the mobile communication device whether the service data of the first session of the first UE supports transmission between different UEs, which helps the mobile communication device accurately determine whether the service data of the first session can be transmitted between different UEs.

In a possible embodiment, a specific implementation manner in which the session management network element determines that the service data corresponding to the first session of the first UE supports transmission between different UEs is as follows: the session management network element determines, based on the local configuration of the DNN, that the service data corresponding to the first session of the first UE supports transmission between different UEs; or the session management network element determines, based on the subscription data or policy information corresponding to the first session, that the service data corresponding to the first session of the first UE supports transmission between different UEs.

Based on this possible embodiment, the session management network element can accurately determine whether the service data corresponding to the first session of the first UE supports transmission between different UEs.

According to an eleventh aspect, this application provides a method for processing service data, applied to a mobile communication device, wherein the mobile communication device comprises first user equipment UE and second UE, and the method comprises: establishing, by the mobile communication device, a first session for the first UE, wherein the first session is associated with a first internet protocol IP address; transmitting, by the mobile communication device, service data corresponding to the first IP address through the first session of the first UE; establishing, by the mobile communication device, a first session for the second UE; associating the first session of the first UE with the first session of the second UE; sending, by the mobile communication device, an eleventh message, wherein the eleventh message carries an identifier of the first session, and the eleventh message is used to request to hand over the service data of the first session of the first UE to the first session of the second UE for transmission; and transmitting, by the mobile communication device, the service data corresponding to the first IP address through the first session of the second UE.

It can be seen that, based on the method described in the eleventh aspect, an association relationship between the first session of the first UE and the SUPI of the second UE may be established in advance, and subsequently, a service data may be triggered to switch between UEs in the mobile communication device for transmission according to a requirement. By establishing the association relationship between the first session of the first UE and the SUPI of the second UE, the first session of the first UE and the first session of the second UE can share the same IP address, so that the IP address used before and after the service data is switched between UEs in the mobile communication device remains unchanged, thereby maintaining service continuity. In addition, establishing the association relationship between the first session of the first UE and the SUPI of the second UE in advance facilitates timely switching of the service data to the second UE for transmission subsequently.

In a possible embodiment, a specific implementation manner in which the mobile communication device establishes the first session of the first UE is as follows: the mobile communication device selects the first UE according to the directional policy information, and establishes the first session of the first UE;
The direction policy information includes: the first UE is a preferentially selected UE, or a UE priority list (a priority of the first UE is higher than that of the second UE); or
The direction policy information includes: the first network is a preferentially selected network, or a network priority list (a priority of the first network is higher than that of the second network), where the first network is a network on which the first UE camps, and the second network is a network on which the second UE camps; or
The direction policy information includes: the first RAT is a preferentially selected RAT, or a RAT priority list (a priority of the first RAT is higher than that of the second RAT), where the first RAT is a RAT supported by the first access network device, the second RAT is a RAT supported by the second access network device, the first access network device corresponds to the first UE, and the second access network device corresponds to the second UE; or
The direction policy information includes: the second UE is a preferentially selected UE, or a UE priority list (a priority of the second UE is higher than that of the first UE). Correspondingly, the direction policy information indicates that the second UE is preferentially selected to transmit the service data of the mobile communications device; or,
The steering policy information includes: the second network is a network preferentially selected, or a network priority list (the second network has a higher priority than the first network), where the first network is a network on which the first UE camps, and the second network is a network on which the second UE camps; or
The steering policy information includes: the second RAT is a preferentially selected RAT, or an RAT priority list (the second RAT has a higher priority than the first RAT), where the first RAT is an RAT supported by the first access network device, the second RAT is an RAT supported by the second access network device, the first access network device corresponds to the first UE, and the second access network device corresponds to the second UE.

For example, it is assumed that the steering policy information includes that the second UE is a preferentially selected UE, or a UE priority list (the second UE has a higher priority than the first UE), or the second network is a preferentially selected network, or a network priority list (the second network has a higher priority than the first network), or the second network is a preferentially selected network, or a network priority list (the second network has a higher priority than the first network). If the signal quality between the mobile communication device and the second access network device is poor, for example, the signal quality is lower than a specified signal threshold, the mobile communication device does not select the second UE. The mobile communication device selects the first UE based on the steering policy information and the signal quality between the mobile communication device and the first access network device, where the signal quality between the mobile communication device and the first access network device is good or higher than a specified signal threshold.

Based on this possible embodiment, it is possible to reasonably select one UE from multiple UEs in a mobile communication device to transmit service data. For example, the mobile communication device may have limited capabilities and cannot support multiple UEs simultaneously transmitting service data.

In a possible embodiment, a specific implementation method for the mobile communication device to establish the first session of the first UE is as follows:
The mobile communication device sends an identifier of the first session of the first UE, a data network name DNN, single network slice selection assistance information S-NSSAI, a first session establishment request, and first indication information to the first UE, where the first session establishment request is used to request the establishment of the first session of the first UE, and the first indication information indicates that the service data of the first session of the first UE may be transmitted between different UEs.

Based on this possible embodiment, by sending the first indication information, the network side can be facilitated to select a session management network element that supports the transmission of service data between different UEs for session management, thereby facilitating subsequent processing.

In a possible embodiment, a specific implementation manner in which the mobile communications device establishes the first session of the second UE is as follows: The mobile communications device sends a ninth message, where the ninth message carries the information about the first session of the first UE and a second session establishment request, where the second session establishment request is used to request to establish the first session of the second UE.

Based on this possible embodiment, it is beneficial to successfully establish the first session of the second UE and store the association relationship between the first session of the first UE and the first session of the second UE.

In a possible embodiment, the ninth message is used to request to associate the first session of the second UE with the first session of the first UE.

In a possible embodiment, the information about the first session of the first UE includes one or more of the following: an identifier of the first session of the first UE, a DNN corresponding to the first session of the first UE, and an S-NSSAI corresponding to the first session of the first UE.

Based on this possible embodiment, it is beneficial for the network side to accurately determine the first session of the first UE.

In a possible embodiment, the ninth message further includes the subscriber concealed identity SUCI of the first UE or the subscriber permanent identity SUPI of the first UE.

Based on this possible embodiment, it is beneficial for the network side to determine the SUPI of the first UE.

In a possible embodiment, the mobile communication device receives second indication information, where the second indication information indicates that service data of the first session is allowed to be transmitted between different UEs, or indicates that service data of the mobile communication device is allowed to be transmitted between different UEs.

A specific implementation manner in which the mobile communication device sends the ninth message is as follows: The mobile communication device sends the ninth message based on the second indication information.

Based on this possible embodiment, it is beneficial for the mobile communication device to accurately determine whether service data of the first session can be transmitted between different UEs.

In a possible embodiment, a specific implementation of sending the eleventh message by the mobile communication device is as follows: when signal quality between the mobile communication device and the first access network device deteriorates, or when signal quality between the mobile communication device and the first access network device is lower than a first threshold, or when a quality of service QoS requirement of a first session of the first UE is not met, the mobile communication device sends the eleventh message.

Optionally, the signal quality between the mobile communication device and the first access network device deteriorates may be that the signal quality between the mobile communication device and the first access network device decreases by a value greater than or equal to a first value.

In another possible embodiment, a specific implementation of sending the eleventh message by the mobile communication device is as follows: when the signal quality between the mobile communication device and the first access network device deteriorates, or when the signal quality between the mobile communication device and the first access network device is lower than a first threshold, or when a quality of service QoS requirement of a first session of the first UE is not met, or when the signal quality between the mobile communication device and the second access network device is higher than a second threshold, the mobile communication device sends the eleventh message, where the first access network device is corresponding to the first UE.

Based on this possible embodiment, when the signal quality between the first UE and the first access network device deteriorates or becomes poor, or when the QoS requirements of the first session of the first UE are not met, and the signal quality between the second UE and the second access network device is good, a timely handover to the second UE can be performed for the transmission of service data, thereby ensuring the transmission quality of the service data.

In a possible embodiment, the eleventh message further includes a second handover indication, where the second handover indication is used to instruct to hand over the service data of the first session of the first UE to the first session of the second UE for transmission, or the second handover indication is used to instruct to hand over the service data of the first session of the UE associated with the second UE to the first session of the second UE for transmission.

According to a twelfth aspect, this application provides a method for processing service data, where the method includes:
The second network element receives an eleventh message, where the eleventh message carries an identifier of a first session, and the eleventh message is used to request to hand over service data of the first session of the first UE to the first session of the second UE for transmission; the first session of the first UE is associated with the first session of the second UE; and the second network element sends a twelfth message to a session management network element, where the twelfth message carries second information, the second information is used to indicate the first session of the second UE, and the twelfth message is used to request to hand over the service data of the first session of the first UE to the first session of the second UE for transmission.

It can be seen that, based on the method described in the twelfth aspect, an association relationship between the first session of the first UE and the SUPI of the second UE can be established in advance, and subsequently, the switching of service data between UEs in the mobile communication device can be triggered according to the need. By establishing the association relationship between the first session of the first UE and the SUPI of the second UE, the first session of the first UE and the first session of the second UE can share the same IP address, and the IP address used before and after the switching of service data between UEs in the mobile communication device remains unchanged, thereby maintaining service continuity. Moreover, establishing the association relationship between the first session of the first UE and the first session of the second UE in advance facilitates the timely switching of service data to the second UE for transmission in the future.

In a possible embodiment, the second information includes the SUPI of the second UE and an identifier of the first session, or the second information is information allocated by a session management network element for identifying the first session of the second UE.

In a possible embodiment, the second network element may further receive a ninth message, where the ninth message carries information about the first session of the first UE and a second session establishment request, where the second session establishment request is used to request to establish the first session of the second UE; the second network element may further send a tenth message to the session management network element based on the ninth message, where the tenth message carries the SUPI of the first UE, an identifier of the first session, the SUPI of the second UE, and the second session establishment request.

Based on this possible embodiment, it is beneficial for successfully establishing the first session of the second UE and for storing the association relationship between the first session of the first UE and the first session of the second UE.

In a possible embodiment, the ninth message is used to request to associate the first session of the second UE with the first session of the first UE, and the tenth message is used to request to associate the first session of the second UE with the first session of the first UE.

In a possible embodiment, after the second network element receives the ninth message and before the second network element receives the eleventh message, the second network element may further record that the session management network element is responsible for managing the first session of the second UE.

In a possible embodiment, the information of the first session of the first UE includes one or more of the following: an identifier of the first session of the first UE, a data network name DNN corresponding to the first session of the first UE, and single network slice selection assistance information S-NSSAI corresponding to the first session of the first UE.

Based on this possible embodiment, it is beneficial for the network side to accurately determine the first session of the first UE.

In a possible embodiment, the ninth message further includes the subscriber concealed identifier SUCI of the first UE or the SUPI of the first UE.

Based on this possible embodiment, it is beneficial for the network side to determine the SUPI of the first UE.

In a possible embodiment, the information of the first session of the first UE is an identifier of the first session of the first UE; a specific implementation manner in which the second network element sends a tenth message to the session management network element based on the ninth message is as follows:
The second network element obtains the SUPI of the first UE and the identifier of the session management network element based on the device identification information and the identifier of the first session, where the device identification information is the SUPI of the second UE, or the ninth message further includes the SUCI of the first UE, and the device identification information is the SUCI of the first UE; and the second network element sends a tenth message to the session management network element.

Based on this possible embodiment, the second network element can accurately obtain the SUPI of the first UE and the identifier of the session management network element that manages the first session for the first UE, so as to send the tenth message to the session management network element.

In a possible embodiment, a specific implementation of obtaining, by the second network element, the SUPI of the first UE and the identifier of the session management network element based on the device identification information and the identifier of the first session is as follows: the second network element sends the device identification information and the identifier of the first session to a unified data management network element; the second network element receives the SUPI of the first UE and the identifier of the session management network element that are sent by the unified data management network element.

Based on this possible embodiment, the second network element can accurately obtain the SUPI of the first UE and the identifier of the session management network element used to manage the first session of the first UE.

In a possible embodiment, a specific implementation method for the second network element to obtain the SUPI of the first UE and the identifier of the session management network element based on the device identification information and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the identifier of the first session to the unified data management network element; the second network element receives the identifier of the session management network element sent by the unified data management network element.

Based on this possible embodiment, the second network element can accurately obtain the SUPI of the first UE and the identifier of the session management network element used to manage the first session of the first UE.

In a possible embodiment, the information of the first session of the first UE includes the DNN corresponding to the first session of the first UE and/or the NSSAI corresponding to the first session of the first UE; a specific implementation method for the second network element to send a tenth message to the session management network element based on the ninth message is as follows:
The second network element obtains the SUPI of the first UE, the identifier of the session management network element, and the identifier of the first session based on the device identification information and the information of the first session of the first UE, where the device identification information is the SUPI of the second UE, or the ninth message further includes the SUCI of the first UE, and the device identification information is the SUCI of the first UE; and the second network element sends a tenth message to the session management network element.

Based on this possible embodiment, the second network element can accurately obtain the SUPI of the first UE, the identifier of the session management network element used to manage the first session of the first UE, and the identifier of the first session, so as to send the tenth message to the session management network element.

In a possible embodiment, a specific implementation manner in which the second network element obtains the SUPI of the first UE, the identifier of the session management network element, and the identifier of the first session based on the device identification information and the information of the first session of the first UE is as follows: the second network element sends the device identification information and the information of the first session of the first UE to a unified data management network element; and the second network element receives the SUPI of the first UE, the identifier of the session management network element, and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, a specific implementation method in which the second network element obtains the SUPI of the first UE, the identifier of the session management network element, and the identifier of the first session based on the device identification information and the information of the first session of the first UE is as follows: the second network element sends the device identification information to an authentication server function network element or a unified data management network element; the second network element receives the SUPI of the first UE sent by the authentication server function network element or the unified data management network element; the second network element sends the SUPI of the first UE and the information of the first session of the first UE to the unified data management network element; the second network element receives the identifier of the session management network element and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, the eleventh message and the twelfth message further include a second handover indication, where the second handover indication is used to indicate that the service data of the first session of the first UE is to be handed over to the first session of the second UE for transmission, or the second handover indication is used to indicate that the service data of the first session of the UE associated with the second UE is to be handed over to the first session of the second UE for transmission.

According to a thirteenth aspect, this application provides a method for processing service data, where the method includes:
The session management network element stores an association relationship between an identifier of a first session of the first UE and a SUPI of the second UE; the session management network element receives a twelfth message, where the twelfth message carries second information, the second information is used to indicate a first session of the second UE, and the twelfth message is used to request to hand over service data of the first session of the first UE to the first session of the second UE for transmission; in response to the twelfth message, the session management network element sends a first N4 session identifier and address information of the second access network device to a user plane function network element, where the first N4 session identifier is an N4 session identifier associated with the identifier of the first session of the first UE and the identifier of the first session of the second UE, and the first N4 session identifier and the address information of the second access network device are used to indicate that service data carried on the first IP address corresponding to the first N4 session identifier is to be sent to the second access network device, where the second access network device is configured to carry the first session of the second UE, and the first IP address is an IP address associated with the identifier of the first session of the first UE and the identifier of the first session of the second UE.

It is evident that, based on the method described in the thirteenth aspect, an association relationship between the first session of the first UE and the SUPI of the second UE can be established in advance, and subsequently, the switching of service data between UEs in the mobile communication device can be triggered according to the need. By establishing the association relationship between the first session of the first UE and the SUPI of the second UE, the first session of the first UE and the first session of the second UE can share the same IP address, ensuring that the IP address used for service data remains unchanged before and after the UE switching within the mobile communication device, thereby maintaining service continuity. Moreover, establishing the association relationship between the first session of the first UE and the first session of the second UE in advance facilitates the timely switching of service data to the second UE for transmission in the future.

In a possible embodiment, the session management network element may further send the address information of the user plane function network element to the second access network device; and/or the session management network element triggers the release of the first session of the first UE. In this way, the second access network device can send the service data of the first session of the second UE to the user plane function network element.

In a possible embodiment, the session management network element may further receive a tenth message, where the tenth message carries the SUPI of the first user UE, an identifier of the first session of the first UE, the SUPI of the second UE, and a second session establishment request, where the second session establishment request is used to request the establishment of the first session of the second UE; a specific implementation manner in which the session management network element stores the association relationship between the identifier of the first session of the first UE and the SUPI of the second UE is: in response to the tenth message, the session management network element stores the association relationship between the identifier of the first session of the first UE and the SUPI of the second UE.

Based on this possible embodiment, the first session of the second UE can be successfully established, and the association relationship between the first session of the first UE and the first session of the second UE can be successfully established.

In a possible embodiment, the tenth message is used to request to associate the first session of the second UE with the first session of the first UE.

In a possible embodiment, after the session management network element receives the tenth message and before the session management network element receives the twelfth message, the session management network element may further record that the user plane transmission channel of the first session of the first UE is in an activated state, and the user plane transmission channel of the first session of the second UE is in an inactivated state.

In a possible embodiment, the second information includes the SUPI of the second UE and an identifier of the first session, or the second information is information allocated by a session management network element for identifying the first session of the second UE.

In a possible embodiment, the twelfth message further includes a second handover indication, where the second handover indication is used to indicate that the service data of the first session of the first UE is handed over to the first session of the second UE for transmission, or the second handover indication is used to indicate that the service data of the first session of the UE associated with the second UE is handed over to the first session of the second UE for transmission.

In a possible embodiment, the session management network element may further receive the SUPI of the first UE, an identifier of the first session, a data network name DNN, single network slice selection assistance information S-NSSAI, a first session establishment request, and first indication information, where the first session establishment request is used to request to establish the first session of the first UE, the first indication information indicates that the service data of the first session of the first UE may be transmitted between different UEs; and determine that the service data corresponding to the first session of the first UE supports transmission between different UEs; and send second indication information, where the second indication information indicates that the service data corresponding to the first session of the first UE supports transmission between different UEs.

Based on this possible embodiment, the session management network element may feed back to the mobile communication device whether the service data of the first session of the first UE supports transmission between different UEs, which helps the mobile communication device accurately determine whether the service data of the first session can be transmitted between different UEs.

In a possible embodiment, a specific implementation manner in which the session management network element determines that the service data corresponding to the first session of the first UE supports transmission between different UEs is as follows:
The session management network element determines, based on the local configuration of the DNN, that the service data corresponding to the first session of the first UE supports transmission between different UEs; or
The session management network element determines, based on the subscription data or policy information corresponding to the first session of the first UE, that the service data corresponding to the first session of the first UE supports transmission between different UEs.

Based on this possible embodiment, the session management network element can accurately determine whether the service data corresponding to the first session of the first UE supports transmission between different UEs.

According to a fourteenth aspect, this application provides a method for processing service data, applied to a mobile communications device, where the mobile communications device includes first user equipment UE and second UE, and the method includes:
selecting, by the mobile communications device, the first UE according to the steering policy information, and establishing a first session for the first UE;
the steering policy information includes: the first UE is a UE preferentially selected, or a UE priority list (a priority of the first UE is higher than that of the second UE); or
the steering policy information includes: the first network is a network preferentially selected, or a network priority list (a priority of the first network is higher than that of the second network), where the first network is a network on which the first UE camps, and the second network is a network on which the second UE camps; or
the steering policy information includes: the first RAT is a preferentially selected RAT, or a RAT priority list (a priority of the first RAT is higher than that of the second RAT), where the first RAT is a RAT supported by the first access network device, the second RAT is a RAT supported by the second access network device, the first access network device corresponds to the first UE, and the second access network device corresponds to the second UE; or,
The direction policy information includes: the second UE is a preferentially selected UE, or a UE priority list (the second UE has a higher priority than the first UE). Correspondingly, the direction policy information indicates that the second UE is preferentially selected to transmit the service data of the mobile communication device; or
The direction policy information includes: the second network is a preferentially selected network, or a network priority list (a priority of the second network is higher than that of the first network), where the first network is a network on which the first UE camps, and the second network is a network on which the second UE camps; or
The direction policy information includes: the second RAT is a preferentially selected RAT, or a RAT priority list (a priority of the second RAT is higher than that of the first RAT), where the first RAT is a RAT supported by the first access network device, the second RAT is a RAT supported by the second access network device, the first access network device corresponds to the first UE, and the second access network device corresponds to the second UE.

The mobile communication device transmits the service data through the first session of the first UE.

For example, it is assumed that the direction policy information includes that the second UE is a preferentially selected UE, or a UE priority list (a priority of the second UE is higher than that of the first UE), or the second network is a preferentially selected network, or a network priority list (a priority of the second network is higher than that of the first network), or the second network is a preferentially selected network, or a network priority list (a priority of the second network is higher than that of the first network). If the signal quality between the mobile communication device and the second access network device is poor, for example, the signal quality is lower than a specified signal threshold, the mobile communication device does not select the second UE. The mobile communication device selects the first UE based on the direction policy information and the signal quality between the mobile communication device and the first access network device, where the signal quality between the mobile communication device and the first access network device is good or higher than a specified signal threshold.

Based on the method described in the fourteenth aspect, a UE can be properly selected from multiple UEs in the mobile communication device to transmit service data. For example, the mobile communication device has a limited capability and cannot support service data transmission for multiple UEs at the same time.

In a possible embodiment, the mobile communication device may further send a first message to the second network element according to the direction policy information, where the first message is used to request to hand over the service data of the first session of the first UE to the second session of the second UE for transmission.

Based on this possible embodiment, the mobile communication device can determine, based on the direction policy information, that the service data of the first session can be transmitted between different UEs, without the need to additionally send indication information to indicate whether the mobile communication device can transmit the service data of the first session between different UEs, which helps save the transmission overhead of the indication information.

In a possible embodiment, the mobile communication device may further send a third message to a second network element according to the direction policy information, where the third message is used to request to switch the service data of the first session of the first UE to the first session of the second UE for transmission.

Based on this possible embodiment, the mobile communication device can determine, based on the direction policy information, that the service data of the first session can be transmitted between different UEs, without the need to additionally send indication information to indicate whether the mobile communication device can transmit the service data of the first session between different UEs, which helps save the transmission overhead of the indication information.

In a possible embodiment, the mobile communication device may further send a fifth message to the second network element according to the direction policy information, where the fifth message carries information about the first session of the first UE, an identifier of the second session of the second UE, and a second session establishment request, where the second session establishment request is used to request to establish the second session of the second UE.

Based on this possible embodiment, the mobile communication device can determine, based on the direction policy information, that the service data of the first session can be transmitted between different UEs, without the need to additionally send indication information to indicate whether the mobile communication device can transmit the service data of the first session between different UEs, which helps save the transmission overhead of the indication information.

In a possible embodiment, the mobile communication device may further send a ninth message to a second network element according to the direction policy information, where the ninth message carries information about the first session of the first UE and a second session establishment request, and the second session establishment request is used to request to establish the first session of the second UE.

Based on this possible embodiment, the mobile communication device can determine, based on the directional policy information, that the service data of the first session can be transmitted between different UEs, without the need to additionally send indication information to indicate whether the mobile communication device can transmit the service data of the first session between different UEs. This helps save the transmission overhead of the indication information.

Based on the method described in the fourteenth aspect, when the capability of the mobile communication device is limited and cannot support simultaneous service data transmission for two UEs, a UE can be reasonably selected to transmit the service data.

For the beneficial effects of the possible embodiments of the fifth aspect to the fourteenth aspect, refer to the beneficial effects of the first aspect to the fourth aspect, which will not be repeated herein.

According to a fifteenth aspect, this application provides a communication apparatus. For example, the communication apparatus may be a mobile communication device, a first network element, a second network element, or a session management network element, or may be a module (for example, a processor, a chip, or a chip system) applied to a mobile communication device, a first network element, a second network element, or a session management network element, or may be a logical node, a logical module, or software that can implement all or a part of the functions of the mobile communication device, the first network element, the second network element, or the session management network element. The communication apparatus includes a module/unit configured to perform any one of the methods in the first aspect to the fourteenth aspect and the possible implementations thereof.

According to a sixteenth aspect, this application provides a communications apparatus, including a processor, where the processor is coupled to a memory, the memory is configured to store a program or an instruction, and when the program or the instruction is executed by the processor, the apparatus is enabled to perform the method according to any one of the first aspect to the fourteenth aspect.

According to a seventeenth aspect, this application provides a chip. The chip includes a processor and an interface, where the processor is coupled to the interface; the interface is configured to receive or output a signal; and the processor is configured to execute code instructions, so that the chip performs the method according to any one of the first aspect to the fourteenth aspect.

According to an eighteenth aspect, this application provides a computer-readable storage medium, where the computer-readable storage medium stores computer-executable instructions, and when the computer-executable instructions are invoked, any one of the first aspect to the fourteenth aspect is performed.

According to a nineteenth aspect, this application provides a computer program product, where the computer program product includes computer program code, and when the computer program code is run, any one of the first aspect to the fourteenth aspect is performed.

According to a twentieth aspect, this application provides a communications system, where the communications system includes a mobile communications device configured to perform the method according to the first aspect, a second network element configured to perform the method according to the second aspect, and a first network element configured to perform the method according to the third aspect and a session management network element configured to perform the method according to the fourth aspect. Alternatively, the communications system includes a mobile communications device configured to perform the method according to the fifth aspect, a second network element configured to perform the method according to the sixth aspect, and a first network element configured to perform the method according to the third aspect and a session management network element configured to perform the method according to the seventh aspect. Alternatively, the communications system includes a mobile communications device configured to perform the method according to the eighth aspect, a second network element configured to perform the method according to the ninth aspect, and a first network element configured to perform the method according to the third aspect and a session management network element configured to perform the method according to the tenth aspect. Alternatively, the communications system includes a mobile communications device configured to perform the method according to the eleventh aspect, a second network element configured to perform the method according to the twelfth aspect, and a first network element configured to perform the method according to the third aspect and a session management network element configured to perform the method according to the thirteenth aspect.

### Description of the Drawings

FIG. 1 is a schematic diagram of switching and transmitting service data between different UEs according to this application;
FIG. 2 is a schematic diagram of a 5G communications system according to this application;
FIG. 3 is a schematic diagram of a system architecture according to this application;
FIG. 4 is a schematic flowchart of a method for processing service data according to this application;
FIG. 5 is a schematic diagram of a scenario in which a session of first UE and a session of second UE share a same IP address according to this application;
FIG. 6 is a schematic flowchart of a method for processing service data according to this application;
FIG. 7 is a schematic flowchart of a method for processing service data according to this application;
FIG. 8 is a schematic flowchart of a method for processing service data according to this application;
FIG. 9 is a schematic flowchart of a method for processing service data according to this application;
FIG. 10 is a schematic flowchart of a method for processing service data according to this application;
FIG. 11 is a schematic flowchart of a method for processing service data according to this application;
FIG. 12 is a schematic flowchart of a method for processing service data according to this application;
FIG. 13 is a schematic flowchart of a method for processing service data according to this application;
FIG. 14 is a schematic structural diagram of a communications apparatus 1400 according to this application;
FIG. 15 is a schematic structural diagram of another communication apparatus 1500 according to this application.

### Specific Implementation Manners

The following further describes specific embodiments of this application in detail with reference to the accompanying drawings.

In the specification, claims, and accompanying drawings of this application, the terms "first", "second", and the like are intended to distinguish between different objects, but do not indicate a particular order. In addition, the terms "include", "have", and any other variant thereof are intended to cover a non-exclusive inclusion. For example, a process, method, system, product, or device that includes a series of steps or units is not limited to those listed steps or units, but optionally further includes other steps or units that are not listed, or optionally further includes other inherent steps or units of these processes, methods, systems, products, or devices.

The term "embodiment" mentioned in this specification means that a particular feature, structure, or characteristic described with reference to the embodiments may be incorporated into at least one embodiment of this application. The appearance of this phrase in various locations in this specification does not necessarily refer to the same embodiment, nor is it an independent or optional embodiment exclusive from another embodiment. A person skilled in the art clearly and implicitly understands that embodiments described in this specification may be combined with other embodiments.

In this application, "at least one (item)" means one or more, "a plurality of' means two or more, "at least two (items)" means two or three or more, and "and/or" is used to describe an association relationship between associated objects, and indicates that three relationships may exist. For example, "A and/or B" may indicate the following three cases: only A exists, only B exists, and both A and B exist, where A and B may be singular or plural. The character "/" generally indicates an "or" relationship between the associated objects. "At least one of the following" or a similar expression thereof means any combination of these items, including any combination of a single item or a plurality of items. For example, "at least one of a, b, or c" may indicate a, b, c, "a and b", "a and c", "b and c", or "a, b, and c", where a, b, and c may be singular or plural.

To ensure continuity of service data when service data is transmitted between different UEs, embodiments of this application provide a method for processing service data and a communications apparatus.

To better understand the embodiments of this application, the 5G communications system is first described below. As shown in FIG. 2, network functions and entities included in the 5G communications system mainly include a UE, (R)AN, UPF, DN, AUSF, AMF, SMF, NSSF, NEF, NRF, PCF, UDM, and AF. For full names of these network functions and entities, refer to the following descriptions. FIG. 2 shows interaction relationships between network functions and entities and corresponding interfaces. For example, the UE and the AMF may interact with each other through an N1 interface, and an interaction message is referred to as an N1 message. Some interfaces are implemented by using a service-based interface manner.

The UE, (R)AN, UPF, and DN in FIG. 2 are generally referred to as data plane network functions and entities. A user's data traffic may be transmitted through a PDU session established between the UE and the DN, and the transmission passes through the (R)AN and the UPF, which are two network function entities. The other network functions and entities are referred to as control plane network functions and entities, and are mainly responsible for functions such as authentication and authorization, registration management, session management, mobility management, and policy control, thereby implementing reliable and stable transmission of user layer traffic. The user plane is used to carry service data, and the control plane is used to carry signaling messages.
1. User equipment (user equipment, UE): may also be referred to as terminal equipment. For example, user equipment may be a handheld terminal, a laptop computer, a cellular phone, a smartphone, a tablet computer, a handheld device, an AR device, a VR device, a machine type communication terminal, or other devices that can access a network. The UE communicates with the access network device through some air interface technology (such as NR or LTE technology). UEs can also communicate with each other through some air interface technology (such as NR or LTE technology). In vehicle-to-everything communication, the communication terminal on a vehicle is a type of UE, and a road side unit (Road Side Unit, RSU) can also function as a type of UE. An unmanned aerial vehicle (UAV) equipped with a communication terminal can be considered as a type of UE.
2. Radio Access Network (radio access network, RAN) equipment: is primarily responsible for functions such as radio resource management, quality of service management, data compression, and encryption on the air interface side. The access network device may include various forms of base stations, such as a macro base station, a micro base station, a relay station, an access point, and the like. In systems using different radio access technologies, the names of devices with base station functions may vary. For example, in a 5th generation (5th generation, 5G) system, the device is referred to as a gNB.
3. User Plane Function (user plane function, UPF) Network Element: Responsible for forwarding and receiving user data in the UE. It can receive user data from the data network and transmit it to the UE through access network devices; the UPF network element can also receive user data from the UE through access network devices and forward it to the data network. The transmission resources and scheduling functions provided by the UPF network element for the UE are managed and controlled by the SMF network element.
4. Data Network (data network, DN): Also known as Packet Data Network (packet data network, PDN), which is typically a network located outside the operator's network, such as a third-party network. An operator network can connect to multiple DNs, on which various services can be deployed to provide data and/or voice services to UEs.
5. Authentication Server Function (authentication server function, AUSF) Network Element: Supports access authentication for both 3GPP and non-3GPP networks.
6. Access and Mobility Management Function (access and mobility management function, AMF) Network Element: This is a core network element primarily responsible for the signaling processing part, including functions such as access control, mobility management, attach and detach procedures, and gateway selection. When the AMF network element provides services for a session in the UE, it offers control plane storage resources for that session to store the session identifier, the identifier of the SMF network element associated with the session identifier, and other related information.
7. Session Management Function (session management function, SMF) Network Element: Responsible for user plane network element selection, user plane network element redirection, Internet Protocol (internet protocol, IP) address allocation, establishment, modification, and release of bearers, as well as QoS control.
8. Network Slice Selection Function (network slice selection function, NSSF) Network Element: Primarily responsible for network slice selection, determining the network slice instances that a UE is allowed to access based on the UE's slice selection assistance information, subscription information, and other relevant data.
9. Network Exposure Function (network exposure function, NEF) Network Element: Primarily supports secure interaction between 3GPP networks and third-party applications.
10. Network Repository Function (network repository function, NRF) Network Element: Supports the registration and discovery of network functions.
11. Policy Control Function (policy control function, PCF) Network Element: Responsible for decision-making in policy control, providing policy rules for control plane functions, and offering traffic-based charging control functions.
12. Unified Data Management (unified data management, UDM) Network Element: Primarily responsible for managing the subscription data of UEs, including the storage and management of UE identifiers, UE access authorization, and more.
13. Application Function (application function, AF) Network Element: Primarily supports interaction with the 3GPP core network to provide services, such as influencing data routing decisions, policy control functions, or providing some third-party services to the network side.

To better understand embodiments of this application, the following describes a system architecture of embodiments of this application:
The technical solutions in embodiments of this application may be applied to various communications systems, for example, a global system of mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communications system, a 5th generation (5th generation, 5G) system or a new radio (new radio, NR) system, and a future communications system.

Referring to FIG. 3, FIG. 3 is a schematic diagram of a system architecture according to an embodiment of this application. As shown in FIG. 3, the system architecture includes a mobile communication device, a first access network device, a second access network device, a first network element, a second network element, a session management network element, and a user plane function network element. As shown in FIG. 3, the mobile communication device includes first UE and second UE. The first UE may communicate with the first network element through the first access network device, the first network element may communicate with the session management network element, and the session management network element may communicate with the user plane function network element. The second UE may communicate with the second network element through the second access network device, and the second network element may communicate with the session management network element. Optionally, the mobile communication device may be a capability-limited device, for example, the mobile communication device has a set of wireless transceiver devices. When the first UE communicates with the first access network device, the second UE does not communicate with the second access network device, that is, the first UE and the second UE are not simultaneously connected to the access network device, or the first UE and the second UE are not simultaneously in a connected state, or the first UE and the second UE do not simultaneously access the network. For example, the solid line in FIG. 3 indicates that the first UE communicates with the first access network device, and the dashed line indicates that the second UE does not communicate with the second access network device. Therefore, when the first UE transmits service data, the second UE does not transmit service data, that is, the first UE and the second UE do not simultaneously transmit service data.
1. A mobile communication device may also be referred to as a dual steer device (dual steer device). Optionally, the mobile communication device may further include more UEs. This is not limited in this embodiment of this application. In this embodiment of this application, the two UEs included in the mobile communication device may be two devices/apparatuses. Alternatively, the two UEs included in the mobile communication device may be two universal subscriber identity modules (universal subscriber identity module, USIM), for example, the first UE may be a first USIM, and the second UE may be a second USIM. Alternatively, the mobile communication device is a terminal device, the terminal device includes two USIMs, the first UE corresponds to the first USIM, and the second UE corresponds to the second USIM. Correspondingly, in this embodiment of this application, the mobile communication device may be replaced with a terminal device, the UE may be replaced with a USIM, the first UE may be replaced with a first USIM, and the second UE may be replaced with a second USIM. Alternatively, the mobile communication device is a dual steer device, the dual steer device includes two USIMs, the first UE corresponds to the first USIM, and the second UE corresponds to the second USIM. Correspondingly, in this embodiment of this application, the mobile communication device may be replaced with a dual steer device, the UE may be replaced with a USIM, the first UE may be replaced with a first USIM, and the second UE may be replaced with a second USIM.
2. First access network device and second access network device: The first UE camps on a first network, and the second UE camps on a second network, that is, the first UE registers with the first network, and the second UE registers with the second network. The first network and the second network may be the same or different. For example, the network is a public land mobile network (public land mobile network, PLMN), the first network is a first PLMN, and the second network is a second PLMN. After the first UE and the second UE camp on the network, the first UE and the second UE do not simultaneously connect to the access network device, that is, the first UE and the second UE do not simultaneously be in a connected state, or the first UE and the second UE do not simultaneously access the network. For example, when the first UE is in the connected state, the second UE is in an idle state; or when the second UE is in the connected state, the first UE is in an idle state. The first access network device is an access network device corresponding to the first UE, that is, the first UE may connect to the first network by using the first access network device. The second access network device is an access network device corresponding to the second UE, that is, the second UE may connect to the second network by using the second access network device. Optionally, the first access network device and the second access network device may be a same device or different devices.

The access network device in the embodiments of this application is mainly responsible for functions such as radio resource management, service quality management, data compression, and data encryption on an air interface side. The access network device may include base stations in various forms, for example, a macro base station, a micro base station, a relay station, an access point, and the like. For example, the access network device may be a base station (base station), an evolved NodeB (evolved NodeB, eNodeB), a next generation NodeB (next generation NodeB, gNB), a next generation base station in a sixth generation (6th generation, 6G) mobile communications system, a base station in a future mobile communications system, or the like. All or some of the functions of the access network device in this application may also be implemented by software running on hardware, or by virtualized functions instantiated on a platform (for example, a cloud platform). The access network device in this application may alternatively be a logical node, a logical module, or software that can implement all or some of the functions of the access network device. In the embodiments of this application, a form of the access network device is not limited. An apparatus configured to implement a function of the access network device may be the access network device, or may be an apparatus that can support the access network device in implementing the function, for example, a chip system. The apparatus may be installed in the access network device or used in conjunction with the access network device. The radio access technology (radio access technology, RAT) types supported by the first access network device and the second access network device may be the same or different. In other words, the radio access technologies (radio access technology, RAT) provided by the first access network device and the second access network device may be the same or different. For example, the radio access technology type may be evolved universal terrestrial radio access (evolved universal terrestrial radio access, E-UTRA), non-3GPP (Non-3GPP), 5G NR, 5G NR (satellite), or 6G. 5G NR (satellite) may be further divided into low earth orbit (low earth orbit, LEO), medium earth orbit (medium earth orbit, MEO), and geostationary earth orbit (geostationary earth orbit, GEO).

3. First network element and second network element: The first network element and the second network element are core network devices. The first network element may provide mobility management, access management, registration management, or session-related services for the first UE. The second network element may provide mobility management, access management, registration management, or session-related services for the second UE. The first UE may communicate with the first network element via the first access network device. The second UE may communicate with the second network element via the second access network device.

For example, the first network element may receive a registration request message sent by the first UE and perform relevant processing for the registration of the first UE; the second network element may receive a registration request message sent by the second UE and perform relevant processing for the registration of the second UE. For another example, the first network element may receive a request message sent by the first UE for establishing a session and perform relevant processing for session establishment; the second network element may receive a request message sent by the second UE for establishing a session and perform relevant processing for session establishment.

In a 5G system, the first network element and the second network element may be AMF network elements. In a 6G system or a system after 6G, the first network element and the second network element may be referred to as AMF network elements or other names, which is not limited in the embodiments of this application. Optionally, the first network element and the second network element may be the same network element or different network elements.
4. Session management network element: responsible for user plane network element selection, user plane network element redirection, Internet Protocol (internet protocol, IP) address allocation, establishment, modification, and release of bearers, and QoS control. In a 5G system, the session management network element may be an SMF network element. In a 6G system or a system after 6G, the session management network element may be referred to as an SMF network element or by another name, which is not limited in the embodiments of this application.
5. User plane function network element: responsible for forwarding and receiving user data in the UE. It can receive user data from the data network and transmit it to the UE through an access network device; it can also receive user data from the UE through an access network device and forward it to the data network. In a 5G system, the user plane function network element may be a UPF network element. In a 6G system or a system after 6G, the user plane function network element may be referred to as a UPF network element or by another name, which is not limited in the embodiments of this application.

The following further describes the service data processing method and the communication apparatus with reference to the accompanying drawings. It may be understood that, in the embodiments of this application, an example is used to illustrate the interaction diagram by using a mobile communication device, a first access network device, a second access network device, a first network element, a second network element, a session management network element, and a user plane function network element as the execution entities of the interaction diagram, but the execution entities of the interaction diagram are not limited in this application. For example, the mobile communication device (or the first access network device, the second access network device, the first network element, the second network element, the session management network element, or the user plane function network element) in the method provided in this application may also be a chip, a chip system, or a processor applied to a mobile communication device (or the first access network device, the second access network device, the first network element, the second network element, the session management network element, or the user plane function network element), or may be a logical node, a logical module, or software that can implement all or a part of the functions of the mobile communication device (or the first access network device, the second access network device, the first network element, the second network element, the session management network element, or the user plane function network element).

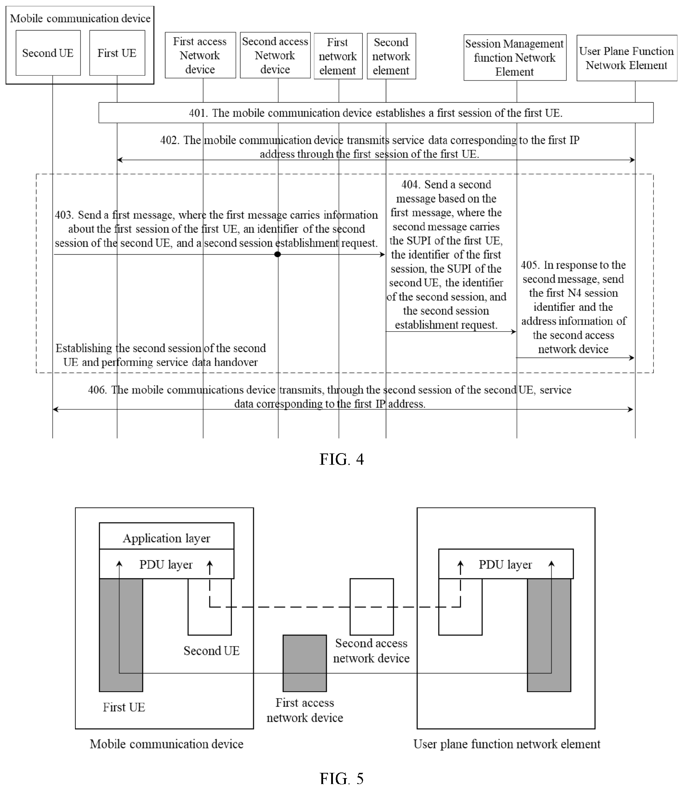

Referring to FIG. 4, FIG. 4 is a schematic flowchart of a method for processing service data according to an embodiment of this application. In the method described in FIG. 4, when establishing a second session of the second UE, a mobile communications device triggers the service data to be transmitted from the first session of the first UE to the second session of the second UE, and the first session of the first UE and the second session of the second UE share the same IP address. Specifically:
401. The mobile communication device establishes a first session for the first UE.

The first session is associated with a first Internet Protocol (internet protocol, IP) address. In other words, the first session is used to transmit service data corresponding to the first IP address. The first IP address may be an IP address allocated to the first UE by a session management network element or a user plane function network element during the process of establishing the first session for the first UE. The session mentioned throughout this embodiment of this application may be a PDU session, or may also be referred to by another session name, which is not limited in this embodiment of this application.

In a possible embodiment, the mobile communications device may select the first UE based on the steering policy (steering policy) information, and establish the first session for the first UE.

Optionally, the mobile communications device may select the first UE based on the steering policy information, where the first UE is configured to transmit service data of the mobile communications device. When a service of the mobile communications device is triggered or there is service data of the mobile communications device to be sent, the mobile communications device determines, based on a UE route selection policy (UE route selection policy, URSP) of the first UE, a session parameter corresponding to the service of the mobile communications device, and establishes the first session for the first UE by using the session parameter.

There are the following six possible implementations for the steering policy information:
(1) The steering policy information includes: the first UE is a preferentially selected UE, or a UE priority list (a priority of the first UE is higher than a priority of the second UE). Correspondingly, the steering policy information indicates that the first UE is preferentially selected or more likely to be selected to transmit the service data of the mobile communications device. The first UE being a preferentially selected UE may be replaced with the first UE being a primary UE (primary UE).
(2) The direction policy information includes: the first network is a network preferentially selected, or a network priority list (the first network has a higher priority than the second network), where the first network is a network on which the first UE camps, and the second network is a network on which the second UE camps. Correspondingly, the direction policy information indicates that a UE which preferentially selects or is more inclined to select to access the first network is used to transmit the service data of the mobile communication device. The first network being a network preferentially selected may be replaced with the first network being a primary network (primary network).
(3) The direction policy information includes: the first RAT is a preferentially selected RAT, or an RAT priority list (the first RAT has a higher priority than the second RAT), where the first RAT is an RAT supported by the first access network device, and the second RAT is an RAT supported by the second access network device. Correspondingly, the direction policy information indicates that a UE which preferentially selects or is more inclined to select to access the first RAT is used to transmit the service data of the mobile communication device. The first RAT being a preferentially selected RAT may be replaced with the first RAT being a primary RAT (primary RAT).

Optionally, the mobile communication device may select the first UE based on the direction policy information and the signal quality between the mobile communication device and the first access network device. For example, the mobile communication device selects the first UE only when the signal quality between the mobile communication device and the first access network device is higher than a specified signal threshold. If the signal quality between the mobile communication device and the first access network device is lower than the specified signal threshold, the mobile communication device does not select the first UE, but instead selects the second UE based on the direction policy information and the signal quality between the mobile communication device and the second access network device.
(4) The direction policy information includes: the second UE is a preferentially selected UE, or a UE priority list (the second UE has a higher priority than the first UE). Correspondingly, the direction policy information indicates that the second UE should be preferentially selected to transmit the service data of the mobile communication device. The second UE being a preferentially selected UE may be replaced with the second UE being a primary UE.
(5) The direction policy information includes: the second network is a preferentially selected network, or a network priority list (the second network has a higher priority than the first network); where, the first network is the network on which the first UE camps, and the second network is the network on which the second UE camps. Correspondingly, the direction policy information indicates that the UE should be preferentially selected from the second network to transmit the service data of the mobile communication device. The second network being a preferentially selected network may be replaced with the second network being a primary network.
(6) The direction policy information includes: the second RAT is a preferentially selected RAT, or a RAT priority list (the second RAT has a higher priority than the first RAT), where the first RAT is a RAT supported by the first access network device, and the second RAT is a RAT supported by the second access network device. Correspondingly, the direction policy information indicates that a UE of which access to the second RAT is preferentially selected is used to transmit the service data of the mobile communication device. "The second RAT is a preferentially selected RAT" may be replaced with "the second RAT is a primary RAT."

For example, it is assumed that the direction policy information includes: the second UE is a preferentially selected UE, or a UE priority list (the second UE has a higher priority than the first UE), or the second network is a preferentially selected network, or a network priority list (the second network has a higher priority than the first network), or the second network is a preferentially selected network, or a network priority list (the second network has a higher priority than the first network). If the signal quality between the mobile communication device and the second access network device is poor, for example, the signal quality is lower than a specified signal threshold, the mobile communication device does not select the second UE. The mobile communication device selects the first UE based on the direction policy information and the signal quality between the mobile communication device and the first access network device, where the signal quality between the mobile communication device and the first access network device is good or higher than the specified signal threshold.

Based on this possible embodiment, a UE can be reasonably selected from multiple UEs in a mobile communication device to transmit service data. For example, the mobile communication device may have limited capabilities and cannot support simultaneous service data transmission by multiple UEs.

Optionally, the mobile communication device may receive the steering policy information from the policy control function network element when the first UE or the second UE is registered. Optionally, the mobile communication device may receive the steering policy information from the first network element or the second network element when the first UE or the second UE is registered, where the first network element or the second network element receives the steering policy information from the policy control function network element. Optionally, the first UE is a primary UE (primary UE) in the mobile communication device, and the mobile communication device may receive the steering policy information from the first network element when the first UE is registered, where the first network element receives the steering policy information from the policy control function network element. In a 5G system, the policy control function network element may be a PCF network element. In a 6G system or a system after 6G, the policy control function network element may be referred to as a PCF network element or by another name, which is not limited in the embodiments of this application.

In a possible embodiment, a specific implementation manner in which the mobile communication device establishes the first session of the first UE is as follows: the mobile communication device sends an identifier of the first session of the first UE, a data network name (data network name, DNN), single-network slice selection assistance information (single-network slice selection assistance information, S-NSSAI), a first session establishment request (session establishment request), and first indication information to the first network element, where the first session establishment request is used to request to establish the first session of the first UE. For example, the first session establishment request is a PDU session establishment request (PDU session establishment request). The first indication information indicates that service data of the first session of the first UE may be transmitted between different UEs. Optionally, the mobile communication device determines, based on the URSP of the first UE, a session parameter corresponding to a service of the mobile communication device, such as a DNN or an S-NSSAI.

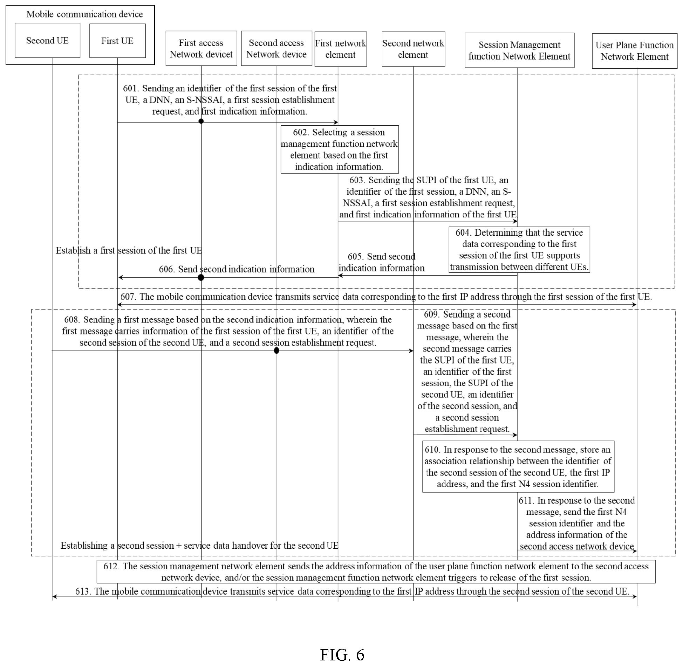

Accordingly, the first network element may receive this information. After receiving this information, the first network element selects a session management network element based on the first indication information, where the session management network element supports the transmission of service data between different UEs. The first network element then sends the SUPI of the first UE, the identifier of the first session, the DNN, the S-NSSAI, and the first session establishment request to the session management network element. It can be seen that by sending the first indication information to the first network element, the first network element can select, based on this first indication information, a session management network element that supports the transmission of service data between different UEs, thereby facilitating subsequent processing. For example, for related descriptions, refer to the descriptions under steps 601 to 602 in the embodiment corresponding to FIG. 6 below, which will not be repeated here. Of course, the mobile communication device may also establish the first session of the first UE in other ways, which is not limited in this embodiment of this application.

402. The mobile communication device transmits service data corresponding to the first IP address through the first session of the first UE.

In the embodiments of this application, after the mobile communication device establishes the first session of the first UE, the service data corresponding to the first IP address may be transmitted through the first session of the first UE. The first session of the first UE is transmitted/borne by the first access network device.

403. The mobile communication device sends a first message to a second network element, where the first message carries information about a first session of the first UE, an identifier of a second session of the second UE, and a second session establishment request. The second session establishment request is used to request the establishment of the second session of the second UE, and the first message is used to request to hand over the service data of the first session of the first UE to the second session of the second UE for transmission. Correspondingly, the second network element may receive the first message.

Among them, steps 403 to 405 represent the process of establishing the second session of the second UE and the process of switching service data.

In the embodiments of this application, the second UE in the mobile communication device may send a first message to a second network element through the second access network device.

In a possible embodiment, the first message may be a NAS message (NAS Message). Optionally, the second session establishment request (session establishment request) may include an identifier of the second session. For example, the second session establishment request is a PDU session establishment request (PDU session establishment request).

In a possible embodiment, a trigger condition for the mobile communication device to send the first message to the second network element may be that the signal quality between the mobile communication device and the first access network device deteriorates, or the signal quality between the mobile communication device and the first access network device is lower than a first threshold, or a quality of service (quality of service, QoS) requirement of a first session of the first UE is not met.

Optionally, the deterioration of signal quality between the mobile communication device and the first access network device may be that the signal quality between the mobile communication device and the first access network device decreases by an amount greater than or equal to a first value.

Based on this possible embodiment, when the signal quality between the first UE and the first access network device deteriorates or becomes poor, or when the QoS requirements of the first session of the first UE are not met, a timely handover to the second UE can be performed for the transmission of service data, thereby ensuring the transmission quality of the service data.

In another possible embodiment, the trigger condition for the mobile communication device to send the first message to the second network element may be: the signal quality between the mobile communication device and the first access network device deteriorates, or the signal quality between the mobile communication device and the first access network device is below a first threshold, or the quality of service (QoS) requirement for the first session of the first UE is not met; and the signal quality between the mobile communication device and the second access network device is above a second threshold.

Based on this possible embodiment, when the signal quality between the first UE and the first access network device deteriorates or becomes poor, or when the QoS requirements of the first session of the first UE are not met, and the signal quality between the second UE and the second access network device is relatively good, a timely handover to the second UE can be performed for the transmission of service data, thereby ensuring the transmission quality of the service data.

In a possible embodiment, the mobile communication device may further receive second indication information, where the second indication information indicates that the service data of the first session is allowed to be transmitted between different UEs, or indicates that the service data of the mobile communication device is allowed to be transmitted between different UEs; the mobile communication device may send the first message based on the second indication information. That is, the mobile communication device sends the first message only when the service data of the first session is allowed to be transmitted between different UEs, or when the service data of the mobile communication device is allowed to be transmitted between different UEs. Based on this possible embodiment, it is beneficial for the mobile communication device to accurately determine whether the service data of the first session can be transmitted between different UEs.

Optionally, the second indication information indicates that the service data of the mobile communication device is allowed to be transmitted between different UEs, that is, it indicates that all service data of the mobile communication device is allowed to be transmitted between different UEs, or it indicates that the service data of all sessions of the mobile communication device is allowed to be transmitted between different UEs. The mobile communication device may also receive the second indication information from the policy control network element when the first UE or the second UE is registered. Correspondingly, the policy control network element may send the second indication information to the mobile communication device.

In a possible embodiment, when sending the SUPI of the first UE, the identifier of the first session, the DNN, the S-NSSAI, and the first session establishment request to the session management network element, the first network element may also send first indication information, as described above, where the first indication information indicates that the service data of the first session of the first UE may be transmitted between different UEs. After receiving this information, if the session management network element determines that the service data corresponding to the first session of the first UE supports transmission between different UEs, the session management network element sends second indication information to the first network element, so that the second network element sends the second indication information to the mobile communication device, where the second indication information indicates that the service data corresponding to the first session of the first UE supports transmission between different UEs. After receiving the second indication information, the mobile communication device may send the first message based on the second indication information.

In other words, if the second indication information indicates that the service data of the first session is allowed to be transmitted between different UEs, the mobile communication device may receive the second indication information from the session management network element during the process of establishing the first session. For example, for related descriptions, refer to the descriptions under steps 601 to 606 in the embodiment corresponding to FIG. 6, which will not be repeated here.

In a possible embodiment, the mobile communication device sends the first message to the second network element based on the steering policy information. Based on this possible embodiment, the mobile communication device can determine, based on the steering policy information, that the service data of the first session can be transmitted between different UEs, without the need to additionally send indication information to indicate whether the mobile communication device can transmit the service data of the first session between different UEs. This helps save the transmission overhead of the indication information.

For example, the steering policy information includes: a UE priority list (the first UE has a higher priority than the second UE). Since the steering policy information includes the second UE, it indicates that the mobile communication device is allowed to transmit service data through the second UE, although the priority of the second UE is lower than that of the first UE. Therefore, the mobile communication device may send the first message to switch the service data to the second UE for transmission. Correspondingly, if the steering policy information only includes the first UE and does not include the second UE, the mobile communication device cannot send the first message.

For example, the steering policy information includes a network priority list (the first network has a higher priority than the second network). Because the steering policy information includes the second network, it indicates that the mobile communication device is allowed to transmit service data through the second network, but the priority of the second network is lower than that of the first network. Therefore, the mobile communication device may send the first message to hand over the service data to the second UE for transmission. Correspondingly, if the steering policy information includes only the first network and does not include the second network, the mobile communication device cannot send the first message.

For example, the steering policy information includes an RAT priority list (the first RAT has a higher priority than the second RAT). Because the steering policy information includes the second network, it indicates that the mobile communication device is allowed to transmit service data through the second RAT, but the priority of the second RAT is lower than that of the first RAT. Therefore, the mobile communication device may send the first message to hand over the service data to the second UE for transmission. Correspondingly, if the steering policy information includes only the first RAT and does not include the second RAT, the mobile communication device cannot send the first message.

When the direction policy information includes a UE priority list (a priority of the second UE is higher than that of the first UE), or when the direction policy information includes a network priority list (a priority of the second network is higher than that of the first network), or when the direction policy information includes an RAT priority list (a priority of the second RAT is higher than that of the first RAT), the same applies, and details are not described herein again.

Furthermore, the mobile communication device sends the first message only when the signal quality between the mobile communication device and the second access network device is good or higher than a specified signal threshold.

Optionally, the first message further includes a session parameter corresponding to the second session, for example, a DNN or an S-NSSAI.

For example, the mobile communication device determines, based on the URSP of the second UE, the session parameter corresponding to the second session of the second UE. Optionally, the mobile communication device sends the first message to switch the service data to the second session of the second UE for transmission only when the session parameter corresponding to the second session of the second UE is the same as the session parameter corresponding to the first session of the first UE.

For another example, the mobile communication device generates the session parameter corresponding to the second session based on the session parameter of the first session. Optionally, the session parameter corresponding to the second session is the same as the parameter of the first session, that is, the mobile communication device sets the session parameter corresponding to the second session to the session parameter of the first session, or uses the session parameter of the first session of the first UE as the session parameter corresponding to the second session of the second UE.

Optionally, the mobile communication device generates, based on the second indication information, the session parameter corresponding to the second session based on the session parameter of the first session, or sets the session parameter corresponding to the second session to the session parameter of the first session. It should be understood that in this case, the mobile communication device does not need to determine the session parameter corresponding to the second session based on the URSP of the second UE. In other words, when the service data allows for switching between different UEs, the session parameter corresponding to the second session may be directly set to the session parameter of the first session, so that the mobile communication device can send the first message.

Optionally, the mobile communication device generates, based on the session parameter of the first session according to the direction policy information, the session parameter corresponding to the second session, or sets the session parameter corresponding to the second session to the session parameter of the first session, so that the mobile communication device may send the first message. It should be understood that in this case, the mobile communication device does not need to determine the session parameter corresponding to the second session based on the URSP of the second UE.

For example, the direction policy information includes a UE priority list (the first UE has a higher priority than the second UE). Because the direction policy information includes the second UE, it indicates that the mobile communication device is allowed to transmit service data through the second UE, but the second UE has a lower priority than the first UE. Therefore, the session parameter corresponding to the second session may be directly set to the session parameter of the first session, so that the mobile communication device may send the first message.

For example, the direction policy information includes a network priority list (the first network has a higher priority than the second network). Because the direction policy information includes the second network, it indicates that the mobile communication device is allowed to transmit service data through the second network, but the second network has a lower priority than the first network. Therefore, the session parameter corresponding to the second session may be directly set to the session parameter of the first session, so that the mobile communication device may send the first message.

For example, the steering policy information includes an RAT priority list (where the first RAT priority is higher than the second RAT priority). Since the steering policy information includes the second network, it indicates that the mobile communication device is allowed to transmit service data through the second RAT, although the priority of the second RAT is lower than that of the first RAT. Therefore, the session parameters corresponding to the second session can be directly set to the session parameters of the first session, so that the mobile communication device can send the first message.

404. The second network element sends a second message to the session management network element based on the first message, where the second message carries the SUPI of the first UE, an identifier of the first session, the SUPI of the second UE, an identifier of the second session, and a second session establishment request. The second message is used to request the handover of the service data of the first session of the first UE to the second session of the second UE for transmission, where the session management network element is a network element that manages the first session of the first UE. Correspondingly, the session management network element may receive the second message.

In a possible embodiment, the second message may be a PDUSession_CreateSMContext Request.

In a possible embodiment, the information about the first session of the first UE includes one or more of the following: an identifier of the first session of the first UE, a DNN corresponding to the first session of the first UE, and an S-NSSAI corresponding to the first session of the first UE. Based on this possible embodiment, the network side can accurately determine the first session of the first UE.

In a possible embodiment, the first message further includes a subscription concealed identifier (subscription concealed identifier, SUCI) of the first UE, a subscription permanent identifier (subscription permanent identifier, SUPI) of the first UE, or a binding UE indication (binding UE indication) of the first UE. Based on this possible embodiment, the network side can determine the SUPI of the first UE.

The following describes several possible implementation methods for the second network element to send a second message to the session management network element based on the first message under different circumstances:
Case 1: The information of the first session of the first UE is an identifier of the first session of the first UE.
1) A specific implementation method for the second network element to send a second message to the session management network element based on the first message is as follows: the second network element obtains the SUPI of the first UE and the identifier of the session management network element configured to manage the first session based on the device identification information and the identifier of the first session; where the device identification information is the SUPI of the second UE, or the first message further includes the SUCI of the first UE, and the device identification information is the SUCI of the first UE; and the second network element sends the second message to the session management network element. Based on this possible embodiment, the second network element can accurately obtain the SUPI of the first UE and the identifier of the session management network element configured to manage the first session of the first UE, so as to send the second message to the session management network element.

The second network element has the SUPI of the second UE pre-stored therein. Therefore, after the second network element receives the first message sent by the second UE in the mobile communication device, the second network element can obtain the SUPI of the second UE. Based on the SUPI of the second UE and the identifier of the first session, the second network element obtains the SUPI of the first UE and the identifier of the session management network element used to manage the first session, so as to send the second message to the session management network element.

Alternatively, the first message may further include the SUCI of the first UE. After the second network element receives the first message sent by the second UE in the mobile communication device, the second network element may obtain the SUPI of the first UE and the identifier of the session management network element configured to manage the first session based on the SUCI of the first UE and the identifier of the first session, so as to send the second message to the session management network element.

In a possible embodiment, a specific implementation manner in which the second network element obtains the SUPI of the first UE and the identifier of the session management network element configured to manage the first session based on the device identification information and the identifier of the first session is as follows: the second network element sends the device identification information and the identifier of the first session to the unified data management network element; and the second network element receives the SUPI of the first UE and the identifier of the session management network element configured to manage the first session that are sent by the unified data management network element. Based on this possible embodiment, the second network element can accurately obtain the SUPI of the first UE and the identifier of the session management network element configured to manage the first session for the first UE.

In a 5G system, the unified data management network element may be a UDM network element. In a 6G system or a system after 6G, the unified data management network element may be referred to as a UDM network element or by another name, which is not limited in the embodiments of this application.

The unified data management network element stores an association relationship between the SUPI of the first UE and the SUPI of the second UE. For example, during the process where an operator creates accounts for the first UE and the second UE, the unified data management network element stores the association relationship between the SUPI of the first UE and the SUPI of the second UE.

The unified data management network element also stores an association relationship between the SUPI of the first UE, the identifier of the first session, the session parameters (such as DNN and/or S-NSSAI), and the identifier of the session management network element used to manage the first session. For example, in the process of establishing the first session for the first UE, the session management network element that is used to manage the first session may send the SUPI of the first UE, the identifier of the first session, the session parameters, and the identifier of the session management network element to the unified data management network element. After receiving this information, the unified data management network element may store the association relationship between the SUPI of the first UE, the identifier of the first session, the session parameters, and the identifier of the session management network element.

For example, the device identification information is taken as the SUPI of the second UE. The second network element may send the SUPI of the second UE and the identifier of the first session to the unified data management network element. After receiving the SUPI of the second UE and the identifier of the first session, the unified data management network element obtains the SUPI of the first UE associated with the second UE based on the pre-stored association relationship between the SUPI of the first UE and the SUPI of the second UE. Then, the unified data management network element obtains the identifier of the session management network element associated with the SUPI of the first UE and the identifier of the first session based on the pre-stored association relationship between the SUPI of the first UE, the identifier of the first session, the session parameters, and the identifier of the session management network element used to manage the first session. The unified data management network element then returns the SUPI of the first UE and the identifier of the session management network element to the second network element.

Optionally, if the device identification information is the SUPI of the second UE, when sending the SUPI of the second UE and the identifier of the first session to the unified data management network element, the second network element may also send a binding UE indication (binding UE indication), where the binding UE indication is used to indicate the acquisition of the SUPI of the UE associated with the second UE. In this way, the unified data management network element obtains the identifier of the session management network element that manages the first session for the UE associated with the SUPI of the second UE. Specifically, the unified data management network element determines, based on the stored association relationship between the SUPI of the first UE and the SUPI of the second UE, that the SUPI of the UE associated with the second UE is the SUPI of the first UE. Consequently, the unified data management network element identifies the session management network element responsible for managing the first session for the first UE.

For example, let's take the device identification information as the SUCI of the first UE as an example. The second network element may send the SUCI of the first UE and the identifier of the first session to a unified data management network element. After receiving the SUCI of the first UE and the identifier of the first session, the unified data management network element may first convert the SUCI of the first UE into the SUPI of the first UE. Then, based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the identifier of the first session. The unified data management network element then returns the SUPI of the first UE and the identifier of the session management network element to the second network element.

In another possible embodiment, a specific implementation manner in which the second network element obtains the SUPI of the first UE and the identifier of the session management network element used to manage the first session based on the device identification information and the identifier of the first session is as follows: the second network element sends the device identification information to an authentication server function network element or a unified data management network element; the second network element receives the SUPI of the first UE sent by the AUSF network element or the UDM network element; the second network element sends the SUPI of the first UE and the identifier of the first session to the UDM network element; and the second network element receives the identifier of the session management network element used to manage the first session from the UDM network element. Based on this possible embodiment, the second network element can accurately obtain the SUPI of the first UE and the identifier of the session management network element used to manage the first session of the first UE.

In a 5G system, the authentication service function network element may be an AUSF network element. In a 6G system or a system after 6G, the authentication service function network element may be referred to as an AUSF network element or by another name, which is not limited in the embodiments of this application.

For example, the device identification information is the SUPI of the second UE. The second network element may send the SUPI of the second UE to the unified data management network element. After receiving the SUPI of the second UE, the unified data management network element obtains, based on the pre-stored association relationship between the SUPI of the first UE and the SUPI of the second UE, the SUPI of the first UE associated with the second UE, and then returns the SUPI of the first UE to the second network element. After receiving the SUPI of the first UE, the second network element sends the SUPI of the first UE and the identifier of the first session to the unified data management network element. Based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the identifier of the first session. The unified data management network element then returns the identifier of the session management network element to the second network element.

Optionally, if the device identification information is the SUPI of the second UE, when sending the SUPI of the second UE to the unified data management network element, the second network element may also send a binding UE indication, where the binding UE indication is used to indicate the acquisition of the SUPI of the UE associated with the second UE.

For another example, the device identification information is the SUCI of the first UE. The second network element may send the SUCI of the first UE to an authentication server function network element or a unified data management network element. After receiving the SUCI of the first UE, the authentication server function network element or the unified data management network element may first convert the SUCI of the first UE into the SUPI of the first UE, and then return the SUPI of the first UE to the second network element. After receiving the SUPI of the first UE, the second network element sends the SUPI of the first UE and the identifier of the first session to the unified data management network element. Based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the identifier of the first session. The unified data management network element then returns the identifier of the session management network element to the second network element.

2) The first message further includes the SUPI of the first UE; a specific implementation manner in which the second network element sends the second message to the session management network element based on the first message is: the second network element obtains, based on the SUPI of the first UE and the identifier of the first session, an identifier of a session management network element configured to manage the first session; and the second network element sends the second message to the session management network element. Based on this possible embodiment, the second network element can accurately obtain the identifier of the session management network element configured to manage the first session of the first UE, so as to send the second message to the session management network element.

For example, the second network element may send the SUPI of the first UE and the identifier of the first session to a unified data management network element. The unified data management network element obtains, based on a pre-stored association relationship between the SUPI of the first UE, the identifier of the first session, the session parameters, and the identifier of the session management network element configured to manage the first session, the identifier of the session management network element associated with the SUPI of the first UE and the identifier of the first session. The unified data management network element then returns the identifier of the session management network element to the second network element.

Case 2: The information of the first session of the first UE includes the DNN corresponding to the first session of the first UE and/or the S-NSSAI corresponding to the first session of the first UE. For ease of description, the DNN corresponding to the first session and/or the S-NSSAI corresponding to the first session of the first UE are referred to as session parameters of the first session in the following description.
1) A specific implementation manner in which the second network element sends the second message to the session management network element based on the first message is as follows: the second network element obtains the SUPI of the first UE, an identifier of the session management network element configured to manage the first session, and an identifier of the first session based on the device identification information and the session parameters of the first session of the first UE; where the device identification information is the SUPI of the second UE, or the first message further includes the SUCI of the first UE, and the device identification information is the SUCI of the first UE; and the second network element sends the second message to the session management network element. Based on this possible embodiment, the second network element can accurately obtain the SUPI of the first UE, the identifier of the session management network element configured to manage the first session of the first UE, and the identifier of the first session, so as to send the second message to the session management network element.

In a possible embodiment, a specific implementation manner in which the second network element obtains the SUPI of the first UE, the identifier of the session management network element used to manage the first session, and the identifier of the first session based on the device identification information and the information of the first session of the first UE is as follows: the second network element sends the device identification information and the session parameters of the first session of the first UE to a unified data management network element; and the second network element receives the SUPI of the first UE, the identifier of the session management network element used to manage the first session, and the identifier of the first session sent by the unified data management network element. Based on this possible embodiment, the second network element can accurately obtain the SUPI of the first UE, the identifier of the session management network element used to manage the first session of the first UE, and the identifier of the first session.

For example, the device identification information is the SUPI of the second UE. The second network element may send the SUPI of the second UE and the session parameters of the first session to the unified data management network element. After receiving the SUPI of the second UE and the identifier of the first session, the unified data management network element obtains the SUPI of the first UE associated with the second UE based on the pre-stored association relationship between the SUPI of the first UE and the SUPI of the second UE. Then, the unified data management network element obtains the identifier of the session management network element associated with the SUPI of the first UE and the session parameters of the first session, and the identifier of the first session, based on the pre-stored association relationship between the SUPI of the first UE, the identifier of the first session, the session parameters, and the identifier of the session management network element used to manage the first session. The unified data management network element then returns the SUPI of the first UE, the identifier of the session management network element, and the identifier of the first session to the second network element.

Optionally, if the device identification information is the SUPI of the second UE, when the second network element sends the SUPI of the second UE and the identifier of the first session to the unified data management network element, an associated UE indication may also be sent, where the associated UE indication is used to indicate the acquisition of the SUPI of the UE associated with the second UE.

For another example, the device identification information is the SUCI of the first UE. The second network element may send the SUCI of the first UE and the session parameters of the first session to the unified data management network element. After receiving the SUCI of the first UE and the identifier of the first session, the unified data management network element may first convert the SUCI of the first UE into the SUPI of the first UE. Then, the unified data management network element may obtain the identifier of the session management network element associated with the SUPI of the first UE and the session parameters of the first session, based on the pre-stored association relationship between the SUPI of the first UE, the identifier of the first session, the session parameters, and the identifier of the session management network element used to manage the first session. The unified data management network element then returns the SUPI of the first UE, the identifier of the session management network element, and the identifier of the first session to the second network element.

In another possible embodiment, a specific implementation manner in which the second network element obtains the SUPI of the first UE, the identifier of the session management network element, and the identifier of the first session based on the device identification information and the information of the first session of the first UE is as follows: the second network element sends the device identification information to an authentication server function or a unified data management network element; the second network element receives the SUPI of the first UE sent by the AUSF or the UDM; the second network element sends the SUPI of the first UE and the session parameters of the first session of the first UE to the UDM; and the second network element receives the identifier of the session management network element used to manage the first session and the identifier of the first session sent by the UDM. Based on this possible embodiment, the second network element can accurately obtain the SUPI of the first UE, the identifier of the session management network element used to manage the first session of the first UE, and the identifier of the first session.

For example, the device identification information is the SUPI of the second UE. The second network element may send the SUPI of the second UE to the unified data management network element. After receiving the SUPI of the second UE, the unified data management network element obtains the SUPI of the first UE associated with the second UE based on the pre-stored association relationship between the SUPI of the first UE and the SUPI of the second UE, and then returns the SUPI of the first UE to the second network element. After receiving the SUPI of the first UE, the second network element sends the SUPI of the first UE and the session parameters of the first session to the unified data management network element. Based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the session parameters of the first session, and the identifier of the first session. The unified data management network element then returns the identifier of the session management network element and the identifier of the first session to the second network element.

Optionally, if the device identification information is the SUPI of the second UE, when sending the SUPI of the second UE to the unified data management network element, the second network element may also send a binding UE indication, where the binding UE indication is used to indicate the acquisition of the SUPI of the UE associated with the second UE.

For another example, the device identification information is the SUCI of the first UE. The second network element may send the SUCI of the first UE to an authentication server function or a unified data management network element. After receiving the SUCI of the first UE, the AUSF or the UDM may first convert the SUCI of the first UE to the SUPI of the first UE, and then return the SUPI of the first UE to the second network element. After receiving the SUPI of the first UE, the second network element sends the SUPI of the first UE and the session parameters of the first session to the UDM. Based on the pre-stored association relationship between the SUPI of the first UE, the identifier of the first session, the session parameters, and the identifier of the session management network element used to manage the first session, the UDM obtains the identifier of the session management network element associated with the SUPI of the first UE and the session parameters of the first session, and the identifier of the first session. The UDM then returns the identifier of the session management network element and the identifier of the first session to the second network element.

2) The first message further includes the SUPI of the first UE; a specific implementation manner in which the second network element sends the second message to the session management network element based on the first message is: the second network element obtains, based on the SUPI of the first UE and the session parameters of the first session, an identifier of the session management network element used to manage the first session and an identifier of the first session; and the second network element sends the second message to the session management network element. Based on this possible embodiment, the second network element can accurately obtain the identifier of the session management network element used to manage the first session of the first UE and the identifier of the first session, so as to send the second message to the session management network element.

For example, the second network element may send the SUPI of the first UE and the session parameters of the first session to a unified data management network element. The unified data management network element obtains, based on a pre-stored association relationship between the SUPI of the first UE, the identifier of the first session, the session parameters, and the identifier of the session management network element used to manage the first session, the identifier of the session management network element associated with the SUPI of the first UE and the session parameters of the first session, and the identifier of the first session. The unified data management network element returns the identifier of the session management network element and the identifier of the first session to the second network element. After receiving the identifier of the session management network element and the identifier of the first session, the second network element sends a second message to the session management network element.

In a possible embodiment, the first message and the second message further include a first handover indication, where the first handover indication is used to indicate to hand over service data of the first session of the first UE to the second session of the second UE for transmission, or the first handover indication is used to indicate to hand over service data of the first session of the UE associated with the second UE to the second session of the second UE for transmission.

Optionally, the first handover indication may be one piece of indication information, where the indication information indicates to hand over service data of the first session of the first UE to the second session of the second UE for transmission, or indicates to hand over service data of the first session of the UE associated with the second UE to the second session of the second UE for transmission.

Alternatively, the first handover indication includes two pieces of indication information. For example, one piece of indication information is a traffic switching indication (traffic switching indication), which is used to indicate to hand over the service data to the second session of the second UE for transmission. The other piece of indication information is a binding UE indication (binding UE indication), which is used to indicate to hand over the service data from the UE associated with the second UE. The combination of the two pieces of indication information indicates to hand over the service data of the first session of the UE associated with the second UE to the second session of the second UE for transmission.

In another possible embodiment, the first message and the second message themselves (i.e., the message names) indicate that the service data of the first session of the first UE is to be switched to the second session of the second UE for transmission, or indicate that the service data of the first session of the UE associated with the second UE is to be switched to the second session of the second UE for transmission.

405. In response to the second message, the session management network element sends the first N4 session identifier and the address information of the second access network device to the user plane function network element. The first N4 session identifier is an N4 session identifier associated with the identifier of the first session of the first UE, and the first N4 session identifier and the address information of the second access network device are used to indicate that the service data carried by the first IP address corresponding to the first N4 session identifier is to be sent to the second access network device, where the second access network device is configured to carry the second session of the second UE, and the first IP address is an IP address associated with the identifier of the first session of the first UE. Accordingly, the user plane function network element may receive the first N4 session identifier and the address information of the second access network device.

This means that the first session of the first UE and the second session of the second UE share the same IP address (i.e., the first IP address) and the same N4 session identifier (i.e., the first N4 session identifier). The session management network element does not need to allocate a new N4 session identifier for the second session of the second UE; it can simply reuse the first N4 session identifier. The IP address used by the service data of the mobile communication device remains unchanged before and after the handover between UEs, thereby maintaining service continuity. When establishing the first session of the first UE, the session management network element sends the first N4 session identifier and the first IP address to the user plane function network element, and the user plane function network element already knows the association between the first N4 session identifier and the first IP address. Subsequently, when the session management network element and the user plane function network element transmit the first N4 session identifier and the address information of the second access network device to each other, the forwarding rule associated with the first N4 session identifier can be updated to forward the service data carried by the first IP address corresponding to the first N4 session identifier to the second access network device. For example, the session management network element sends an N4 Session Modification Request message (the first N4 session identifier, the address information of the second access network device) to the user plane function network element.

Herein, the address information of the second access network device may be the tunnel endpoint information of the second access network device, for example, AN Tunnel Info. After the user plane function network element receives the first N4 session identifier and the address information of the second access network device, the user plane function network element sends the service data carried on the first IP address corresponding to the first N4 session identifier to the second access network device.

In a possible embodiment, the session management network element may further store an association relationship between the identifier of the first session of the first UE and the first IP address. For example, after receiving the SUPI of the first UE, the identifier of the first session, the DNN, the S-NSSAI, and the first session establishment request used to request to establish the first session of the first UE, the session management network element may store the association relationship between the identifier of the first session of the first UE and the first IP address.

Optionally, the session management network element may further store an association relationship between the identifier of the second session of the second UE and the first IP address in response to the second message. Optionally, the session management network element may further remove the association relationship between the identifier of the first session of the first UE and the first IP address, to avoid the same IP address being associated with two different sessions at the same time. For example, refer to step 610 in the embodiment corresponding to FIG. 6.

In the embodiments of this application, the association relationship between the identifier of the stored session and the first IP address may also be understood as the association relationship between the identifier of the created session and the first IP address.

In a possible embodiment, the session management network element stores an association relationship between the identifier of the first session of the first UE and the first N4 session identifier. For example, after receiving the SUPI of the first UE, the identifier of the first session, the DNN, the S-NSSAI, and the first session establishment request used to request to establish the first session of the first UE, the session management network element may store the association relationship between the identifier of the first session of the first UE and the first N4 session identifier.

Optionally, the session management network element may further store, in response to the second message, an association relationship between the identifier of the second session of the second UE and the identifier of the first N4 session. Optionally, the session management network element may further remove the association relationship between the identifier of the first session of the first UE and the identifier of the first N4 session, to avoid the same N4 session identifier being associated with two different sessions at the same time. For example, refer to step 610 in the embodiment corresponding to FIG. 6.

In the embodiments of this application, the association relationship between the identifier of the stored session and the first N4 session identifier may also be understood as the association relationship between the identifier of the created session and the first N4 session identifier.

In a possible embodiment, the session management network element sends the address information of the user plane function network element to the second access network device, and/or the session management network element triggers the release of the first session. For example, for related descriptions, refer to the description under step 612 in the embodiment corresponding to FIG. 6.

406. The mobile communication device transmits service data corresponding to the first IP address through the second session of the second UE.

In the embodiments of this application, the session management network element may further send a session establishment accept message to the mobile communication device through the second network element, where the session establishment accept message indicates that the second session of the second UE is successfully established or indicates that the establishment of the second session of the second UE is received. For example, the session establishment accept message may be a PDU session establishment accept (PDU session establishment accept) message. After receiving the session establishment accept message, the mobile communication device may transmit service data corresponding to the first IP address through the second session of the second UE. The second session of the second UE is transmitted/borne by the second access network device.

It can be seen that, based on the method described in Figure 4, when establishing the second session of the second UE, the session management network element may receive the identifier of the first session of the first UE, the identifier of the second session of the second UE, and the second session establishment request used to establish the second session of the second UE. In this way, the session management network element can share the first IP address associated with the first session of the first UE for use by the second session of the second UE, that is, the first session of the first UE and the second session of the second UE can share the same IP address. By enabling the first session of the first UE and the second session of the second UE to share the same IP address, the IP address used for service data before and after the handover between UEs in the mobile communication device remains unchanged, thereby maintaining service continuity.

For example, FIG. 5 is a schematic diagram illustrating that a first session of first UE and a second session of second UE share the same IP address. The PDU layer is an IP layer, where the dashed line may represent the second session of the second UE, and the solid line may represent the first session of the first UE. The first session of the first UE and the second session of the second UE share the same IP address, namely the first IP address. Before the service data is handed over between UEs, the service data corresponding to the first IP address is transmitted through the first session of the first UE (i.e., the PDU layer is associated with the transmission channel of the first UE, where the solid line exists while the dashed line does not). After the service data is handed over between UEs, the service data corresponding to the first IP address is transmitted through the second session of the second UE (i.e., the PDU layer is associated with the transmission channel of the second UE, where the solid line does not exist while the dashed line exists). The first IP address is not used simultaneously by both UEs; that is, during the session granularity handover process, the activation of the second session of the second UE (indicated by the existence of the dashed line) will trigger the deactivation of the first session of the first UE (indicated by the absence of the solid line). Before and after the service data is handed over between UEs, the connection between the PDU layer and the application layer remains unchanged, meaning the IP address used by the application does not change, thus not affecting service continuity.

To facilitate understanding of the content described in the embodiment corresponding to Figure 4, the following further elaborates on the service data processing method provided in the embodiments of this application with reference to Figure 6. Referring to Figure 6, Figure 6 is a schematic flowchart of another service data processing method according to an embodiment of this application. Wherein:
601. The mobile communication device sends an identifier of the first session of the first UE, a DNN, an S-NSSAI, a first session establishment request, and first indication information to the first network element. The first session establishment request is used to request the establishment of the first session of the first UE, and the first indication information indicates that the service data of the first session of the first UE may be transmitted between different UEs. Correspondingly, the first network element may receive the identifier of the first session of the first UE, the DNN, the S-NSSAI, the first session establishment request, and the first indication information.

Among them, steps 601 to 606 represent a specific implementation method for establishing the first session of the first UE.

Optionally, the mobile communication device may send a NAS message to the first network element via the first access network device, where the NAS message carries an identifier, a DNN, an S-NSSAI, a first session establishment request, and first indication information of the first session of the first UE. Optionally, the first session establishment request may include the identifier of the first session.

In the embodiments of this application, by sending the first indication information to the first network element, the first network element can select, based on the first indication information, a session management network element that supports the transmission of service data between different UEs, thereby facilitating subsequent processing.

In the embodiments of this application, the first indication information indicating that the service data of the first session of the first UE may be transmitted between different UEs may also be understood as the first indication information indicating that the service data of the first session of the first UE may be switched between different UEs. Alternatively, the first indication information indicates that the type of the first session is a session between different UEs, where a session between different UEs may be understood as a session that can be transferred or switched between different UEs.

Optionally, the mobile communication device may also not send the first indication information to the first network element. For example, after the first network element receives the identifier of the first session of the first UE, the DNN, the S-NSSAI, and the first session establishment request sent by the mobile communication device, the first network element may by default select a session management network element that supports the transmission of service data between different UEs to perform subsequent procedures. Alternatively, if the mobile communication device does not send the first indication information to the first network element, the first network element may also select a session management network element to manage the first session based on an existing method. For instance, the first network element may select a session management network element to manage the first session based on the DNN or the S-NSSAI.

602. The first network element selects a session management network element based on the first indication information, where the session management network element supports the transmission of service data between different UEs.

In the embodiments of this application, that the session management network element supports the transmission of service data between different UEs may also be understood as that the session management network element supports the switching of service data between different UEs, or supports a session type across different UEs.

603. The first network element sends the SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.

By providing the first indication information to the session management network element, the session management network element can determine whether the service data corresponding to the first session supports/permits transmission between different UEs, and return the determination result to the mobile communication device, so that the mobile communication device can subsequently decide whether to initiate a procedure for switching the service data transmission.

Optionally, the first network element may also not send the first indication information to the session management network element. For example, after receiving the SUPI of the first UE, the identifier of the first session, the DNN, the S-NSSAI, and the first session establishment request sent by the first network element, the session management network element may determine by default whether the service data corresponding to the first session supports/permits transmission between different UEs, and return the determination result to the mobile communication device. Alternatively, if the first network element does not send the first indication information to the session management network element, the session management network element may also not perform steps 604 and 605.

604. The session management network element determines that the service data corresponding to the first session of the first UE supports transmission between different UEs.

In the embodiments of this application, after receiving the SUPI of the first UE, the identifier of the first session, the DNN, the S-NSSAI, the first session establishment request, and the first indication information, the session management network element determines that the service data corresponding to the first session of the first UE supports transmission between different UEs.

In the embodiments of this application, the session management network element determining that the service data corresponding to the first session of the first UE supports transmission between different UEs may also be understood as the session management network element determining that the service data corresponding to the first session of the first UE supports handover between different UEs. Alternatively, the session management network element determines that the type of the first session of the first UE is a session between different UEs, where a session between different UEs may be understood as a session that can be transferred or handed over between different UEs.

In a possible embodiment, a specific implementation manner in which the session management network element determines that the service data corresponding to the first session of the first UE supports transmission between different UEs is as follows: the session management network element determines, based on the local configuration of the DNN, that the service data corresponding to the first session of the first UE supports transmission between different UEs; or the session management network element determines, based on the subscription data or policy information corresponding to the first session, that the service data corresponding to the first session of the first UE supports transmission between different UEs. For example, the session management network element may obtain the subscription data corresponding to the first session from the unified data management network element. The session management network element may obtain the policy information corresponding to the first session from the policy control function network element.

Optionally, if the session management network element determines that the service data corresponding to the first session of the first UE does not support transmission between different UEs, the session management network element may send indication information to the mobile communication device through the first network element, where the indication information indicates that the service data corresponding to the first session of the first UE does not support transmission between different UEs. In this way, the mobile communication device does not initiate step 608 based on the indication information and does not switch the service data on the first session to the second UE for transmission. Alternatively, if the session management network element determines that the service data corresponding to the first session of the first UE does not support transmission between different UEs, the session management network element does not send any indication information to the mobile communication device. If the mobile communication device does not receive the second indication information, the mobile communication device does not initiate step 608 and does not switch the service data on the first session to the second UE for transmission.

605. The session management network element sends second indication information to the first network element, where the second indication information indicates that the service data corresponding to the first session of the first UE supports transmission between different UEs. Correspondingly, the first network element may receive the second indication information.

In the embodiments of this application, the second indication information indicating that the service data corresponding to the first session of the first UE supports transmission between different UEs may also be understood as the second indication information indicating that the service data corresponding to the first session of the first UE supports handover between different UEs. Alternatively, the second indication information indicates that the type of the first session is a session between different UEs, where a session between different UEs may be understood as a session that can be transferred or handed over between different UEs.

Optionally, the session management network element may further send the SUPI of the first UE, the identifier of the first session, the DNN, the S-NSSAI, and the identifier of the session management network element to the unified data management network element, so that the unified data management network element stores an association relationship between the SUPI of the first UE, the identifier of the first session, the DNN, the S-NSSAI, and the identifier of the session management network element.

Optionally, the session management network element may further allocate a first N4 session identifier to the first session, where the N4 session identifier is used to identify an N4 session between the session management network element and the user plane function network element. The session management network element may send the first N4 session identifier and the address information of the first access network device to the user plane function network element, to indicate that the service data carried by the first IP address corresponding to the first N4 session identifier is to be sent to the first access network device. The first IP address is an IP address allocated to the first session by the session management network element or the user plane function network element.

The address information of the first access network device may be the tunnel endpoint information of the first access network device.

Optionally, the session management network element may also send the address information of the user plane function network element to the first access network device, so that the first access network device may send the uplink service data of the first session to the user plane function network element. The address information of the user plane function network element may be the tunnel endpoint information of the user plane function network element.

Optionally, the session management network element may further store an association relationship between the SUPI of the first UE, the identifier of the first session, the DNN, and the S-NSSAI, store an association relationship between the identifier of the first session and the first IP address, and store an association relationship between the identifier of the first session and the first N4 session identifier, so as to facilitate subsequent management of the first session.

Optionally, the session management network element may also configure an air interface resource between the first access network device and the first UE for the first session.

Optionally, the session management network element may send a session establishment accept message to the first network element, where the session establishment accept message carries the first IP address and the second indication information, and the session establishment accept message indicates that the first session of the first UE is successfully established. Correspondingly, the first network element may receive the session establishment accept message. For example, the session accept message may be a PDU session establishment accept (PDU session establishment accept) message.

Alternatively, the mobile communication device may establish the first session of the first UE in another manner, which is not limited in this embodiment of this application.

606. The first network element sends the second indication information to the mobile communication device. Correspondingly, the mobile communication device may receive the second indication information.

In this embodiment of this application, after receiving the second indication information, the first network element sends the second indication information to the mobile communication device.

Optionally, the first network element may receive a session establishment accept message, where the session establishment accept message carries the first IP address and the second indication information, and the session establishment accept message indicates that the first session of the first UE is successfully established. The first network element sends the session establishment accept message to the mobile communication device. Correspondingly, the mobile communication device receives the session establishment accept message.

Alternatively, the session management network element may also send the second indication information to the mobile communication device through the first network element by using another message, which is not limited in this embodiment of this application.

In another possible embodiment, the mobile communication device may also receive the second indication information from the network side when the first UE or the second UE is registered, where the second indication information indicates that the service data of the mobile communication device is allowed to be transmitted between different UEs, that is, indicates that all service data of the mobile communication device is allowed to be transmitted between different UEs, or indicates that the service data of all sessions of the mobile communication device is allowed to be transmitted between different UEs.

607. The mobile communication device transmits service data corresponding to the first IP address through the first session of the first UE.

For step 607, refer to the description under step 402, which will not be repeated here.

608. The mobile communication device sends a first message to the second network element based on the second indication information, where the first message carries information about a first session of the first UE, an identifier of a second session of the second UE, and a second session establishment request. The second session establishment request is used to request the establishment of the second session of the second UE, and the first message is used to request to hand over the service data of the first session of the first UE to the second session of the second UE for transmission. Correspondingly, the second network element may receive the first message.

In the embodiments of this application, the mobile communication device sends the first message to the second network element only after receiving the second indication information and determining, based on the second indication information, that the service data corresponding to the first session of the first UE supports transmission between different UEs.

For the trigger condition of sending the first message by the mobile communication device to the second network element and other descriptions related to step 608, refer to the description under 403 in the embodiment corresponding to FIG. 4, which will not be repeated herein.

Among them, steps 608 to 611 represent the process of establishing the second session of the second UE and the handover of service data.

609. The second network element sends a second message to the session management network element based on the first message, where the second message carries the SUPI of the first UE, an identifier of the first session, the SUPI of the second UE, an identifier of the second session, and a second session establishment request. The second message is used to request to hand over the service data of the first session of the first UE to the second session of the second UE for transmission, where the session management network element is a network element that manages the first session of the first UE. Correspondingly, the session management network element may receive the second message.

For the specific implementation of step 609, refer to the description of step 404 in the embodiment corresponding to FIG. 4, which will not be elaborated upon herein.

610. In response to the second message, the session management network element stores an association relationship between the identifier of the second session of the second UE, the first IP address, and the first N4 session identifier.

In other words, the second session of the second UE shares the same IP address and the same N4 session identifier with the first session of the first UE. The session management network element may store an association relationship between the identifier of the second session of the second UE, the first IP address, and the first N4 session identifier, so as to manage the second session subsequently.

Optionally, the session management network element may further remove the association relationship between the identifier of the first session of the first UE, the first IP address, and the first N4 session identifier, thereby avoiding the same IP address being associated with two different sessions simultaneously, and avoiding the same N4 session identifier being associated with two different sessions simultaneously.

611. In response to the second message, the session management network element sends the first N4 session identifier and the address information of the second access network device to the user plane function network element. The first N4 session identifier and the address information of the second access network device are used to indicate that the service data carried by the first IP address corresponding to the first N4 session identifier is to be sent to the second access network device, which is configured to carry the second session of the second UE. Correspondingly, the user plane function network element may receive the first N4 session identifier and the address information of the second access network device.

For a specific implementation of step 611, refer to the description under step 405, which will not be repeated here.

612. The session management network element sends the address information of the user plane function network element to the second access network device, and/or the session management network element triggers the release of the first session.

In the embodiments of this application, after the session management network element sends the address information of the user plane function network element to the second access network device, the second access network device may send the uplink service data of the second session to the user plane function network element. The address information of the user plane function network element may be the tunnel endpoint information of the user plane function network element.

In the embodiments of this application, when the session management network element triggers the release of the first session, it means that the session management network element triggers the release of the user plane transmission of the first session, that is, releases the N3 connection configured between the first access network device and the user plane function network element for the first session, and releases the air interface resources configured between the first access network device and the first UE for the first session. Since the second session of the second UE shares the same N4 session identifier with the first session of the first UE, the N4 session corresponding to the first N4 session identifier is not released.

In the embodiments of this application, the release of the first session may also be understood as deactivating the first session throughout the entire text.

613. The mobile communication device transmits service data corresponding to the first IP address through the second session of the second UE.

For step 613, refer to the description under step 406, which will not be repeated herein.

It can be seen that, based on the method described in Figure 6, when establishing the second session of the second UE, the session management network element may receive the identifier of the first session of the first UE, the identifier of the second session of the second UE, and a second session establishment request used to establish the second session of the second UE. In this way, the session management network element can share the first IP address associated with the first session of the first UE for use by the second session of the second UE, that is, the first session of the first UE and the second session of the second UE can share the same IP address. By enabling the first session of the first UE and the second session of the second UE to share the same IP address, the IP address used for service data remains unchanged before and after the UE handover within the mobile communication device, thereby maintaining service continuity.

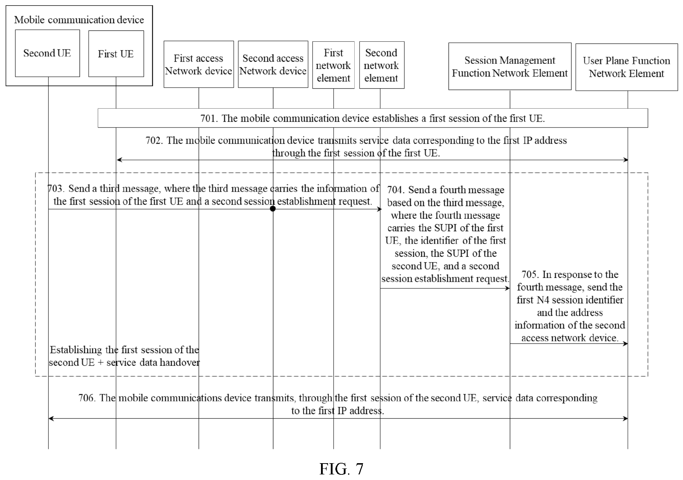

Referring to FIG. 7, FIG. 7 is a schematic flowchart of another service data processing method according to an embodiment of this application. In the method described in FIG. 7, the first UE and the second UE share the same session, namely, the first session. When establishing the first session of the second UE, the mobile communications device triggers the service data to be transmitted from the first session of the first UE to the first session of the second UE, and the first session of the first UE and the first session of the second UE share the same IP address. Specifically:
701. The mobile communication device establishes a first session for the first UE. This first session is associated with a first IP address.
702. The mobile communication device transmits service data corresponding to the first IP address through the first session of the first UE.
For the descriptions of steps 701 to 702, refer to the descriptions under steps 401 to 402 in the embodiment corresponding to FIG. 4, which will not be repeated herein.
703. The mobile communication device sends a third message to the second network element, where the third message carries information about the first session of the first UE and a second session establishment request. The second session establishment request is used to request the establishment of the first session of the second UE, and the third message is used to request the handover of the service data of the first session of the first UE to the first session of the second UE for transmission. Correspondingly, the second network element may receive the third message.

In other words, the first UE and the second UE share the same session, namely the first session. Steps 703 to 705 represent the process of establishing the first session for the second UE and the process of switching service data.

In the embodiments of this application, the second UE in the mobile communication device may send a third message to the second network element through the second access network device.

In a possible embodiment, the third message may be a NAS message (NAS Message). Optionally, the second session establishment request (session establishment request) may include an identifier of the first session. For example, the second session establishment request is a PDU session establishment request (PDU session establishment request).

In a possible embodiment, a trigger condition for the mobile communication device to send the third message to the second network element may be that the signal quality between the mobile communication device and the first access network device deteriorates, or the signal quality between the mobile communication device and the first access network device is lower than a first threshold, or a QoS requirement of a first session of the first UE is not met.

Optionally, the deterioration of signal quality between the mobile communication device and the first access network device may be that the signal quality between the mobile communication device and the first access network device decreases by an amount greater than or equal to a first value.

Based on this possible embodiment, when the signal quality between the first UE and the first access network device deteriorates or becomes poor, or when the QoS requirements of the first session of the first UE are not met, a timely handover to the second UE can be performed for the transmission of service data, thereby ensuring the transmission quality of the service data.

In another possible embodiment, the trigger condition for the mobile communication device to send the third message to the second network element may be: the signal quality between the mobile communication device and the first access network device deteriorates, or the signal quality between the mobile communication device and the first access network device is below a first threshold, or the quality of service QoS requirement for the first session of the first UE is not met; and the signal quality between the mobile communication device and the second access network device is above a second threshold.

Based on this possible embodiment, when the signal quality between the first UE and the first access network device deteriorates or is not good enough, or when the QoS requirement of the first session of the first UE is not met, and the signal quality between the second UE and the second access network device is good, the first UE can be promptly switched to the second UE for service data transmission, thereby ensuring the transmission quality of the service data.

In a possible embodiment, the mobile communication device may further receive second indication information, where the second indication information indicates that the service data of the first session is allowed to be transmitted between different UEs, or indicates that the service data of the mobile communication device is allowed to be transmitted between different UEs; and the mobile communication device may send the third message based on the second indication information. In other words, the mobile communication device sends the third message only when the service data of the first session is allowed to be transmitted between different UEs, or when the service data of the mobile communication device is allowed to be transmitted between different UEs. Based on this possible embodiment, the mobile communication device can accurately determine whether the service data of the first session can be transmitted between different UEs.

Optionally, if the second indication information indicates that the service data of the mobile communication device is allowed to be transmitted between different UEs, that is, indicates that all service data of the mobile communication device is allowed to be transmitted between different UEs or indicates that the service data of all sessions of the mobile communication device is allowed to be transmitted between different UEs, then the mobile communication device may also receive the second indication information from the policy control network element when the first UE or the second UE registers. Correspondingly, the policy control network element may send the second indication information to the mobile communication device.

In a possible embodiment, when sending the SUPI of the first UE, the identifier of the first session, the DNN, the S-NSSAI, and the first session establishment request to the session management network element, the first network element may also send the first indication information. After receiving this information, if the session management network element determines that the service data corresponding to the first session of the first UE supports transmission between different UEs, the session management network element sends second indication information to the first network element, so that the second network element may send the second indication information to the mobile communication device, where the second indication information indicates that the service data corresponding to the first session of the first UE supports transmission between different UEs. After receiving the second indication information, the mobile communication device may send a third message based on the second indication information.

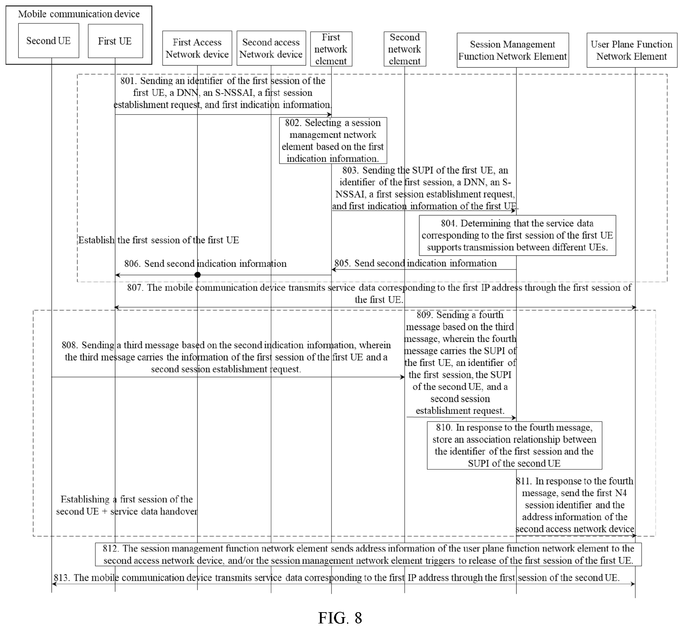

In other words, if the second indication information indicates that the service data of the first session is allowed to be transmitted between different UEs, the mobile communication device may receive the second indication information from the session management network element during the establishment of the first session. For example, for related descriptions, refer to the descriptions under steps 801 to 806 in the embodiment corresponding to FIG. 8, which will not be repeated herein.

In a possible embodiment, the mobile communication device sends a third message to the second network element based on the steering policy information. Further, the mobile communication device sends the third message only when the signal quality between the mobile communication device and the second access network device is good or higher than a set signal threshold. For an implementation principle of the mobile communication device sending the third message to the second network element based on the steering policy information, refer to the description under step 403 above, which will not be repeated herein.

Optionally, the third message further includes a session parameter corresponding to the first session of the second UE, such as a DNN or an S-NSSAI.

For example, the mobile communication device determines the session parameter corresponding to the first session of the second UE based on the URSP of the second UE. Optionally, the mobile communication device sends the third message to switch the service data to the first session of the second UE for transmission only when the session parameter corresponding to the first session of the second UE is the same as the session parameter corresponding to the first session of the first UE.

For another example, the mobile communication device generates, based on the session parameter of the first session of the first UE, the session parameter corresponding to the first session of the second UE. Optionally, the session parameter corresponding to the first session of the second UE is the same as the session parameter of the first session of the first UE, that is, the mobile communication device sets the session parameter corresponding to the first session of the second UE to the session parameter of the first session of the first UE, or uses the session parameter of the first session of the first UE as the session parameter corresponding to the first session of the second UE.

Optionally, the mobile communication device generates, based on the second indication information and the session parameter of the first session of the first UE, the session parameter corresponding to the first session of the second UE, or sets the session parameter corresponding to the first session of the second UE to the session parameter of the first session of the first UE. It should be understood that, in this case, the mobile communication device does not need to determine the session parameter corresponding to the first session of the second UE based on the URSP of the second UE. In other words, when service data can be switched between different UEs, the session parameter corresponding to the first session of the second UE can be directly set to the session parameter of the first session of the first UE, so that the mobile communication device can send the third message.

Optionally, the mobile communication device generates, based on the first session parameter of the first UE according to the direction policy information, the session parameter corresponding to the first session of the second UE, or sets the session parameter corresponding to the first session of the second UE to the first session parameter of the first UE, so that the mobile communication device may send the third message. It should be understood that in this case, the mobile communication device does not need to determine the session parameter corresponding to the first session of the second UE based on the URSP of the second UE.

For example, the direction policy information includes a UE priority list (the first UE has a higher priority than the second UE). Because the direction policy information includes the second UE, it indicates that the mobile communication device is allowed to transmit service data through the second UE, but the second UE has a lower priority than the first UE. Therefore, the session parameter corresponding to the first session of the second UE may be directly set to the first session parameter of the first UE, so that the mobile communication device may send the third message.

For example, the direction policy information includes a network priority list (the first network has a higher priority than the second network). Because the direction policy information includes the second network, it indicates that the mobile communication device is allowed to transmit service data through the second network, but the second network has a lower priority than the first network. Therefore, the session parameter corresponding to the first session of the second UE may be directly set to the first session parameter of the first UE, so that the mobile communication device may send the third message.

For example, the steering policy information includes an RAT priority list (where the first RAT priority is higher than the second RAT priority). Since the steering policy information includes the second network, it indicates that the mobile communication device is allowed to transmit service data through the second RAT, although the priority of the second RAT is lower than that of the first RAT. Therefore, the session parameter corresponding to the first session of the second UE can be directly set to the session parameter of the first session of the first UE, so that the mobile communication device can send the third message.

704. The second network element sends a fourth message to the session management network element based on the third message, where the fourth message carries the SUPI of the first UE, an identifier of the first session, the SUPI of the second UE, and a second session establishment request. The fourth message is used to request the handover of service data of the first session of the first UE to the second UE for transmission, where the session management network element is a network element that manages the first session of the first UE. Correspondingly, the session management network element may receive the fourth message.

In a possible embodiment, the fourth message may be a PDUSession_CreateSMContext Request.

In a possible embodiment, the information of the first session of the first UE includes one or more of the following: an identifier of the first session of the first UE, a DNN corresponding to the first session of the first UE, and an S-NSSAI corresponding to the first session of the first UE. Based on this possible embodiment, it is beneficial for the network side to accurately determine the first session of the first UE.

In a possible embodiment, the third message further includes the SUCI of the first UE, the SUPI of the first UE, or a binding UE indication (binding UE indication). Based on this possible embodiment, it is beneficial for the network side to determine the SUPI of the first UE.

The following describes several possible implementations for the second network element to send a fourth message to the session management network element based on the third message under different circumstances:
Case 1: The information of the first session of the first UE is an identifier of the first session of the first UE.
1) A specific implementation manner in which the second network element sends the fourth message to the session management network element based on the third message is as follows: the second network element obtains the SUPI of the first UE and the identifier of the session management network element used to manage the first session based on the device identification information and the identifier of the first session; where the device identification information is the SUPI of the second UE, or the third message further includes the SUCI of the first UE, and the device identification information is the SUCI of the first UE; and the second network element sends the fourth message to the session management network element.

For the beneficial effects of this specific implementation manner and the specific implementation manner in which the second network element obtains the SUPI of the first UE and the identifier of the session management network element based on the device identification information and the identifier of the first session, refer to the description under step 404 in the embodiment corresponding to FIG. 4, which will not be elaborated herein.

(2) The third message further includes the SUPI of the first UE; a specific implementation manner in which the second network element sends the fourth message to the session management network element based on the third message is as follows: the second network element obtains, based on the SUPI of the first UE and the identifier of the first session, an identifier of a session management network element configured to manage the first session; and the second network element sends the fourth message to the session management network element.

The beneficial effects of this specific implementation manner, as well as the specific implementation manner in which the second network element obtains the identifier of the session management network element based on the SUPI of the first UE and the identifier of the first session, may be referred to the description under step 404 in the embodiment corresponding to FIG. 4, and will not be elaborated herein.

Case 2: The information of the first session of the first UE includes the DNN corresponding to the first session of the first UE and/or the S-NSSAI corresponding to the first session of the first UE. For ease of description, the DNN corresponding to the first session and/or the S-NSSAI corresponding to the first session of the first UE are referred to as session parameters of the first session for the following description.
1) A specific implementation manner in which the second network element sends a fourth message to the session management network element based on the third message is as follows: the second network element obtains the SUPI of the first UE, an identifier of the session management network element configured to manage the first session, and an identifier of the first session based on the device identification information and the session parameters of the first session of the first UE; where the device identification information is the SUPI of the second UE, or the third message further includes the SUCI of the first UE, and the device identification information is the SUCI of the first UE; and the second network element sends the fourth message to the session management network element.

The beneficial effects of this specific implementation, as well as the specific implementation method in which the second network element obtains the SUPI of the first UE, the identifier of the session management network element, and the identifier of the first session based on the device identification information and the information of the first session of the first UE, may be referred to the description under step 404 in the embodiment corresponding to FIG. 4, and will not be elaborated herein.

2) The third message further includes the SUPI of the first UE; a specific implementation manner in which the second network element sends the fourth message to the session management network element based on the third message is as follows: the second network element obtains, based on the SUPI of the first UE and the session parameters of the first session, an identifier of a session management network element used to manage the first session and an identifier of the first session; and the second network element sends the fourth message to the session management network element.

The beneficial effects of this specific implementation, as well as the specific implementation method in which the second network element obtains the identifier of the session management network element and the identifier of the first session based on the SUPI of the first UE and the identifier of the first session, may be referred to the description under step 404 in the embodiment corresponding to FIG. 4, and will not be elaborated herein.

In a possible embodiment, the third message and the fourth message further include a second handover indication, where the second handover indication is used to indicate to hand over service data of the first session of the first UE to the first session of the second UE for transmission, or the second handover indication is used to indicate to hand over service data of the first session of the UE associated with the second UE to the first session of the second UE for transmission.

Optionally, the second handover indication may be one piece of indication information, where the indication information indicates to hand over service data of the first session of the first UE to the first session of the second UE for transmission, or indicates to hand over service data of the first session of the UE associated with the second UE to the first session of the second UE for transmission.

Alternatively, the second handover indication includes two pieces of indication information. For example, one piece of indication information is a traffic switching indication (traffic switching indication), which is used to indicate to hand over the service data to the first session of the second UE for transmission. The other piece of indication information is a binding UE indication (binding UE indication), which is used to indicate to hand over the service data from the UE associated with the second UE. These two pieces of indication information are used together to indicate to hand over the service data of the first session of the UE associated with the second UE to the first session of the second UE for transmission.

In another possible embodiment, the third message and the fourth message themselves (i.e., the message names) indicate that the service data of the first session of the first UE is to be switched to the first session of the second UE for transmission, or indicate that the service data of the first session of the UE associated with the second UE is to be switched to the first session of the second UE for transmission.

705. In response to the fourth message, the session management network element sends the first N4 session identifier and the address information of the second access network device to the user plane function network element. The first N4 session identifier is an N4 session identifier associated with the identifier of the first session of the first UE, and the first N4 session identifier and the address information of the second access network device are used to indicate that the service data carried by the first IP address corresponding to the first N4 session identifier is to be sent to the second access network device, where the second access network device is configured to carry the first session of the second UE, and the first IP address is an IP address associated with the identifier of the first session of the first UE. Accordingly, the user plane function network element may receive the first N4 session identifier and the address information of the second access network device.

This means that the first session of the first UE and the first session of the second UE share the same IP address (i.e., the first IP address) and the same N4 session identifier (i.e., the first N4 session identifier). The session management network element does not need to allocate a new N4 session identifier for the second session of the second UE; it can simply reuse the first N4 session identifier. The IP address used for service data remains unchanged before and after the handover between UEs, thereby maintaining service continuity. For example, the session management network element sends an N4 Session Modification Request message (including the first N4 session identifier and the address information of the second access network device) to the user plane function network element.

Herein, the address information of the second access network device may be tunnel endpoint information of the second access network device, for example, AN Tunnel Info. After the user plane function network element receives the first N4 session identifier and the address information of the second access network device, the user plane function network element sends the service data carried by the first IP address corresponding to the first N4 session identifier to the second access network device.

In a possible embodiment, the session management network element may further store an association relationship between the SUPI of the first UE, the identifier of the first session of the first UE, and the first IP address. Optionally, in response to the fourth message, the session management network element may further store an association relationship between the identifier of the first session and the SUPI of the second UE. Optionally, the session management network element may also release the association relationship between the SUPI of the first UE and the identifier of the first session of the first UE, thereby avoiding the same IP address being associated with two different UEs at the same time, and avoiding the same N4 session identifier being associated with two different UEs at the same time. For example, for related descriptions, refer to the description under step 810 in the embodiment corresponding to FIG. 8.

In a possible embodiment, the session management network element sends the address information of the user plane function network element to the second access network device, and/or the session management network element triggers the release of the first session of the first UE. For example, for related descriptions, refer to the description under step 812 in the embodiment corresponding to FIG. 8.

706. The mobile communication device transmits service data corresponding to the first IP address through the first session of the second UE.

In the embodiments of this application, the session management network element may further send a session accept message to the mobile communication device through the second network element, where the session accept message indicates that the first session of the second UE is successfully established. After receiving the session accept message, the mobile communication device may transmit service data corresponding to the first IP address through the first session of the second UE. The first session of the second UE is transmitted/borne through the second access network device.

It can be seen that, based on the method described in Figure 7, when establishing the first session of the second UE, the session management network element may receive the identifier of the first session of the first UE, the SUPI of the second UE, and a second session establishment request used to establish the first session of the second UE. In this way, the session management network element can share the first IP address associated with the first session of the first UE for use by the first session of the second UE, that is, the first session of the first UE and the first session of the second UE can share the same IP address. By enabling the first session of the first UE and the first session of the second UE to share the same IP address, the IP address used for service data before and after the handover between UEs in the mobile communication device remains unchanged, thereby maintaining service continuity.

To facilitate understanding of the content described in the embodiment corresponding to Figure 7, the following further describes the service data processing method provided in the embodiments of this application with reference to Figure 8. Referring to Figure 8, Figure 8 is a schematic flowchart of another service data processing method according to an embodiment of this application. Wherein:
801. The mobile communication device sends an identifier of a first session of the first UE, a DNN, an S-NSSAI, a first session establishment request, and first indication information to the first network element. The first session establishment request is used to request to establish the first session of the first UE, and the first indication information indicates that service data of the first session of the first UE may be transmitted between different UEs. Correspondingly, the first network element may receive the identifier of the first session of the first UE, the DNN, the S-NSSAI, the first session establishment request, and the first indication information.
802. The first network element selects a session management network element based on the first indication information, wherein the session management network element supports transmission of service data between different UEs.
803. The first network element sends the SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.
804. The session management network element determines that the service data corresponding to the first session of the first UE supports transmission between different UEs.
805. The session management network element sends second indication information to the first network element, where the second indication information indicates that the service data corresponding to the first session of the first UE supports transmission between different UEs. Correspondingly, the first network element may receive the second indication information.
806. The first network element sends second indication information to the mobile communication device. Correspondingly, the mobile communication device may receive the second indication information.
807. The mobile communication device transmits service data corresponding to the first IP address through the first session of the first UE.

For the specific implementation of steps 801 to 807, refer to the descriptions under steps 601 to 607 in the embodiment corresponding to FIG. 6, which will not be repeated here.

808. The mobile communication device sends a third message to the second network element based on the second indication information, where the third message carries information about the first session of the first UE and a second session establishment request. The second session establishment request is used to request the establishment of the first session of the second UE, and the third message is used to request to hand over the service data of the first session of the first UE to the first session of the second UE for transmission. Correspondingly, the second network element may receive the third message.

In the embodiments of this application, the mobile communication device sends the third message to the second network element only after receiving the second indication information and determining, based on the second indication information, that the service data corresponding to the first session of the first UE supports transmission between different UEs.

For the trigger condition of sending a third message by the mobile communication device to the second network element and other descriptions related to step 808, refer to the description under 703 in the embodiment corresponding to FIG. 7, which will not be repeated herein.

Among them, steps 808 to 811 represent the process where the mobile communication device establishes the first session of the second UE and performs a service data handover.

809. The second network element sends a fourth message to the session management network element based on the third message, where the fourth message carries the SUPI of the first UE, the identifier of the first session, the SUPI of the second UE, and the second session establishment request. The fourth message is used to request the handover of the service data of the first session of the first UE to the first session of the second UE for transmission, and the session management network element is a network element that manages the first session of the first UE. Correspondingly, the session management network element may receive the fourth message.

For the specific implementation of step 809, refer to the description under 704 in the embodiment corresponding to FIG. 7, which will not be elaborated upon here.

810. In response to the fourth message, the session management network element stores an association relationship between the identifier of the first session and the SUPI of the second UE.

In other words, the first session of the second UE shares the same IP address and the same N4 session identifier with the first session of the first UE. The session management network element may store an association relationship between the identifier of the first session and the SUPI of the second UE, so as to manage the first session subsequently.

Optionally, the session management network element may also remove the association between the SUPI of the first UE and the identifier of the first session, thereby preventing the same IP address from being associated with two different UEs simultaneously, and preventing the same N4 session identifier from being associated with two different UEs at the same time.

In response to the fourth message, 811. The session management network element sends the first N4 session identifier and the address information of the second access network device to the user plane function network element. The first N4 session identifier is an N4 session identifier associated with the identifier of the first session of the first UE. The first N4 session identifier and the address information of the second access network device are used to indicate that the service data carried by the first IP address corresponding to the first N4 session identifier is sent to the second access network device, where the second access network device is configured to carry the first session of the second UE, and the first IP address is an IP address associated with the identifier of the first session of the first UE. Accordingly, the user plane function network element may receive the first N4 session identifier and the address information of the second access network device.

For a specific implementation of step 811, refer to the description under step 705, and details are not repeated herein.

812. The session management network element sends the address information of the user plane function network element to the second access network device, and/or the session management network element triggers the release of the first session of the first UE.

In the embodiments of this application, after the session management network element sends the address information of the user plane function network element to the second access network device, the second access network device may send the uplink service data of the first session to the user plane function network element. The address information of the user plane function network element may be tunnel endpoint information of the user plane function network element.

In the embodiments of this application, when the session management network element triggers the release of the first session of the first UE, it means that the session management network element triggers the release of the user plane transmission of the first session, that is, releases the N3 connection configured between the first access network device and the user plane function network element for the first session, and releases the air interface resource configured between the first access network device and the first UE for the first session. Since the first session of the second UE shares the same N4 session identifier with the first session of the first UE, the N4 session corresponding to the first N4 session identifier is not released.

813. The mobile communication device transmits service data corresponding to the first IP address through the first session of the second UE.

In the embodiments of this application, the session management network element may further send a session accept message to the mobile communication device through the second network element, where the session accept message indicates that the first session of the second UE is successfully established. After receiving the session accept message, the mobile communication device may transmit service data corresponding to the first IP address through the first session of the second UE.

It can be seen that, based on the method described in Figure 8, when establishing the first session of the second UE, the session management network element may receive the identifier of the first session of the first UE, the SUPI of the second UE, and a second session establishment request used to establish the first session of the second UE. In this way, the session management network element can share the first IP address associated with the first session of the first UE for use by the first session of the second UE, that is, the first session of the first UE and the first session of the second UE can share the same IP address. By enabling the first session of the first UE and the first session of the second UE to share the same IP address, the IP address used for service data before and after the handover between UEs in the mobile communication device remains unchanged, thereby maintaining service continuity.

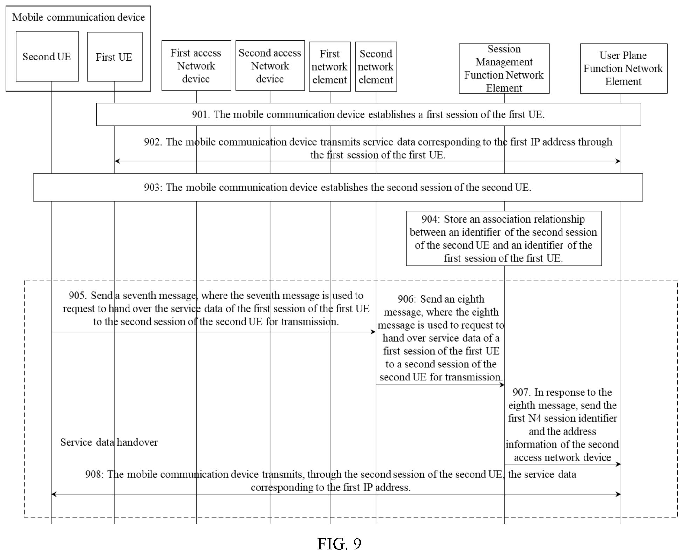

Please refer to FIG. 9, which is a schematic flowchart of a method for processing service data according to an embodiment of this application. In the method described in FIG. 9, a mobile communications device establishes a first session of first UE and a second session of second UE in advance, and establishes an association relationship between the first session and the second session, where user plane transmission of the first session is activated, and user plane transmission of the second session is not activated. Subsequently, when the mobile communications device requests to activate user plane transmission of the second session, the mobile communications device triggers switching of service data from the first session of the first UE to the second session of the second UE for transmission. In addition, the first session of the first UE and the second session of the second UE share a same IP address. The details are as follows:
901. The mobile communications device establishes a first session of the first UE.
902. The mobile communications device transmits service data corresponding to the first IP address through the first session of the first UE.

For descriptions of step 901 to step 902, refer to the descriptions under step 401 to step 402 in the embodiment corresponding to FIG. 4. Details are not described herein again.

903. The mobile communication device establishes a second session for the second UE.

The first session of the first UE is associated with the second session of the second UE.

904. The session management network element stores the association between the identifier of the second session of the second UE and the identifier of the first session of the first UE.

In the embodiments of this application, after the session management network element stores the association relationship between the identifier of the first session of the first UE and the identifier of the second session of the second UE, the first session of the first UE and the second session of the second UE may share the same IP address and the same N4 session identifier. The identifier of the first session of the first UE is associated with the first IP address and the first N4 session identifier. Therefore, after the session management network element stores the association relationship between the identifier of the first session of the first UE and the identifier of the second session of the second UE, the identifier of the second session of the second UE is also associated with the first IP address and the first N4 session identifier. The session management network element does not need to allocate a new N4 session identifier and a new IP address for the second session of the second UE; instead, it can reuse the first N4 session identifier and the first IP address.

In the embodiments of this application, "storing an association relationship" may also be understood as "creating an association relationship."

In a possible embodiment, a specific implementation manner in which the mobile communication device establishes the second session of the second UE is as follows: the mobile communication device sends a fifth message to the second network element, where the fifth message carries information about the first session of the first UE, an identifier of the second session of the second UE, and a second session establishment request, where the second session establishment request is used to request to establish the second session of the second UE.

Accordingly, the second network element may receive the fifth message; and the second network element sends a sixth message to the session management network element based on the fifth message, where the sixth message carries the SUPI of the first UE, an identifier of the first session, the SUPI of the second UE, an identifier of the second session, and a second session establishment request. Accordingly, the session management network element may receive the sixth message; and the session management network element stores, in response to the sixth message, an association relationship between the identifier of the second session of the second UE and the identifier of the first session of the first UE.

Based on this possible embodiment, it is beneficial to successfully establish the second session of the second UE and store the association relationship between the first session of the first UE and the second session of the second UE.

Optionally, the fifth message is used to request to associate the second session of the second UE with the first session of the first UE, and the sixth message is used to request to associate the second session of the second UE with the first session of the first UE.

Optionally, the information about the first session of the first UE includes one or more of the following: an identifier of the first session of the first UE, a DNN corresponding to the first session of the first UE, and an S-NSSAI corresponding to the first session of the first UE. Based on this possible embodiment, it is beneficial for the network side to accurately determine the first session of the first UE.

Optionally, the fifth message further includes the SUCI of the first UE, the SUPI of the first UE, or a binding UE indication (binding UE indication). Based on this possible embodiment, it is beneficial for the network side to determine the SUPI of the first UE.

In a possible embodiment, the mobile communication device may further receive second indication information, where the second indication information indicates that the service data of the first session is allowed to be transmitted between different UEs, or indicates that the service data of the mobile communication device is allowed to be transmitted between different UEs; the mobile communication device may send a fifth message based on the second indication information. That is, the mobile communication device sends the fifth message only when the service data of the first session is allowed to be transmitted between different UEs, or when the service data of the mobile communication device is allowed to be transmitted between different UEs. Based on this possible embodiment, it is beneficial for the mobile communication device to accurately determine whether the service data of the first session can be transmitted between different UEs.

Optionally, if the second indication information indicates that the service data of the mobile communication device is allowed to be transmitted between different UEs, that is, if it indicates that all service data of the mobile communication device is allowed to be transmitted between different UEs or if it indicates that the service data of all sessions of the mobile communication device is allowed to be transmitted between different UEs, then the mobile communication device may also receive the second indication information from the policy control network element when the first UE or the second UE is being registered. Correspondingly, the policy control network element may send the second indication information to the mobile communication device.

In a possible embodiment, when sending the SUPI of the first UE, the identifier of the first session, the DNN, the S-NSSAI, and the first session establishment request to the session management network element, the first network element may also send the first indication information. After receiving this information, if the session management network element determines that the service data corresponding to the first session of the first UE supports transmission between different UEs, the session management network element sends second indication information to the first network element, so that the second network element sends the second indication information to the mobile communication device, where the second indication information indicates that the service data corresponding to the first session of the first UE supports transmission between different UEs. After receiving the second indication information, the mobile communication device may send a fifth message based on the second indication information.

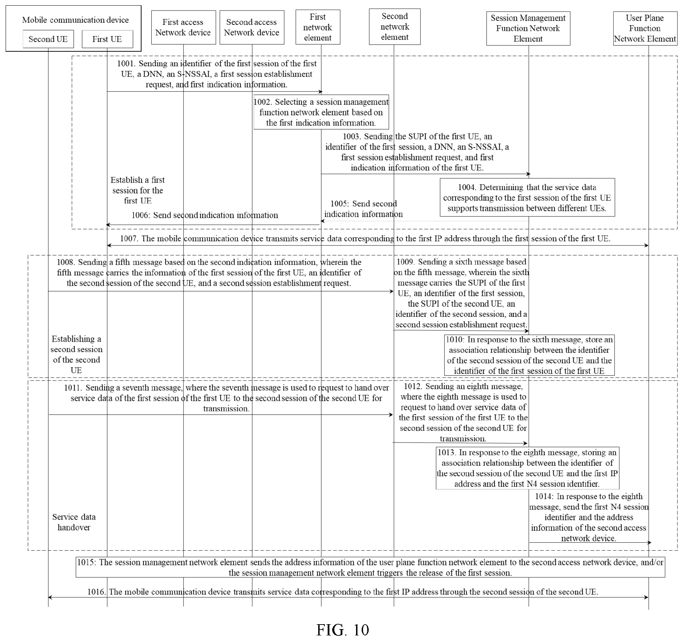

In other words, if the second indication information indicates that the service data of the first session is allowed to be transmitted between different UEs, the mobile communication device may receive the second indication information from the session management network element during the process of establishing the first session. For example, for related descriptions, refer to the descriptions under steps 1001 to 1006 in the embodiment corresponding to FIG. 10, which will not be repeated here.

For a possible implementation in which the second network element sends a sixth message to the session management network element based on the fifth message, and for other related descriptions of establishing the second session for the second UE, refer to the descriptions under steps 1008 to 1010 in the embodiment corresponding to FIG. 10. Details are not repeated herein. Alternatively, the second session for the second UE may be established in another manner, which is not limited in this embodiment of this application.

In a possible embodiment, the mobile communication device sends a fifth message to the second network element based on the steering policy information. Further, the mobile communication device sends the fifth message only when the signal quality between the mobile communication device and the second access network device is good or higher than a set signal threshold. For an implementation principle of the mobile communication device sending the fifth message to the second network element based on the steering policy information, refer to the descriptions under step 403 above, which is not repeated herein.

In a possible embodiment, after receiving the fifth message, the second network element may further record that the session management network element is responsible for managing the second session of the second UE, so that when the second network element subsequently receives a seventh message sent by the mobile communication device, the second network element may send an eighth message to the session management network element.

In a possible embodiment, after the session management network element stores the association between the identifier of the second session of the second UE and the identifier of the first session of the first UE, the session management network element may further record that the user plane transmission channel of the first session of the first UE is in an activated state, and that the user plane transmission channel of the second session of the second UE is in an inactive state. In other words, only the user plane transmission channel of the session of one UE is activated at a time.

905. The mobile communication device sends a seventh message to the second network element, where the seventh message is used to request to hand over the service data of the first session of the first UE to the second session of the second UE for transmission. The seventh message carries an identifier of the second session. Correspondingly, the second network element may receive the seventh message.

For example, the second UE in the mobile communication device may send a seventh message to the second network element through the second access network device. The seventh message is also used to request activation of the user plane transmission for the second session of the second UE.

Optionally, the seventh message may be a service request (Service Request) / PDU session modification request (PDU Session Modification Request).

In a possible embodiment, the trigger condition for the mobile communication device to send the seventh message to the second network element may be: the signal quality between the mobile communication device and the first access network device deteriorates, or the signal quality between the mobile communication device and the first access network device is below a first threshold, or the QoS requirement of the first session of the first UE is not met.

In another possible embodiment, the trigger condition for the mobile communication device to send the seventh message to the second network element may be: the signal quality between the mobile communication device and the first access network device deteriorates, or the signal quality between the mobile communication device and the first access network device is below a first threshold, or the quality of service (QoS) requirement for the first session of the first UE is not met; and the signal quality between the mobile communication device and the second access network device is above a second threshold.

906. The second network element sends an eighth message to the session management network element, where the eighth message is used to request to hand over the service data of the first session of the first UE to the second session of the second UE for transmission. The eighth message carries first information, where the first information is used to indicate the second session of the second UE. Correspondingly, the session management network element may receive the eighth message.

In a possible embodiment, the eighth message may be a PDUSession_UpdateSMContext Request.

In a possible embodiment, the first information includes the SUPI of the second UE and an identifier of the second session.

In another possible embodiment, the first information is information allocated by the session management network element for identifying the second session of the second UE. For example, the first information may be an SM Context ID#2.

In a possible embodiment, the seventh message and the eighth message further include a first handover indication, where the first handover indication is used to indicate that the service data of the first session of the first UE is handed over to the second session of the second UE for transmission, or the first handover indication is used to indicate that the service data of the first session of the UE associated with the second UE is handed over to the second session of the second UE for transmission.

Optionally, the first handover indication may be an indication information, where the indication information instructs to hand over the service data of the first session of the first UE to the second session of the second UE for transmission, or to hand over the service data of the first session of the UE associated with the second UE to the second session of the second UE for transmission.

Alternatively, the first handover indication includes two pieces of indication information. For example, one piece of indication information is a traffic handover indication, which is used to indicate that the service data is to be handed over to the second session of the second UE for transmission. The other piece of indication information is an associated UE indication, which is used to indicate that the service data is to be handed over from the UE associated with the second UE. The combination of these two pieces of indication information indicates that the service data of the first session of the UE associated with the second UE is to be handed over to the second session of the second UE for transmission.

907. In response to the eighth message, the session management network element sends a first N4 session identifier and address information of the second access network device to the user plane function network element. The first N4 session identifier and the address information of the second access network device are used to indicate that the service data carried by the first IP address corresponding to the first N4 session identifier is to be sent to the second access network device, which is configured to carry the second session of the second UE. Correspondingly, the user plane function network element may receive the first N4 session identifier and the address information of the second access network device.

For the description of step 907, refer to the description under step 405, which will not be repeated here.

In a possible embodiment, the session management network element may further store an association relationship between the identifier of the first session of the first UE and the first IP address. Optionally, the session management network element may further, in response to the eighth message, store an association relationship between the identifier of the second session of the second UE and the first IP address. Optionally, the session management network element may further remove the association relationship between the identifier of the first session of the first UE and the first IP address, in order to avoid the same IP address being associated with two different sessions simultaneously. For example, refer to step 1013 in the embodiment corresponding to FIG. 10.

In a possible embodiment, the session management network element stores an association relationship between the identifier of the first session of the first UE and the first N4 session identifier. Optionally, the session management network element may further, in response to an eighth message, store an association relationship between the identifier of the second session of the second UE and the first N4 session identifier. Optionally, the session management network element may further release the association relationship between the identifier of the first session of the first UE and the first N4 session identifier, in order to avoid the same N4 session identifier being associated with two different sessions simultaneously. For example, refer to step 1013 in the embodiment corresponding to FIG. 10.

In a possible embodiment, the session management network element sends the address information of the user plane function network element to the second access network device, and/or the session management network element triggers the release of the first session. For example, refer to the description under step 1015 in the embodiment corresponding to FIG. 10.

908. The mobile communication device transmits service data corresponding to the first IP address through the second session of the second UE.

In the embodiments of this application, after activating the user plane transmission of the second session of the second UE, the mobile communication device may transmit service data corresponding to the first IP address through the second session of the second UE. The second session of the second UE is transmitted/borne by the second access network device.

It can be seen that, based on the method described in Figure 9, an association relationship between the first session of the first UE and the second session of the second UE can be established in advance, and subsequently, the inter-UE handover of service data in the mobile communication device can be triggered according to the need. By establishing the association relationship between the first session of the first UE and the second session of the second UE, the first session of the first UE and the second session of the second UE can share the same IP address, and the IP address used for the service data before and after the inter-UE handover in the mobile communication device remains unchanged, thereby maintaining service continuity. Moreover, establishing the association relationship between the first session of the first UE and the second session of the second UE in advance facilitates the subsequent timely handover of service data to the second UE for transmission.

To facilitate understanding of the content described in the embodiment corresponding to Figure 9, the following further describes the service data processing method provided in the embodiments of this application with reference to Figure 10. Referring to Figure 10, Figure 10 is a schematic flowchart of a method for processing service data according to an embodiment of this application. Wherein:
1001: The mobile communication device sends an identifier of a first session of the first UE, a DNN, an S-NSSAI, a first session establishment request, and first indication information to the first network element. The first session establishment request is used to request to establish the first session of the first UE, and the first indication information indicates that service data of the first session of the first UE may be transmitted between different UEs. Correspondingly, the first network element may receive the identifier of the first session of the first UE, the DNN, the S-NSSAI, the first session establishment request, and the first indication information.
1002: The first network element selects a session management network element based on the first indication information, where the session management network element supports transmission of service data between different UEs.
1003. The first network element sends the SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.
1004. The session management network element determines that the service data corresponding to the first session of the first UE supports transmission between different UEs.
1005. The session management network element sends second indication information to the first network element, where the second indication information indicates that the service data corresponding to the first session of the first UE supports transmission between different UEs. Correspondingly, the first network element may receive the second indication information.
1006. The first network element sends second indication information to the mobile communication device. Correspondingly, the mobile communication device may receive the second indication information.
1007. The mobile communication device transmits service data corresponding to the first IP address through the first session of the first UE.

For the specific implementation of steps 1001 to 1007, refer to the descriptions under steps 601 to 607 in the embodiment corresponding to FIG. 6, which will not be repeated here.

1008: The mobile communication device sends a fifth message to the second network element based on the second indication information, where the fifth message carries information about the first session of the first UE, an identifier of the second session of the second UE, and a second session establishment request. The second session establishment request is used to request the establishment of the second session of the second UE. Correspondingly, the second network element may receive the fifth message.

In the embodiments of this application, the mobile communication device sends the fifth message to the second network element only after receiving the second indication information and determining, based on the second indication information, that the service data corresponding to the first session of the first UE supports transmission between different UEs. Optionally, the fifth message may be a NAS message.

Among them, steps 1008 to 1010 constitute the process of establishing the second session for the second UE.

1009. The second network element sends a sixth message to the session management network element based on the fifth message, where the sixth message carries the SUPI of the first UE, the identifier of the first session, the SUPI of the second UE, the identifier of the second session, and the second session establishment request. Correspondingly, the session management network element may receive the sixth message.

In a possible embodiment, the information about the first session of the first UE includes one or more of the following: an identifier of the first session of the first UE, a DNN corresponding to the first session of the first UE, and an S-NSSAI corresponding to the first session of the first UE.

In a possible embodiment, the fifth message further includes the SUCI of the first UE, the SUPI of the first UE, or a binding UE indication (binding UE indication) of the first UE.

The following describes several possible implementations in which the second network element sends a sixth message to the session management network element based on the fifth message under different circumstances:
Case 1: The information of the first session of the first UE is an identifier of the first session of the first UE.
1) A specific implementation manner in which the second network element sends a sixth message to the session management network element based on the fifth message is as follows: the second network element obtains the SUPI of the first UE and an identifier of the session management network element configured to manage the first session based on the device identification information and the identifier of the first session; where the device identification information is the SUPI of the second UE, or the fifth message further includes the SUCI of the first UE, and the device identification information is the SUCI of the first UE; and the second network element sends the sixth message to the session management network element.

For the beneficial effects of this specific implementation method and the specific implementation method in which the second network element obtains the SUPI of the first UE and the identifier of the session management network element based on the device identification information and the identifier of the first session, refer to the description under step 404 in the embodiment corresponding to FIG. 4. Details are not repeated herein.

2) The fifth message further includes the SUPI of the first UE; a specific implementation manner in which the second network element sends a sixth message to the session management network element based on the fifth message is as follows: the second network element obtains an identifier of a session management network element configured to manage the first session based on the SUPI of the first UE and an identifier of the first session; and the second network element sends the sixth message to the session management network element.

For the beneficial effects of this specific implementation method and the specific implementation method in which the second network element obtains the identifier of the session management network element based on the SUPI of the first UE and the identifier of the first session, refer to the description under step 404 in the embodiment corresponding to FIG. 4, which will not be elaborated herein.

Case 2: The information of the first session of the first UE includes the DNN corresponding to the first session of the first UE and/or the S-NSSAI corresponding to the first session of the first UE. For ease of description, the DNN corresponding to the first session and/or the S-NSSAI corresponding to the first session of the first UE are referred to as session parameters of the first session for the following description.
1) A specific implementation manner in which the second network element sends a sixth message to the session management network element based on the fifth message is as follows: the second network element obtains the SUPI of the first UE, an identifier of the session management network element configured to manage the first session, and an identifier of the first session based on the device identification information and the session parameters of the first session of the first UE; where the device identification information is the SUPI of the second UE, or the fifth message further includes the SUCI of the first UE, and the device identification information is the SUCI of the first UE; and the second network element sends the sixth message to the session management network element.

The beneficial effects of this specific implementation method, and the specific implementation method in which the second network element obtains the SUPI of the first UE, the identifier of the session management network element, and the identifier of the first session based on the device identification information and the information of the first session of the first UE, may be referred to the description under step 404 in the embodiment corresponding to FIG. 4, and will not be elaborated herein.

2) The fifth message further includes the SUPI of the first UE; a specific implementation method in which the second network element sends a sixth message to the session management network element based on the fifth message is as follows: the second network element obtains, based on the SUPI of the first UE and the session parameters of the first session, an identifier of a session management network element used to manage the first session and an identifier of the first session; and the second network element sends the sixth message to the session management network element.

The beneficial effects of this specific implementation method, and the specific implementation method in which the second network element obtains the identifier of the session management network element and the identifier of the first session based on the SUPI of the first UE and the identifier of the first session may be referred to the description under step 404 in the embodiment corresponding to FIG. 4, and will not be elaborated herein.

In a possible embodiment, the fifth message and the sixth message are used to request the association of the second session of the second UE with the first session of the first UE.

In a possible embodiment, the fifth message and the sixth message further include a first association indication, where the first association indication is used to indicate the association of the first session of the first UE with the second session of the second UE.

In another possible embodiment, the message itself (i.e., the message name) of the fifth message and the sixth message indicates the association of the first session of the first UE with the second session of the second UE.

In a possible embodiment, the second network element may further record that the session management network element is responsible for managing the second session of the second UE, so that when a seventh message sent by the mobile communication device is subsequently received, an eighth message may be sent to the session management network element.

Optionally, the mobile communication device may first trigger the establishment of the first session for the first UE when initiating a service, and then trigger the establishment of the second session for the second UE. The service data is preferentially transmitted through the first session of the first UE, while the second session of the second UE is used as a backup and does not transmit service data temporarily. For example, when the signal quality between the mobile communication device and the first access network device deteriorates subsequently, or when the signal quality between the mobile communication device and the first access network device falls below a first threshold, or when the QoS requirements of the first session of the first UE are not met, the service data is then switched to the second session of the second UE for transmission.

Optionally, the fifth message further includes the session parameter corresponding to the second session, for example, a DNN or an S-NSSAI.

For example, the mobile communication device determines, based on the URSP of the second UE, the session parameter corresponding to the second session of the second UE. Optionally, the mobile communication device sends the fifth message only when the session parameter corresponding to the second session of the second UE is the same as the session parameter corresponding to the first session of the first UE, so as to establish an association relationship between the first session of the first UE and the second session of the second UE, thereby facilitating subsequent handover of service data between the first UE and the second UE.

For another example, the mobile communication device generates, based on the session parameter of the first session, the session parameter corresponding to the second session. Optionally, the session parameter corresponding to the second session is the same as the session parameter of the first session, that is, the mobile communication device sets the session parameter corresponding to the second session to the session parameter of the first session, or uses the session parameter of the first session of the first UE as the session parameter corresponding to the second session of the second UE.

Optionally, the mobile communication device generates, based on the second indication information, the session parameter corresponding to the second session based on the session parameter of the first session, or sets the session parameter corresponding to the second session to the session parameter of the first session. It should be understood that, in this case, the mobile communication device does not need to determine the session parameter corresponding to the second session based on the URSP of the second UE. In other words, when service data is allowed to be switched between different UEs, the session parameter corresponding to the second session may be directly set to the session parameter of the first session, so that the mobile communication device may send the fifth message.

Optionally, the mobile communication device generates, based on the session parameter of the first session and based on the direction policy information, the session parameter corresponding to the second session, or sets the session parameter corresponding to the second session to the session parameter of the first session, so that the mobile communication device may send the fifth message. It should be understood that, in this case, the mobile communication device does not need to determine the session parameter corresponding to the second session based on the URSP of the second UE.

For example, the direction policy information includes a UE priority list (the first UE has a higher priority than the second UE). Because the direction policy information includes the second UE, it indicates that the mobile communication device is allowed to transmit service data through the second UE, where the second UE has a lower priority than the first UE. Therefore, the session parameter corresponding to the second session may be directly set to the session parameter of the first session, so that the mobile communication device can send the fifth message.

For example, the direction policy information includes a network priority list (the first network has a higher priority than the second network). Because the direction policy information includes the second network, it indicates that the mobile communication device is allowed to transmit service data through the second network, where the second network has a lower priority than the first network. Therefore, the session parameter corresponding to the second session may be directly set to the session parameter of the first session, so that the mobile communication device can send the fifth message.

For example, the direction policy information includes an RAT priority list (the first RAT has a higher priority than the second RAT). Because the direction policy information includes the second RAT, it indicates that the mobile communication device is allowed to transmit service data through the second RAT, where the second RAT has a lower priority than the first RAT. Therefore, the session parameter corresponding to the second session may be directly set to the session parameter of the first session, so that the mobile communication device can send the fifth message.

1010: In response to the sixth message, the session management network element stores the association between the identifier of the second session of the second UE and the identifier of the first session of the first UE.

For step 1010, refer to the description under step 904, which will not be repeated here.

In the embodiments of this application, the session management network element may further record that the user plane transmission channel of the first session of the first UE is in an activated state, and the user plane transmission channel of the second session of the second UE is in an inactive state.

1011. The mobile communication device sends a seventh message to the second network element, where the seventh message is used to request to hand over the service data of the first session of the first UE to the second session of the second UE for transmission. The seventh message carries an identifier of the second session. Correspondingly, the second network element may receive the seventh message.

1012. The second network element sends an eighth message to the session management network element, wherein the eighth message is used to request to hand over the service data of the first session of the first UE to the second session of the second UE for transmission. The eighth message carries first information, wherein the first information is used to indicate the second session of the second UE. Correspondingly, the session management network element may receive the eighth message.

For the specific implementation of steps 1011 and 1012, refer to the descriptions under steps 905 and 906, which will not be elaborated upon here.

1013. In response to the eighth message, the session management network element stores an association relationship between the identifier of the second session of the second UE and the first IP address and the first N4 session identifier. The first N4 session identifier is an N4 session identifier associated with the identifier of the first session of the first UE; the first IP address is an IP address associated with the identifier of the first session of the first UE.

The session management network element may store the association relationship between the identifier of the second session of the second UE, the first IP address, and the first N4 session identifier, so as to manage the second session subsequently.

Optionally, the session management network element may release the association relationship between the identifier of the first session of the first UE, the first IP address, and the first N4 session identifier, thereby avoiding the same IP address being associated with two different sessions simultaneously, and avoiding the same N4 session identifier being associated with two different sessions simultaneously.

1014. In response to the eighth message, the session management network element sends the first N4 session identifier and the address information of the second access network device to the user plane function network element. The first N4 session identifier and the address information of the second access network device are used to indicate that the service data carried by the first IP address corresponding to the first N4 session identifier is to be sent to the second access network device, where the second access network device is configured to carry the second session of the second UE. Correspondingly, the user plane function network element may receive the first N4 session identifier and the address information of the second access network device.

For the specific implementation of step 1014, refer to the description under step 405, which will not be elaborated here.

1015. The session management network element sends the address information of the user plane function network element to the second access network device, and/or the session management network element triggers the release of the first session.

For the specific implementation of step 1015, refer to the description under step 612, which will not be elaborated herein.

In the embodiments of this application, the session management network element may further record that the user plane transmission channel of the first session of the first UE is in an inactive state, and the user plane transmission channel of the second session of the second UE is in an active state.

1016: The mobile communication device transmits the service data corresponding to the first IP address through the second session of the second UE.

For step 1016, refer to the description under step 908, and details are not described herein again.

It can be learned that, based on the method described in FIG. 10, an association relationship between the first session of the first UE and the second session of the second UE may be established in advance, and subsequently, a service data transmission between UEs in the mobile communication device may be triggered based on a requirement. By establishing the association relationship between the first session of the first UE and the second session of the second UE, the first session of the first UE and the second session of the second UE may share a same IP address, and an IP address used before and after the service data is switched between UEs in the mobile communication device remains unchanged, thereby maintaining service continuity. In addition, the association relationship between the first session of the first UE and the second session of the second UE is established in advance, which facilitates subsequent timely switching of the service data to the second UE for transmission.

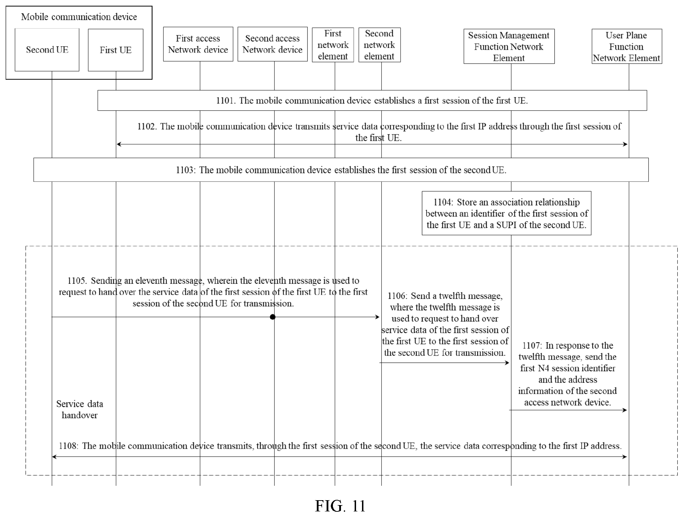

Referring to FIG. 11, FIG. 11 is a schematic flowchart of a method for processing service data according to an embodiment of this application. In the method described in FIG. 11, a mobile communications device establishes a first session of first UE and a first session of second UE in advance, and establishes an association relationship between the first session of the first UE and the first session of the second UE, where user plane transmission of the first session of the first UE is activated, and user plane transmission of the first session of the second UE is not activated. Subsequently, when the mobile communications device requests to activate user plane transmission of the first session of the second UE, the mobile communications device triggers switching of service data from the first session of the first UE to the first session of the second UE for transmission. In addition, the first session of the first UE and the first session of the second UE share a same IP address. The details are as follows:
1101. The mobile communications device establishes a first session of the first UE.
1102. The mobile communications device transmits service data corresponding to the first IP address through the first session of the first UE.

For the descriptions of steps 1101 to 1102, refer to the descriptions under steps 401 to 402 in the embodiment corresponding to FIG. 4, which will not be repeated here.

1103. The mobile communication device establishes the first session of the second UE.

The first session of the first UE is associated with the first session of the second UE.

1104. The session management network element stores an association relationship between an identifier of the first session of the first UE and a SUPI of the second UE.

In the embodiments of this application, after the session management network element stores the association relationship between the identifier of the first session of the first UE and the SUPI of the second UE, the first session of the first UE and the first session of the second UE may share the same IP address and the same N4 session identifier. The identifier of the first session of the first UE is associated with the first IP address and the first N4 session identifier. Therefore, after the session management network element stores the association relationship between the identifier of the first session of the first UE and the SUPI of the second UE, the identifier of the first session of the second UE is also associated with the first IP address and the first N4 session identifier. The session management network element does not need to allocate a new N4 session identifier and a new IP address for the first session of the second UE; instead, it can reuse the first N4 session identifier and the first IP address.

In a possible embodiment, a specific implementation manner in which the mobile communication device establishes the first session of the second UE is: the mobile communication device sends a ninth message, where the ninth message carries information about the first session of the first UE and a second session establishment request, and the second session establishment request is used to request to establish the first session of the second UE.

Accordingly, the second network element may receive the ninth message and send a tenth message to the session management network element based on the ninth message, where the tenth message carries the SUPI of the first UE, an identifier of the first session, the SUPI of the second UE, and a second session establishment request. Accordingly, the session management network element may receive the tenth message and, in response to the tenth message, store an association relationship between the identifier of the first session of the first UE and the SUPI of the second UE.

Optionally, the ninth message is used to request to associate the first session of the second UE with the first session of the first UE, and the tenth message is used to request to associate the first session of the second UE with the first session of the first UE.

Optionally, the information about the first session of the first UE includes one or more of the following: an identifier of the first session of the first UE, a DNN corresponding to the first session of the first UE, and an S-NSSAI corresponding to the first session of the first UE.

Optionally, the ninth message further includes the SUCI of the first UE, the SUPI of the first UE, or a binding UE indication (binding UE indication) of the first UE.

In a possible embodiment, the mobile communication device may further receive second indication information, where the second indication information indicates that service data of the first session is allowed to be transmitted between different UEs, or indicates that service data of the mobile communication device is allowed to be transmitted between different UEs; and the mobile communication device may send the ninth message based on the second indication information. In other words, the mobile communication device sends the ninth message only when the service data of the first session is allowed to be transmitted between different UEs, or when the service data of the mobile communication device is allowed to be transmitted between different UEs.

Optionally, if the second indication information indicates that the service data of the mobile communication device is allowed to be transmitted between different UEs, that is, indicates that all service data of the mobile communication device is allowed to be transmitted between different UEs or indicates that the service data of all sessions of the mobile communication device is allowed to be transmitted between different UEs, then the mobile communication device may also receive the second indication information from the policy control network element when the first UE or the second UE registers. Correspondingly, the policy control network element may send the second indication information to the mobile communication device.

In a possible embodiment, when sending the SUPI of the first UE, the identifier of the first session, the DNN, the S-NSSAI, and the first session establishment request to the session management network element, the first network element may also send the first indication information. After receiving this information, if the session management network element determines that the service data corresponding to the first session of the first UE supports transmission between different UEs, the session management network element sends second indication information to the first network element, so that the second network element can send the second indication information to the mobile communication device, where the second indication information indicates that the service data corresponding to the first session of the first UE supports transmission between different UEs. After receiving the second indication information, the mobile communication device may send a ninth message based on the second indication information.

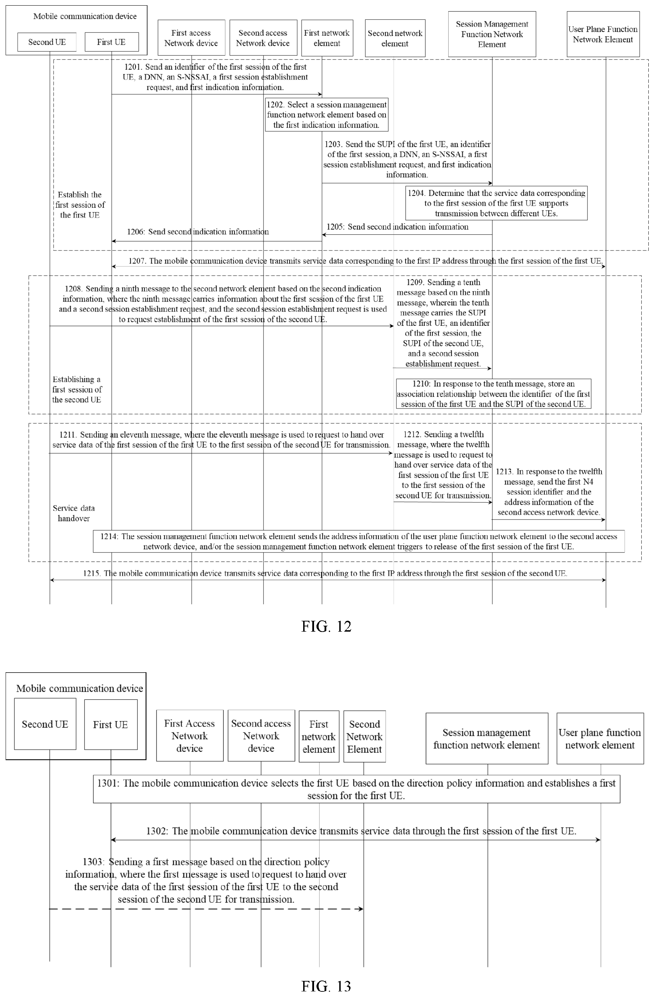

In other words, if the second indication information indicates that the service data of the first session is allowed to be transmitted between different UEs, the mobile communication device may receive the second indication information from the session management network element during the process of establishing the first session. For example, for more detailed descriptions, refer to the descriptions under steps 1201 to 1206 in the embodiment corresponding to FIG. 12, which will not be repeated here.

For a possible implementation in which the second network element sends a tenth message to the session management network element based on the ninth message, and for other related descriptions of establishing the first session for the second UE, refer to the descriptions under steps 1208 to 1210 in the embodiment corresponding to FIG. 12, which will not be repeated herein. Alternatively, the first session for the second UE may be established in another manner, which is not limited in this embodiment of this application.

In a possible embodiment, the mobile communication device sends a ninth message to the second network element based on the steering policy information. Further, the mobile communication device sends the ninth message only when the signal quality between the mobile communication device and the second access network device is good or higher than a set signal threshold. For an implementation principle of the mobile communication device sending the ninth message to the second network element based on the steering policy information, refer to the description under step 403 above, which is not repeated herein.

In a possible embodiment, after receiving the ninth message, the second network element may further record that the session management network element is responsible for managing the first session of the second UE, so that when the second network element subsequently receives an eleventh message sent by the mobile communication device, it may send a twelfth message to the session management network element.

In a possible embodiment, after the session management network element stores the association relationship between the identifier of the first session of the first UE and the SUPI of the second UE, the session management network element may further record that the user plane transmission channel of the first session of the first UE is in an activated state, while the user plane transmission channel of the first session of the second UE is in an inactive state. In other words, only the user plane transmission channel of the session of one UE is activated at a time.

1105: The mobile communication device sends an eleventh message to the second network element, where the eleventh message is used to request to hand over the service data of the first session of the first UE to the first session of the second UE for transmission. The eleventh message carries an identifier of the first session. Correspondingly, the second network element may receive the eleventh message.

For example, the second UE in the mobile communication device may send an eleventh message to the second network element via the second access network device. The eleventh message is also used to request activation of the user plane transmission for the first session of the second UE.

Optionally, the eleventh message may be a service request (service request) /PDU session modification request (PDU session modification request).

In a possible embodiment, a trigger condition for the mobile communication device to send an eleventh message to the second network element may be: the signal quality between the mobile communication device and the first access network device deteriorates, or the signal quality between the mobile communication device and the first access network device is lower than a first threshold, or the QoS requirement of the first session of the first UE is not met.

In another possible embodiment, a trigger condition for the mobile communication device to send an eleventh message to the second network element may be: the signal quality between the mobile communication device and the first access network device deteriorates, or the signal quality between the mobile communication device and the first access network device is lower than a first threshold, or the quality of service (QoS) requirement for the first session of the first UE is not met; and the signal quality between the mobile communication device and the second access network device is higher than a second threshold.

1106. The second network element sends a twelfth message to the session management network element, where the twelfth message is used to request to hand over the service data of the first session of the first UE to the first session of the second UE for transmission. The twelfth message carries second information, which is used to indicate the first session of the second UE. Correspondingly, the session management network element may receive the twelfth message.

In a possible embodiment, the twelfth message may be a PDUSession_UpdateSMContext Request.

In a possible embodiment, the second information includes the SUPI of the second UE and an identifier of the first session.

In another possible embodiment, the second information is information allocated by the session management network element for identifying a first session of the second UE. For example, the second information may be an SM Context ID#2.

In a possible embodiment, the eleventh message and the twelfth message further include a second handover indication, where the second handover indication is used to indicate that the service data of the first session of the first UE is handed over to the first session of the second UE for transmission, or the second handover indication is used to indicate that the service data of the first session of the UE associated with the second UE is handed over to the first session of the second UE for transmission.

Optionally, the second handover indication may be an indication information, where the indication information indicates to hand over the service data of the first session of the first UE to the first session of the second UE for transmission, or to hand over the service data of the first session of the UE associated with the second UE to the first session of the second UE for transmission.

Alternatively, the first handover indication includes two pieces of indication information. For example, one piece of indication information is a traffic handover indication, which is used to indicate that the service data is to be handed over to the first session of the second UE for transmission. The other piece of indication information is an associated UE indication, which is used to indicate that the service data is to be handed over from the UE associated with the second UE. The combination of these two pieces of indication information indicates that the service data of the first session of the UE associated with the second UE is to be handed over to the first session of the second UE for transmission.

1107. In response to the twelfth message, the session management network element sends the first N4 session identifier and the address information of the second access network device to the user plane function network element. The first N4 session identifier and the address information of the second access network device are used to indicate that the service data carried by the first IP address corresponding to the first N4 session identifier is to be sent to the second access network device, where the second access network device is configured to carry the first session of the second UE. Correspondingly, the user plane function network element may receive the first N4 session identifier and the address information of the second access network device.

For the description of step 1107, please refer to the description under step 705, and it will not be repeated here.

In a possible embodiment, the session management network element may further store an association relationship between the SUPI of the first UE, the identifier of the first session of the first UE, the first IP address, and the first N4 session identifier. Optionally, the session management network element may further, in response to the twelfth message, release the association relationship between the SUPI of the first UE and the identifier of the first session of the first UE, thereby avoiding the same IP address being associated with two different UEs at the same time, and avoiding the same N4 session identifier being associated with two different UEs at the same time.

In a possible embodiment, the session management network element sends the address information of the user plane function network element to the second access network device, and/or the session management network element triggers the release of the first session of the first UE. For example, for related descriptions, refer to the description under step 812 in the embodiment corresponding to FIG. 12.

1108: The mobile communication device transmits service data corresponding to the first IP address through the first session of the second UE.

In this embodiment of this application, after the user plane transmission of the first session of the second UE is activated, the mobile communications device may transmit the service data corresponding to the first IP address through the first session of the second UE. The first session of the second UE is transmitted/borne by the second access network device.

It can be learned that, based on the method described in FIG. 11, an association relationship between the first session of the first UE and the SUPI of the second UE may be established in advance, and subsequently, inter-UE handover transmission of the service data in the mobile communications device is triggered based on a requirement. By establishing the association relationship between the first session of the first UE and the SUPI of the second UE, the first session of the first UE and the first session of the second UE can share a same IP address, and an IP address used before and after the inter-UE handover of the service data in the mobile communications device remains unchanged, thereby ensuring service continuity. In addition, the association relationship between the first session of the first UE and the first session of the second UE is established in advance, which facilitates subsequent timely handover of the service data to the second UE for transmission.

To facilitate understanding of the content described in the embodiment corresponding to Figure 11, the following further describes the service data processing method provided in the embodiments of this application with reference to Figure 12. Referring to Figure 12, Figure 12 is a schematic flowchart of a method for processing service data according to an embodiment of this application. Wherein:
1201. The mobile communication device sends an identifier of a first session of the first UE, a DNN, an S-NSSAI, a first session establishment request, and first indication information to the first network element. The first session establishment request is used to request to establish the first session of the first UE, and the first indication information indicates that service data of the first session of the first UE may be transmitted between different UEs. Correspondingly, the first network element may receive the identifier of the first session of the first UE, the DNN, the S-NSSAI, the first session establishment request, and the first indication information.
1202. The first network element selects a session management network element based on the first indication information, where the session management network element supports transmission of service data between different UEs.
1203. The first network element sends the SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.
1204. The session management network element determines that the service data corresponding to the first session of the first UE supports transmission between different UEs.
1205. The session management network element sends second indication information to the first network element, where the second indication information indicates that the service data corresponding to the first session of the first UE supports transmission between different UEs. Correspondingly, the first network element may receive the second indication information.
1206. The first network element sends second indication information to the mobile communication device. Correspondingly, the mobile communication device may receive the second indication information.
1207. The mobile communication device transmits service data corresponding to the first IP address through the first session of the first UE.

For the specific implementation of steps 1201 to 1207, refer to the descriptions under steps 601 to 607 in the embodiment corresponding to FIG. 6, which will not be repeated here.

1208: The mobile communication device sends a ninth message to the second network element based on the second indication information, where the ninth message carries information about the first session of the first UE and a second session establishment request, and the second session establishment request is used to request to establish the first session of the second UE. Correspondingly, the second network element may receive the ninth message.

In the embodiments of this application, the mobile communication device sends the ninth message to the second network element only after receiving the second indication information and determining, based on the second indication information, that the service data corresponding to the first session of the first UE supports transmission between different UEs. Optionally, the ninth message may be a NAS message.

Among them, steps 1208 to 1210 constitute the process of establishing the first session for the second UE.

1209: The second network element sends a tenth message to the session management network element based on the ninth message, where the tenth message carries the SUPI of the first UE, an identifier of the first session, the SUPI of the second UE, and a second session establishment request. Correspondingly, the session management network element may receive the tenth message.

In a possible embodiment, the information of the first session of the first UE includes one or more of the following: an identifier of the first session of the first UE, a DNN corresponding to the first session of the first UE, and an S-NSSAI corresponding to the first session of the first UE.

In a possible embodiment, the ninth message further includes the SUCI of the first UE, the SUPI of the first UE, or a binding UE indication (binding UE indication) of the first UE.

The following describes several possible implementation manners in which the second network element sends a tenth message to the session management network element based on the ninth message, under different circumstances:
Case 1: The information of the first session of the first UE is an identifier of the first session of the first UE.
1) A specific implementation manner in which the second network element sends the tenth message to the session management network element based on the ninth message is as follows: the second network element obtains the SUPI of the first UE and an identifier of the session management network element configured to manage the first session based on the device identification information and the identifier of the first session; where the device identification information is the SUPI of the second UE, or the ninth message further includes the SUCI of the first UE, and the device identification information is the SUCI of the first UE; and the second network element sends the tenth message to the session management network element.

For the beneficial effects of this specific implementation method and the specific implementation method in which the second network element obtains the SUPI of the first UE and the identifier of the session management network element based on the device identification information and the identifier of the first session, refer to the description under step 404 in the embodiment corresponding to FIG. 4, which will not be elaborated herein.

2) The ninth message further includes the SUPI of the first UE; a specific implementation manner in which the second network element sends the tenth message to the session management network element based on the ninth message is: the second network element obtains, based on the SUPI of the first UE and the identifier of the first session, an identifier of a session management network element used to manage the first session; and the second network element sends the tenth message to the session management network element.

For the beneficial effects of this specific implementation method and the specific implementation method in which the second network element obtains the identifier of the session management network element based on the SUPI of the first UE and the identifier of the first session, refer to the description under step 404 in the embodiment corresponding to FIG. 4, which will not be elaborated herein.

Case 2: The information of the first session of the first UE includes the DNN corresponding to the first session of the first UE and/or the S-NSSAI corresponding to the first session of the first UE. For ease of description, the DNN corresponding to the first session and/or the S-NSSAI corresponding to the first session of the first UE are referred to as session parameters of the first session in the following description.
1) A specific implementation manner in which the second network element sends a tenth message to the session management network element based on the ninth message is as follows: the second network element obtains the SUPI of the first UE, an identifier of the session management network element configured to manage the first session, and an identifier of the first session based on the device identification information and the session parameters of the first session of the first UE; where the device identification information is the SUPI of the second UE, or the ninth message further includes the SUCI of the first UE, and the device identification information is the SUCI of the first UE; and the second network element sends the tenth message to the session management network element.

The beneficial effects of this specific implementation manner, as well as the specific implementation manner in which the second network element obtains the SUPI of the first UE, the identifier of the session management network element, and the identifier of the first session based on the device identification information and the information of the first session of the first UE, can be referred to the description under step 404 in the embodiment corresponding to FIG. 4, and will not be elaborated herein again.

2) The ninth message further includes the SUPI of the first UE; a specific implementation manner in which the second network element sends a tenth message to the session management network element based on the ninth message is as follows: the second network element obtains, based on the SUPI of the first UE and the session parameters of the first session, an identifier of the session management network element configured to manage the first session and an identifier of the first session; and the second network element sends the tenth message to the session management network element.

For the beneficial effects of this specific implementation manner and the specific implementation manner in which the second network element obtains the identifier of the session management network element and the identifier of the first session based on the SUPI of the first UE and the identifier of the first session, refer to the description under step 404 in the embodiment corresponding to FIG. 4. Details are not repeated herein.

In a possible embodiment, the ninth message and the tenth message are used to request association of the first session of the second UE with the first session of the first UE.

In a possible embodiment, the ninth message and the tenth message further include a second association indication, where the second association indication is used to indicate that the first session of the first UE is associated with the first session of the second UE.

In another possible embodiment, the ninth message and the tenth message themselves (i.e., the message names) indicate that the first session of the first UE is to be associated with the first session of the second UE.

In a possible embodiment, the second network element may further record that the session management network element is responsible for managing the first session of the second UE, so that when subsequently receiving an eleventh message sent by the mobile communication device, the second network element may send a twelfth message to the session management network element.

Optionally, the mobile communication device may first trigger establishment of the first session of the first UE when initiating a service, and then trigger establishment of the first session of the second UE. The mobile communication device preferentially transmits the service data through the first session of the first UE, and the first session of the second UE is used as a backup and does not temporarily transmit the service data. For example, when signal quality between the mobile communication device and the first access network device deteriorates subsequently, or when signal quality between the mobile communication device and the first access network device is lower than a first threshold, or when a QoS requirement of the first session of the first UE is not met, the service data is then switched to the first session of the second UE for transmission.

Optionally, the ninth message further includes a session parameter corresponding to the first session of the second UE, for example, a DNN or an S-NSSAI.

For example, the mobile communication device determines the session parameter corresponding to the first session of the second UE based on the URSP of the second UE. Optionally, the mobile communication device sends the ninth message only when the session parameter corresponding to the first session of the second UE is the same as the session parameter corresponding to the first session of the first UE, so as to establish an association relationship between the first session of the first UE and the first session of the second UE, thereby facilitating subsequent switching of service data between the first UE and the second UE.

For another example, the mobile communication device generates, based on the session parameter of the first session of the first UE, the session parameter corresponding to the first session of the second UE. Optionally, the session parameter corresponding to the first session of the second UE is the same as the session parameter of the first session of the first UE, that is, the mobile communication device sets the session parameter corresponding to the first session of the second UE to the session parameter of the first session of the first UE, or uses the session parameter of the first session of the first UE as the session parameter corresponding to the first session of the second UE.

Optionally, the mobile communication device generates, based on the second indication information and the session parameter of the first session of the first UE, the session parameter corresponding to the first session of the second UE, or sets the session parameter corresponding to the first session of the second UE to the session parameter of the first session of the first UE. It should be understood that, in this case, the mobile communication device does not need to determine the session parameter corresponding to the first session of the second UE based on the URSP of the second UE. In other words, when service data can be switched between different UEs, the session parameter corresponding to the first session of the second UE can be directly set to the session parameter of the first session of the first UE, so that the mobile communication device can send the ninth message.

Optionally, the mobile communication device generates, based on the first session parameter of the first UE based on the direction policy information, the session parameter corresponding to the first session of the second UE, or sets the session parameter corresponding to the first session of the second UE to the first session parameter of the first UE, so that the mobile communication device may send the ninth message. It should be understood that in this case, the mobile communication device does not need to determine, based on the URSP of the second UE, the session parameter corresponding to the first session of the second UE.

For example, the direction policy information includes a UE priority list (the first UE has a higher priority than the second UE). Because the direction policy information includes the second UE, it indicates that the mobile communication device is allowed to transmit service data through the second UE, but the second UE has a lower priority than the first UE. Therefore, the session parameter corresponding to the first session of the second UE may be directly set to the first session parameter of the first UE, so that the mobile communication device may send the ninth message.

For example, the direction policy information includes a network priority list (the first network has a higher priority than the second network). Because the direction policy information includes the second network, it indicates that the mobile communication device is allowed to transmit service data through the second network, but the second network has a lower priority than the first network. Therefore, the session parameter corresponding to the first session of the second UE may be directly set to the first session parameter of the first UE, so that the mobile communication device may send the ninth message.

For example, the steering policy information includes an RAT priority list (where the first RAT priority is higher than the second RAT priority). Since the steering policy information includes the second network, it indicates that the mobile communication device is allowed to transmit service data through the second RAT, although the priority of the second RAT is lower than that of the first RAT. Therefore, the session parameter corresponding to the first session of the second UE can be directly set to the session parameter of the first session of the first UE, so that the mobile communication device can send the ninth message.

1210. In response to the tenth message, the session management network element stores an association relationship between the identifier of the first session of the first UE and the SUPI of the second UE.

In the embodiments of this application, the session management network element may further record that the user plane transmission channel of the first session of the first UE is in an activated state, and the user plane transmission channel of the first session of the second UE is in an inactive state.

1211. The mobile communication device sends an eleventh message to the second network element, where the eleventh message is used to request to hand over the service data of the first session of the first UE to the first session of the second UE for transmission. The eleventh message carries an identifier of the first session. Correspondingly, the second network element may receive the eleventh message.

1212. The second network element sends a twelfth message to the session management network element, where the twelfth message is used to request to hand over the service data of the first session of the first UE to the first session of the second UE for transmission. The twelfth message carries second information, where the second information is used to indicate the first session of the second UE. Correspondingly, the session management network element may receive the twelfth message.

For the specific implementation of steps 1211 and 1212, refer to the descriptions under steps 1105 and 1106, which will not be elaborated here.

In response to the twelfth message, the session management network element sends a first N4 session identifier and address information of a second access network device to the user plane function network element. The first N4 session identifier and the address information of the second access network device are used to indicate that the service data carried by the first IP address corresponding to the first N4 session identifier is to be sent to the second access network device, where the second access network device is configured to carry the first session of the second UE. Correspondingly, the user plane function network element may receive the first N4 session identifier and the address information of the second access network device.

For the specific implementation of steps 1213 herein, refer to the description under step 1107, which will not be repeated here.

1214. The session management network element sends the address information of the user plane function network element to the second access network device; and/or the session management network element triggers the release of the first session of the first UE.

For the specific implementation of step 1214 herein, refer to the description under step 812, which will not be repeated here.

In the embodiments of this application, the session management network element may further record that the user plane transmission channel of the first session of the first UE is in an inactive state, and the user plane transmission channel of the first session of the second UE is in an active state.

1215. The mobile communication device transmits service data corresponding to the first IP address through the first session of the second UE.

For step 1215, refer to the description under 1108, and details are not described herein again.

It can be learned that, based on the method described in FIG. 12, an association relationship between the first session of the first UE and the SUPI of the second UE may be established in advance, and subsequently, a service data transmission between UEs in the mobile communication device may be triggered based on a requirement. By establishing the association relationship between the first session of the first UE and the SUPI of the second UE, the first session of the first UE and the first session of the second UE can share a same IP address, and an IP address used before and after the service data is switched between UEs in the mobile communication device remains unchanged, thereby ensuring service continuity. In addition, the association relationship between the first session of the first UE and the first session of the second UE is established in advance, which facilitates timely switching of the service data to the second UE for subsequent transmission.

Please refer to FIG. 13, which is a schematic flowchart of a method for processing service data according to an embodiment of this application. Herein:
1301: The mobile communication device selects the first UE based on the steering policy information, and establishes a first session for the first UE.

Optionally, the mobile communication device may select the first UE based on the steering policy information, where the first UE is configured to transmit service data of the mobile communication device. When a service of the mobile communication device is triggered or there is service data of the mobile communication device to be sent, the mobile communication device determines, based on the URSP of the first UE, a session parameter corresponding to the service of the mobile communication device, and establishes the first session for the first UE by using the session parameter.

There are the following six possible implementations for the steering policy information:
(1) The steering policy information includes: the first UE is a preferentially selected UE, or a UE priority list (a priority of the first UE is higher than that of the second UE). Correspondingly, the steering policy information indicates that the first UE is preferentially selected or more likely to be selected to transmit the service data of the mobile communication device. That the first UE is a preferentially selected UE may be replaced with that the first UE is a primary UE (primary UE).
(2) The direction policy information includes: the first network is a network preferentially selected, or a network priority list (the first network has a higher priority than the second network), where the first network is a network on which the first UE camps, and the second network is a network on which the second UE camps. Correspondingly, the direction policy information indicates that a UE which preferentially selects or is more inclined to select to access the first network is used to transmit the service data of the mobile communication device. The first network being a network preferentially selected may be replaced with the first network being a primary network (primary network).
(3) The direction policy information includes: the first RAT is a preferentially selected RAT, or an RAT priority list (the first RAT has a higher priority than the second RAT), where the first RAT is an RAT supported by the first access network device, and the second RAT is an RAT supported by the second access network device. Correspondingly, the direction policy information indicates that a UE which preferentially selects or is more inclined to select to access the first RAT is used to transmit the service data of the mobile communication device. The first RAT being a preferentially selected RAT may be replaced with the first RAT being a primary RAT (primary RAT).

Optionally, the mobile communication device may select the first UE based on the direction policy information and the signal quality between the mobile communication device and the first access network device. For example, the mobile communication device selects the first UE only when the signal quality between the mobile communication device and the first access network device is higher than a specified signal threshold. If the signal quality between the mobile communication device and the first access network device is lower than the specified signal threshold, the mobile communication device does not select the first UE, but instead selects the second UE based on the direction policy information and the signal quality between the mobile communication device and the second access network device.
(4) The direction policy information includes: the second UE is a preferentially selected UE, or a UE priority list (the second UE has a higher priority than the first UE). Correspondingly, the direction policy information indicates that the second UE should be preferentially selected to transmit the service data of the mobile communication device. The first UE being a preferentially selected UE may be replaced with the first UE being a primary UE.
(5) The direction policy information includes: the second network is a preferentially selected network, or a network priority list (the second network has a higher priority than the first network); where, the first network is the network on which the first UE camps, and the second network is the network on which the second UE camps. Correspondingly, the direction policy information indicates that the UE should be preferentially selected to access the second network to transmit the service data of the mobile communication device. The first network being a preferentially selected network may be replaced with the first network being a primary network.
(6) The direction policy information includes: the second RAT is a preferentially selected RAT, or a RAT priority list (the second RAT has a higher priority than the first RAT), where the first RAT is a RAT supported by the first access network device, and the second RAT is a RAT supported by the second access network device. Correspondingly, the direction policy information indicates that a UE of which access to the second RAT is preferentially selected is used to transmit the service data of the mobile communication device. The first RAT being a preferentially selected RAT may be replaced with the first RAT being a primary RAT.

For example, it is assumed that the direction policy information includes: the second UE is a preferentially selected UE, or a UE priority list (the second UE has a higher priority than the first UE), or the second network is a preferentially selected network, or a network priority list (the second network has a higher priority than the first network), or the second network is a preferentially selected network, or a network priority list (the second network has a higher priority than the first network). If the signal quality between the mobile communication device and the second access network device is poor, for example, the signal quality is lower than a specified signal threshold, the mobile communication device does not select the second UE. The mobile communication device selects the first UE based on the direction policy information and the signal quality between the mobile communication device and the first access network device, where the signal quality between the mobile communication device and the first access network device is good or higher than the specified signal threshold.

Optionally, the mobile communication device may receive the steering policy information from the policy control function network element when the first UE or the second UE registers. Optionally, the mobile communication device may receive the steering policy information from the first network element or the second network element when the first UE or the second UE registers, where the first network element or the second network element receives the steering policy information from the policy control function network element. Optionally, the first UE is a primary UE (primary UE) in the mobile communication device, and the mobile communication device may receive the steering policy information from the first network element when the first UE registers, where the first network element receives the steering policy information from the policy control function network element. In a 5G system, the policy control function network element may be a PCF network element. In a 6G system or a system after 6G, the policy control function network element may be referred to as a PCF network element or by another name, which is not limited in this embodiment of this application.

For related descriptions regarding the establishment of the first session of the first UE by the mobile communication device, refer to the description under step 401 in the embodiment corresponding to FIG. 4 in the specification.

1302. The mobile communication device transmits service data through the first session of the first UE.

It can be seen that, based on the method described in Figure 13, the mobile communication device can reasonably select a UE to transmit service data. For example, the mobile communication device may have limited capabilities and cannot support multiple UEs simultaneously transmitting service data.

In a first possible embodiment, the mobile communication device may further send a first message to the second network element according to the direction policy information, where the first message is used to request to hand over the service data of the first session of the first UE to the second session of the second UE for transmission. For example, as shown in step 1303 in Figure 13. For related descriptions of the first message sent by the mobile communication device and the subsequent process, refer to the descriptions under steps 403 to 406 in the embodiment corresponding to Figure 4 in the specification.

In a second possible embodiment, the mobile communication device may further send a third message to a second network element according to the direction policy information, where the third message is used to request to switch the service data of the first session associated with the first UE to the first session of the second UE for transmission. For a related description of the third message sent by the mobile communication device and the subsequent process, refer to the descriptions under steps 703 to 706 in the embodiment corresponding to Figure 7 in the specification.

Optionally, the mobile communication device is transmitting service data through the first UE, the direction policy information includes that the second UE is a preferentially selected UE, or the second network is a preferentially selected network, or the second RAT is a preferentially selected RAT, and the mobile communication device sends the first message. Further, the mobile communication device sends the first message/the third message only when the signal quality between the mobile communication device and the second access network device is good or higher than a specified signal threshold.

Optionally, the mobile communication device is transmitting service data through the first UE, the direction policy information includes a UE priority list (a priority of the first UE is higher than that of the second UE), or a network priority list (a priority of the first network is higher than that of the second network), or an RAT priority list (a priority of the first RAT is higher than that of the second RAT), indicating that the mobile communication device is allowed to transmit service data through the second UE, or the second network, or the second RAT, and the mobile communication device sends the first message. Further, the mobile communication device sends the first message/the third message only when the signal quality between the mobile communication device and the second access network device is good or higher than a specified signal threshold.

In a third possible embodiment, the mobile communication device may further send a fifth message to the second network element according to the direction policy information, where the fifth message carries information about the first session of the first UE, an identifier of the second session of the second UE, and a second session establishment request, where the second session establishment request is used to request to establish the second session of the second UE. For a related description of the mobile communication device sending the fifth message and subsequent procedures, refer to the descriptions under steps 903 to 908 in the embodiment corresponding to Figure 9 in the specification.

In a fourth possible embodiment, the mobile communication device may further send a ninth message to the second network element according to the direction policy information, where the ninth message carries information about the first session of the first UE and a second session establishment request, where the second session establishment request is used to request to establish the first session of the second UE. For a related description of the mobile communication device sending the ninth message and subsequent procedures, refer to the descriptions under steps 1103 to 1108 in the embodiment corresponding to Figure 11 in the specification.

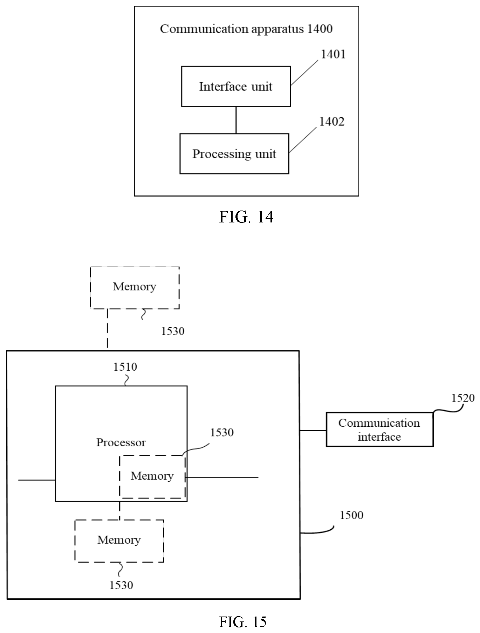

This application provides a communication apparatus, which may be configured to implement the functions of the foregoing mobile communication device, the first network element, the second network element, or the session management network element. The communication apparatus may be the mobile communication device, the first network element, the second network element, or the session management network element. The communication apparatus includes modules or units that are in one-to-one correspondence with the methods/operations/steps/actions performed by the mobile communication device, the first network element, the second network element, or the session management network element in the foregoing method embodiments. These units may be hardware circuits, software, or a combination of hardware circuits and software. Referring to FIG. 14, FIG. 14 is a schematic structural diagram of a communication apparatus 1400 according to an embodiment of this application. The communication apparatus 1400 may include an interface unit 1401 and a processing unit 1402. Specifically, the processing unit 1402 is configured to process signaling and/or data, where the signaling and/or data may be data received by the interface unit 1401, and the processed signaling and/or data may also be sent by the interface unit 1401.

When the communication apparatus 1400 is configured to implement the functions of the mobile communication device in the foregoing method embodiments, more detailed descriptions of the processing unit 1402 and the transceiver unit 1401 may be directly obtained by referring to the related descriptions of the functions of the mobile communication device in the method embodiments illustrated in FIG. 4 to FIG. 13, and details are not repeated herein.

When the communication apparatus 1400 is configured to implement the functions of the first network element in the foregoing method embodiments, more detailed descriptions of the processing unit 1402 and the interface unit 1401 may be directly obtained by referring to the related descriptions of the functions of the first network element in the method embodiments illustrated in FIG. 4 to FIG. 13, and details are not repeated herein.

When the communication apparatus 1400 is configured to implement the functions of the second network element in the foregoing method embodiments, more detailed descriptions of the processing unit 1402 and the interface unit 1401 may be directly obtained by referring to the related descriptions of the functions of the second network element in the method embodiments illustrated in FIG. 4 to FIG. 13, and details are not repeated herein.

When the communication apparatus 1400 is configured to implement the functions of the session management network element in the foregoing method embodiments, more detailed descriptions of the processing unit 1402 and the transceiver unit 1401 may be directly obtained by referring to the related descriptions of the functions of the session management network element in the method embodiments illustrated in FIG. 4 to FIG. 13, and details are not repeated herein.

As shown in Figure 15, this embodiment of the present application provides a communication apparatus 1500, which is configured to implement the functions of the aforementioned mobile communication device, or the first network element, or the second network element, or the session management network element. The apparatus may be a communication device or an apparatus used in a communication device. The communication device may be a mobile communication device, or the first network element, or the second network element, or the session management network element. The apparatus used in the communication device may be a chip system or a chip within the communication device. The chip system may be composed of a chip, or may include a chip and other discrete components.

The communication apparatus 1500 includes at least one processor 1510, configured to implement the processing functions of the device (for example, a mobile communication device, or a first network element, or a second network element, or a session management network element) in the method provided in the embodiments of this application. The communication apparatus 1500 may further include a communication interface 1520, configured to implement the receiving and sending operations of the device (for example, a mobile communication device, or a first network element, or a second network element, or a session management network element) in the method provided in the embodiments of this application. In the embodiments of this application, the communication interface may be a transceiver, a circuit, a bus, a module, or another type of communication interface, configured to communicate with another device through a transmission medium. For example, the communication interface 1520 may be configured to enable an apparatus in the communication apparatus 1500 to communicate with another device. The processor 1510 receives and sends data by using the communication interface 1520, and is configured to implement the method described in the foregoing method embodiments.

The communication apparatus 1500 may further include at least one memory 1530, configured to store program instructions and/or data. The memory 1530 is coupled to the processor 1510. The coupling in this embodiment of this application is an indirect coupling or a communication connection between apparatuses, units, or modules, and may be implemented in an electrical, mechanical, or another form, and is used for information exchange between the apparatuses, units, or modules. The processor 1510 may operate in collaboration with the memory 1530. The processor 1510 may execute the program instructions stored in the memory 1530. At least one of the at least one memory may be included in the processor.

A specific connection medium between the communication interface 1520, the processor 1510, and the memory 1530 is not limited in this embodiment of this application. In this embodiment of this application, the memory 1530, the processor 1510, and the communication interface 1520 are connected through a bus in FIG. 15. The bus is represented by a thick line in FIG. 15. A connection manner between other components is merely an example for description, and is not intended to be construed as a limitation. The bus may be classified into an address bus, a data bus, a control bus, or the like. For ease of representation, only one thick line is used to represent the bus in FIG. 15, but this does not indicate that there is only one bus or only one type of bus.

The communication apparatus 1500 is specifically used for apparatus (e.g., a mobile communication device, a first network element, a second network element, or a session management network element) When the communications apparatus 1500 is specifically a chip or a chip system, for example, the communications interface 1520 may output or receive a baseband signal. The communication apparatus 1500 is specifically a device (e.g., a mobile communication device, a first network element, a second network element, or a session management network element) When, the communications interface 1520 may output or receive a radio frequency signal. In this embodiment of this application, the processor may be a general purpose processor, a digital signal processor, an application-specific integrated circuit, a field programmable gate array or another programmable logic device, a discrete gate or a transistor logic device, or a discrete hardware component. may implement or perform the methods, steps, and logical block diagrams disclosed in the embodiments of this application. The general-purpose processor may be a microprocessor, any conventional processor, or the like. The steps of the method disclosed with reference to the embodiments of this application may be directly performed by a hardware processor, or may be performed by using a combination of hardware and software modules in the processor.

It should be noted that the communication interface 1520 may be configured to perform the functions of the aforementioned interface unit 1401, and the processor 1510 may be configured to perform the functions of the aforementioned processing unit 1402, which will not be further elaborated herein.

When the communication apparatus is a chip applied to a mobile communication device, a first network element, a second network element, or a session management network element, the chip implements the functions of the mobile communication device, the first network element, the second network element, or the session management network element in the foregoing method embodiments, and the chip receives information from another network element; or the chip sends information to another network element.

It can be understood that the processor in the embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in the embodiments of this application may be implemented through hardware, or may be implemented by a processor executing software instructions. The software instructions may include corresponding software modules, which may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example of a storage medium is coupled to a processor, enabling the processor to read information from the storage medium and write information into the storage medium. Of course, the storage medium may also be a component of the processor. The processor and the storage medium may be located in an ASIC. In addition, the ASIC may be located in a core network device or a terminal. Certainly, the processor and the storage medium may also exist as discrete components in the UE or the first network element.

In the foregoing embodiments, the embodiments may be implemented entirely or partially by software, hardware, firmware, or any combination thereof. When software is used to implement the embodiments, the embodiments may be implemented entirely or partially in a form of a computer program product. The computer program product includes one or more computer programs or instructions. When the computer program or the instruction is loaded and executed on a computer, the procedures or functions described in the embodiments of this application are entirely or partially performed. The computer may be a general-purpose computer, a dedicated computer, a computer network, or another programmable apparatus. The computer program or the instruction may be stored in a computer-readable storage medium, or may be transmitted through the computer-readable storage medium. The computer-readable storage medium may be any usable medium accessible to the computer, or a data storage device, such as a server, integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In the various embodiments of this application, unless otherwise specified or there is a logical conflict, the terms and/or descriptions between different embodiments are consistent and may be mutually referenced. The technical features in different embodiments may be combined to form a new embodiment based on their inherent logical relationships.

It may be understood that the various numerical designations in the embodiments of this application are merely for the purpose of differentiation for ease of description, and are not intended to limit the scope of the embodiments of this application. The sequence numbers of the foregoing processes do not imply the order of execution, and the execution order of the processes should be determined based on their functions and internal logic.

An embodiment of this application further provides a computer-readable storage medium, where the computer-readable storage medium stores computer-executable instructions. When the computer-executable instructions are executed, the method performed by the UE or the first network element in the foregoing method embodiments is implemented.

An embodiment of this application further provides a computer program product, where the computer program product includes a computer program, and when the computer program is executed, the method performed by the UE or the first network element in the foregoing method embodiments is implemented.

An embodiment of this application also provides a communication system, which includes UE and a first network element. The UE is configured to perform the method performed by the UE in the foregoing method embodiments. The first network element is configured to perform the method performed by the first network element in the foregoing method embodiments.

It should be noted that, for the sake of brevity in the description of the aforementioned method embodiments, they are all presented as a series of action combinations. However, a person skilled in the art should understand that this application is not limited by the order of the described actions, because according to this application, certain steps may be performed in other orders or simultaneously. Furthermore, a person skilled in the art should also understand that the embodiments described in this specification are all preferred embodiments, and the actions and modules mentioned are not necessarily essential to this application.

The descriptions of the embodiments provided in this application can be mutually referenced, with each embodiment emphasizing different aspects. For parts that are not detailed in a particular embodiment, reference may be made to the relevant descriptions of other embodiments. For the purpose of convenient and concise description, for example, the functions of the apparatuses and devices provided in the embodiments of this application and the steps performed may be referred to the related descriptions in the method embodiments of this application. The method embodiments and the apparatus embodiments may also be mutually referenced, combined, or cited.

It should be finally noted that the foregoing embodiments are merely used to describe the technical solutions of this application, but are not intended to limit the technical solutions. Although this application is described in detail with reference to the foregoing embodiments, a person of ordinary skill in the art should understand that the technical solutions described in the foregoing embodiments may still be modified, or some or all technical features may be equivalently replaced; and these modifications or replacements do not depart from the scope of the technical solutions of embodiments of this application.

## Claims

1. A method for processing service data, applied to a mobile communications device, wherein the mobile communications device comprises a first user equipment and a second user equipment, and the method comprises:
establishing, by the mobile communications device, a first session of a first user equipment, wherein the first session is associated with a first internet protocol address;
transmitting, by the mobile communications device, service data corresponding to the first internet protocol address through the first session of the first user equipment;
sending, by the mobile communications device, a first message, wherein the first message carries information about a first session of the first user equipment, an identifier of a second session of the second user equipment, and a second session establishment request, the second session establishment request is used to request to establish a second session of the second user equipment, and the first message is used to request to hand over service data of the first session of the first user equipment to the second session of the second user equipment for transmission;
transmitting, by the mobile communications device, the service data corresponding to the first internet protocol address through the second session of the second user equipment.

2. The method according to claim 1, wherein the establishing, by the mobile communication device, a first session of first user equipment comprises:
selecting, by the mobile communication device, a first user equipment based on direction policy information, and establishing the first session of the first user equipment;
the direction policy information comprises: the first user equipment is user equipment preferentially selected; or,
the direction policy information comprises: a first network is a network preferentially selected; wherein the first network is a network on which the first user equipment camps; or
the direction policy information comprises: a first radio access technology is a radio access technology preferentially selected; wherein a first access network device corresponds to the first user equipment, and the first radio access technology is a radio access technology supported by the first access network device.

3. The method according to claim 1 or 2, wherein the establishing, by the mobile communication device, a first session of first user equipment comprises:
sending, by the mobile communication device, an identifier of a first session of first user equipment, a data network name, single network slice selection assistance information, a first session establishment request, and first indication information, wherein the first session establishment request is used to request to establish the first session of the first user equipment, and the first indication information indicates that service data of the first session of the first user equipment may be transmitted between different user equipment.

4. The method according to any one of claims 1 to 3, wherein the method further comprises:
receiving, by the mobile communication device, second indication information, wherein the second indication information indicates that service data of the first session is allowed to be transmitted between different user equipment, or indicates that service data of the mobile communication device is allowed to be transmitted between different user equipment;
sending, by the mobile communication device, a first message comprises:
sending, by the mobile communication device, a first message based on the second indication information.

5. The method according to any one of claims 1 to 4, wherein the sending, by the mobile communication device, a first message comprises:
when the signal quality between the mobile communication device and a first access network device deteriorates, or when the signal quality between the mobile communication device and the first access network device is lower than a first threshold, or when a quality of service QoS requirement of a first session of the first user equipment is not met, sending, by the mobile communication device, a first message, wherein the first access network device corresponds to the first user equipment.

6. The method according to any one of claims 1 to 5, wherein the information about the first session of the first user equipment comprises one or more of the following: an identifier of the first session of the first user equipment, a name of a data network corresponding to the first session of the first user equipment, or single network slice selection assistance information corresponding to the first session of the first user equipment.

7. The method according to any one of claims 1 to 6, wherein the first message further comprises a user hidden identifier of the first user equipment or a user permanent identifier of a first user equipment.

8. The method according to any one of claims 1 to 7, wherein
the first message further comprises a first handover indication, wherein the first handover indication is used to indicate that the service data of the first session of the first user equipment is handed over to the second session of the second user equipment for transmission, or the first handover indication is used to indicate that the service data of the first session of the user equipment associated with the second user equipment is handed over to the second session of the second user equipment for transmission.

9. A method for processing service data, wherein the method comprises:
receiving, by a second network element, a first message, wherein the first message carries information about a first session of a first user equipment, an identifier of a second session of a second user equipment, and a second session establishment request, wherein the second session establishment request is used to request to establish a second session of the second user equipment, and the first message is used to request to hand over service data of the first session of the first user equipment to the second session of the second user equipment for transmission;
sending, by the second network element, a second message to a session management network element based on the first message, wherein the second message carries a user permanent identifier of the first user equipment, an identifier of the first session, a user permanent identifier of the second user equipment, an identifier of the second session, and the second session establishment request, wherein the second message is used to request to hand over service data of the first session of the first user equipment to the second session of the second user equipment for transmission, and the session management network element is a network element that manages the first session of the first user equipment.

10. The method according to claim 9, wherein the information about the first session of the first user equipment comprises one or more of the following: an identifier of the first session of the first user equipment, a name of a data network corresponding to the first session of the first user equipment, and single network slice selection assistance information corresponding to the first session of the first user equipment.

11. The method according to claim 9 or 10, wherein the first message further comprises a user hidden identifier of the first user equipment or a user permanent identifier of the first user equipment.

12. The method according to any one of claims 9 to 11, wherein the information of the first session of the first user equipment is an identifier of the first session of the first user equipment; and the sending, by the second network element, a second message to a session management network element based on the first message comprises:
obtaining, by the second network element, the user permanent identifier of the first user equipment and an identifier of the session management network element based on the device identification information and the identifier of the first session, wherein the device identification information is the user permanent identifier of the second user equipment, or the first message further comprises a user hidden identifier of the first user equipment, and the device identification information is the user hidden identifier of the first user equipment;
sending, by the second network element, the second message to the session management network element.

13. The method according to claim 12, wherein the obtaining, by the second network element, the user permanent identifier of the first user equipment and an identifier of the session management network element based on the device identification information and the identifier of the first session comprises:
sending, by the second network element, the device identification information and the identifier of the first session to a unified data management network element;
receiving, by the second network element, the user permanent identifier of the first user equipment and the identifier of the session management network element sent by the unified data management network element.

14. The method according to claim 12, wherein the obtaining, by the second network element, the user permanent identifier of the first user equipment and an identifier of the session management network element based on an device identification information and the identifier of the first session comprises:
sending, by the second network element, the device identification information to an authentication server function network element or a unified data management network element;
receiving, by the second network element, the user permanent identifier of the first user equipment sent by the authentication server function network element or the unified data management network element;
sending, by the second network element, the user permanent identifier of the first user equipment and the identifier of the first session to the unified data management network element;
receiving, by the second network element, the identifier of the session management network element sent by the unified data management network element.

15. The method according to any one of claims 9 to 11, wherein the information about the first session of the first user equipment comprises a data network name corresponding to the first session of the first user equipment and/or single network slice selection assistance information corresponding to the first session of the first user equipment; and the sending, by the second network element, a second message to a session management network element based on the first message comprises:
obtaining, by the second network element, the user permanent identifier of the first user equipment, an identifier of the session management network element, and the identifier of the first session based on the device identification information and the information about the first session of the first user equipment, wherein the device identification information is the user permanent identifier of the second user equipment, or the first message further comprises a user hidden identifier of the first user equipment, and the device identification information is the user hidden identifier of the first user equipment;
sending, by the second network element, the second message to the session management network element.

16. The method according to claim 15, wherein the obtaining, by the second network element, the user permanent identifier of the first user equipment, an identifier of the session management network element, and the identifier of the first session based on the device identification information and the information about the first session of the first user equipment comprises:
sending, by the second network element, the device identification information and the information about the first session of the first user equipment to a unified data management network element;
receiving, by the second network element, the user permanent identifier of the first user equipment, the identifier of the session management network element, and the identifier of the first session, which are sent by the unified data management network element.

17. The method according to claim 15, wherein the obtaining, by the second network element, the user permanent identifier of the first user equipment, the identifier of the session management network element, and the identifier of the first session based on the device identification information and the information about the first session of the first user equipment comprises:
sending, by the second network element, the device identification information to an authentication server function network element or a unified data management network element;
receiving, by the second network element, the user permanent identifier of the first user equipment from the authentication server function network element or the unified data management network element;
sending, by the second network element, the user permanent identifier of the first user equipment and the information of the first session of the first user equipment to the unified data management network element;
receiving, by the second network element, the identifier of the session management network element and the identifier of the first session sent by the unified data management network element.

18. The method according to any one of claims 9 to 17, wherein
the first message and the second message further comprise a first handover indication, wherein the first handover indication is used to indicate that the service data of the first session of the first user equipment is handed over to the second session of the second user equipment for transmission, or the first handover indication is used to indicate that the service data of the first session of the user equipment associated with the second user equipment is handed over to the second session of the second user equipment for transmission.

19. A method for processing service data, wherein the method comprises:
receiving, by a first network element, an identifier of a first session of first user equipment, a data network name, single network slice selection assistance information, a first session establishment request, and first indication information, wherein the first session establishment request is used to request to establish the first session of the first user equipment, and the first indication information indicates that service data of the first session of the first user equipment may be transmitted between different user equipment;
selecting, by the first network element, a session management network element based on the first indication information, wherein the session management network element supports transmission of service data between different user equipment;
sending, by the first network element, a first user permanent identifier of the first user equipment, the identifier of the first session, the name of the data network, the single network slice selection assistance information, and the first session establishment request to the session management network element.

20. The method according to claim 19, wherein the sending, by the first network element, a first user permanent identifier of the first user equipment, the identifier of the first session, the name of the data network, the single network slice selection assistance information, and the first session establishment request to the session management network element comprises:
sending, by the first network element, the user permanent identifier of the first user equipment, the identifier of the first session, the name of the data network, the single network slice selection assistance information, the first session establishment request, and the first indication information to the session management network element;
the method further comprises:
receiving, by the first network element, second indication information sent by the session management network element, wherein the second indication information indicates that service data corresponding to a first session of the first user equipment supports transmission between different user equipment;
sending, by the first network element, the second indication information.

21. A method for processing service data, wherein the method comprises:
receiving, by the session management network element, a second message, wherein the second message carries a user permanent identifier of a first user equipment, an identifier of a first session of the first user equipment, a user permanent identifier of a second user equipment, an identifier of a second session of the second user equipment, and a second session establishment request, wherein the second session establishment request is used to request to establish a second session of the second user equipment, the second message is used to request to hand over service data of the first session of the first user equipment to the second session of the second user equipment for transmission, and the session management network element is a network element that manages the first session of the first user equipment;
in response to the second message, sending, by the session management network element, a first N4 session identifier and the address information of a second access network device to a user plane function network element, wherein the first N4 session identifier is an N4 session identifier associated with an identifier of a first session of the first user equipment, and the first N4 session identifier and the address information of the second access network device are used to indicate that service data carried by an internet protocol address corresponding to the first N4 session identifier is to be sent to the second access network device, wherein the second access network device is configured to carry a second session of the second user equipment, and the first internet protocol address is an internet protocol address associated with an identifier of the first session of the first user equipment.

22. The method according to claim 21, wherein the method further comprises:
storing, by the session management network element, an association relationship between the identifier of the first session of the first user equipment and the first internet protocol address;
in response to the second message, storing, by the session management network element, an association relationship between the identifier of a second session of the second user equipment and the first internet protocol address, and/or releases the association relationship between the identifier of the first session of the first user equipment and the first internet protocol address.

23. The method according to claim 21 or 22, wherein the method further comprises:
storing, by the session management network element, an association relationship between the identifier of the first session of the first user equipment and the identifier of the first N4 session;
in response to the second message, storing, by the session management network element, an association relationship between the identifier of the second session of the second user equipment and the identifier of the first N4 session, and/or releases the association relationship between the identifier of the first session of the first user equipment and the identifier of the first N4 session.

24. The method according to any one of claims 21 to 23, wherein the method further comprises:
sending, by the session management network element, the address information of the user plane function network element to the second access network device, and/or the session management network element triggers release of the first session.

25. The method according to any one of claims 21 to 24, wherein the second message further comprises a first handover indication, wherein the first handover indication is used to indicate that the service data of the first session of the first user equipment is handed over to the second session of the second user equipment for transmission, or the first handover indication is used to indicate that the service data of the first session of the user equipment associated with the second user equipment is handed over to the second session of the second user equipment for transmission.

26. The method according to any one of claims 21 to 25, wherein before receiving, by the session management network element, the second message, the method further comprises:
receiving, by the session management network element, the user permanent identifier of the first user equipment, the identifier of the first session, a data network name, single network slice selection assistance information, a first session establishment request, and first indication information, wherein the first session establishment request is used to request to establish a first session of the first user equipment, and the first indication information indicates that service data of the first session of the first user equipment may be transmitted between different user equipments;
determining, by the session management network element, that the service data corresponding to the first session of the first user equipment supports transmission between different user equipments;
sending, by the session management network element, second indication information, wherein the second indication information indicates that the service data corresponding to the first session of the first user equipment supports transmission between different user equipments.

27. The method according to claim 26, wherein the determining, by the session management network element, that the service data corresponding to the first session of the first user equipment supports transmission between different user equipments comprises:
determining, by the session management network element based on a local configuration of the data network name, that the service data corresponding to the first session of the first user equipment supports transmission between different user equipments; or
determining, by the session management network element, based on the subscription data or policy information corresponding to the first session, that the service data corresponding to the first session of the first user equipment supports transmission between different user equipments.

28. A method for processing service data, applied to a mobile communication device comprising a first user equipment and a second user equipment, wherein the method comprises:
selecting, by the mobile communication device, first user equipment based on direction policy information, and establishing a first session for the first user equipment;
the direction policy information comprises that the first user equipment is user equipment preferentially selected; or
the direction policy information comprises: a first network is a network preferentially selected, wherein the first network is a network on which the first user equipment camps; or
the direction policy information comprises: a first radio access technology is a radio access technology preferentially selected, wherein a first access network device corresponds to the first user equipment, and the first radio access technology is a radio access technology supported by the first access network device;
transmitting, by the mobile communication device, service data through the first session of the first user equipment.

29. The method according to claim 28, wherein the method further comprises:
sending, by the mobile communication device, a first message according to direction policy information, wherein the first message is used to request to hand over service data of a first session of first user equipment to a second session of second user equipment for transmission.

30. A communication apparatus, comprising units configured to perform the method according to any one of claims 1 to 29.

31. A communication apparatus, comprising a processor and a memory, wherein the processor is coupled to the memory, and the processor is configured to implement the method according to any one of claims 1 to 29.

32. A chip, comprising a processor and an interface, wherein the processor is coupled to the interface; the interface is configured to receive or output a signal; and the processor is configured to execute code instructions, so that the method according to any one of claims 1 to 29 is performed.

33. A computer-readable storage medium, wherein the computer-readable storage medium stores computer-executable instructions, and when the computer-executable instructions are invoked by a computer, the computer is enabled to perform the method according to any one of claims 1 to 29.
